# EUROPEAN PATENT SPECIFICATION

(11) **EP 2 996 364 B1**
(45) Date of publication and mention of the grant of the patent: **25.04.2018**
(21) Application number: 14794582.8
(22) Date of filing: 07.05.2014
(51) Int. Cl.: H04W 8/02, H04W 4/02, H04W 8/00, H04W 8/12

(54) **METHOD AND APPARATUS FOR PROXIMITY SERVICE DISCOVERY TO PROVIDE PROXIMITY SERVICE**
VERFAHREN UND VORRICHTUNG ZUR ENTDECKUNG VON PROXIMITY-DIENSTEN ZUR BEREITSTELLUNG EINES PROXIMITY-DIENSTEN
MÉTHODE ET APPAREIL DE DÉCOUVERTE DE SERVICE DE PROXIMITÉ POUR FOURNIR UN SERVICE DE PROXIMITÉ

(30) Priority: 05.05.2013 US 201361819626 P; 08.05.2013 US 201361820696 P; 13.05.2013 US 201361822448 P; 15.05.2013 US 201361823414 P; 19.05.2013 US 201361825078 P; 22.05.2013 US 201361826463 P; 02.07.2013 US 201361841944 P; 26.09.2013 US 201361883164 P; 29.09.2013 US 201361884121 P; 11.10.2013 US 201361889538 P; 04.11.2013 US 201361899318 P
(43) Date of publication of application: 16.03.2016
(73) Proprietor: LG Electronics Inc., Seoul 07336 (KR)
(72) Inventor: KIM, Laeyoung, Seoul 137-893 (KR); KIM, Jaehyun, Seoul 137-893 (KR); KIM, Taehyeon, Seoul 137-893 (KR); KIM, Hyunsook, Seoul 137-893 (KR)
(74) Representative: Cabinet Plasseraud
(86) International application number: PCT/KR2014/004007
(87) International publication number: WO 2014/182040

(56) References cited:
- WO-A2-2011/133004
- WO-A2-2012/091418
- WO-A2-2012/177002
- US-A1- 2010 009 675
- US-A1- 2012 230 308
- US-A1- 2013 109 301
- INTEL ET AL: "Solution for EPC-level ProSe Discovery", 3GPP DRAFT; S2-131393_WAS1141_EPC_PROSE_DISCOVERY_SOLU TION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Diego, CA; 20130408 - 20130412 13 April 2013 (2013-04-13), XP050708614, Retrieved from the Internet: URL:http://www.3gpp.org/ftp/tsg_sa/WG2_Arc h/TSGS2_96_San_Diego/Docs/ [retrieved on 2013-04-13]
- RENESAS MOBILE EUROPE LTD: "Solution for ProSe UE Discovery", 3GPP DRAFT; S2-131194_SOLUTION - PROSE UE DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Diego, California, USA; 20130408 - 20130412 2 April 2013 (2013-04-02), XP050708401, Retrieved from the Internet: URL:http://www.3gpp.org/ftp/tsg_sa/WG2_Arc h/TSGS2_96_San_Diego/Docs/ [retrieved on 2013-04-02]
- INTEL: "Protocol options for EPC-level Discovery", 3GPP DRAFT; C1-141221_DP_PC3_PROTOCOL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Dubrovnik, Croatia; 20140331 - 20140404 31 March 2014 (2014-03-31), XP050775757, Retrieved from the Internet: URL:http://www.3gpp.org/ftp/Meetings_3GPP_ SYNC/CT/CT1/Docs/ [retrieved on 2014-03-31]

## Description

### [Technical Field]

The present invention relates to a wireless communication system and, more specifically, to a proximity service discovery method and apparatus for providing a proximity service.

### [Background Art]

A Proximity Service (ProSe) refers to a scheme that supports communication between devices located physically close to each other. Specifically, ProSe is aimed to discover an application operating in devices that are in proximity to each other and ultimately to support an operation of exchanging application-related data. For example, it may be considered that ProSe is applied to applications such as Social Network Services (SNS), commerce, and games.

ProSe may also be called Device-to-Device (D2D) communication. That is, ProSe refers to a communication scheme for establishing a direct link between a plurality of devices (e.g., User Equipments (UEs)) and thus directly exchanging user data (e.g., voice or multimedia data) between the devices without passing through a network. ProSe communication may include UE-to-UE communication, peer-to-peer communication, etc. In addition, the ProSe communication scheme may be applied to Machine-to-Machine (M2M) communication, Machine Type Communication (MTC), etc. Therefore, ProSe is being considered as one solution to burden of an eNodeB due to data traffic that rapidly increases. By introducing ProSe, effects such as reduction in procedures of the eNodeB, decreases in power consumption of devices that participate in ProSe, increase in data transmission rate, increase in network accommodation capacity, load distribution, cell coverage expansion, etc. can be expected. Examples and possible embodiments of the prior art may be found INTEL ET AL, "Solution for EPC-level ProSe Discovery" and US2012230308.

### [Disclosure]

### [Technical Problem]

An object of the present invention is to provide an EPC-level ProSe discovery method for obtaining location information from terminals in connection with a ProSe based communication mechanism.

The technical problems solved by the present invention are not limited to the above technical problems and those skilled in the art may understand other technical problems from the following description.

### [Technical Solution]

The present invention is directed towards Proximity Services (ProSe) and provides a method for a first terminal according to claim 1, a method for a ProSe function according to claim 8, a first terminal according to claim 9 and a ProSe function according to claim 10.

The proximity may be determined on the basis of location information received through a home subscriber server (HSS). The location information may be location information prestored in the HSS or location information transmitted by a mobility management entity (MME). The location information may be location information of at least one of the first terminal and the second terminal.

The first terminal and the second terminal may be determined not to be in proximity when the first terminal and the second terminal are spaced apart from each other by a predetermined distance or more. The predetermined distance may be the actual distance between the first terminal and the second terminal or information for inferring the distance between the first terminal and the second terminal. The predetermined distance may be previously configured or acquired from a second network entity.

Rejection of the ProSe may indicate that one of proximity check, a proximity request procedure, a location reporting procedure and ProSe discovery is not performed.

The ProSe discovery response may further include at least one of information about whether the first terminal and the second terminal are in proximity, information about whether the first terminal and the second terminal will be in proximity and information on the distance between the first terminal and the second terminal.

The predetermined time window may be included in the ProSe discovery request and transmitted.

The ProSe discovery response may be determined by the first network entity, and the first network entity may be a ProSe server or a ProSe function.

The proximity may be determined when whether the first terminal and the second terminal are initially in proximity is determined.

### [Advantageous Effects]

According to the present invention, it is possible to perform efficient communication by obtaining correct location information from terminals and performing EPC-level ProSe discovery.

The effects of the present invention are not limited to the above-described effects and other effects which are not described herein will become apparent to those skilled in the art from the following description.

### [Description of Drawings]

The accompanying drawings, which are included to provide a further understanding of the invention, illustrate embodiments of the invention and together with the description serve to explain the principle of the invention. In the drawings:
FIG. 1 is a view schematically illustrating the architecture of an Evolved Packet System (EPS) including an Evolved Packet Core (EPC);
FIG. 2 is a view illustrating a default data path for communication between two UEs in an EPS;
FIG. 3 is a view illustrating a direct mode data path between two UEs based on ProSe;
FIG. 4 is a view illustrating a locally-routed data path between two UEs based on ProSe;
FIG. 5 is a reference view illustrating a ProSe discovery operation according to a first embodiment based on a first scheme of the present invention;
FIG. 6 is a reference view illustrating a ProSe discovery operation according to a second embodiment based on a second scheme of the present invention;
FIG. 7 is a reference view illustrating a ProSe discovery operation according to a third embodiment based on the first scheme of the present invention;
FIG. 8 is a reference view illustrating a ProSe discovery operation according to a fourth embodiment based on the second scheme of the present invention;
FIG. 9 is a reference view illustrating a ProSe discovery operation in a shared network based on the first scheme of the present invention;
FIG. 10 is a reference view illustrating a ProSe discovery operation to which a time window is applied according to an embodiment of the present invention;
FIGS. 11 to 22 are reference views illustrating EPC-level ProSe discovery according to the present invention;
FIG. 23 is a reference view illustrating a ProSe function related proximity request according to the present invention;
FIG. 24 is a reference view illustrating ProSe function related proximity alert according to the present invention;
FIG. 25 is a reference view illustrating ProSe function related proximity request cancellation according to the present invention; and
FIG. 26 is a view illustrating the configurations of a UE and a network node device according to a preferred embodiment of the present invention.

### [Best Mode]

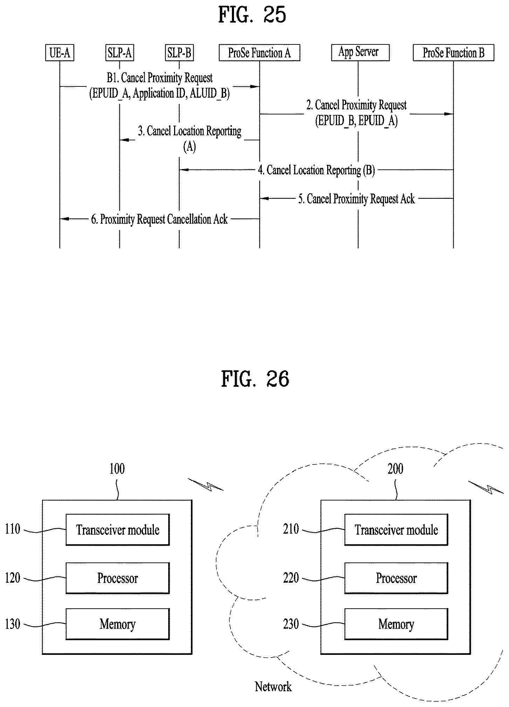

FIG. 26 is a view illustrating the configurations of a UE and a network node device according to a preferred embodiment of the present invention.

### [Best Mode]

Embodiments described hereinbelow are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment.

Specific terms used for the embodiments of the present invention are provided to aid in understanding the present invention. These specific terms may be replaced with other terms within the scope of the present invention.

In some instances, known structures and devices are omitted, or are shown in block diagram form focusing on important features of the structures and devices, so as not to obscure the concept of the present invention. The same reference numbers will be used throughout this specification to refer to the same or like parts.

The embodiments of the present invention can be supported by standard documents disclosed for at least one of wireless access systems, including Institute of Electrical and Electronics Engineers (IEEE) 802, 3GPP, 3GPP LTE, LTE-A and 3GPP2. Steps or parts that are not described to clarify the technical features of the present invention can be supported by those documents. Further, all terms as set forth herein can be explained by the standard documents.

The following features can be used for various wireless communication systems. For clarity, this application focuses on 3GPP LTE and 3GPP LTE-A. However, the technical features of the present invention are not limited thereto.

Terms used in the specification are defined as follows.
- UMTS (Universal Mobile Telecommunications System): GSM (Global System for Mobile Communication) based third-generation mobile communication technology developed by 3GPP.
- eNodeB: an LTE base station which is installed outdoors and has a macro cell scale coverage.
- UE (User Equipment): a user device. The UE may be called a terminal, an ME (Mobile Equipment), an MS (Mobile Station) and the like. In addition, the UE may be a portable device such as a notebook computer, a cellular phone, a PDA (Personal Digital Assistant), a smartphone and a multimedia device or a fixed device such as a PC (Personal Computer) and a vehicle-mounted device. The UE can perform communication through a 3GPP spectrum such as LTE and/or a non-3GPP spectrum such as Wi-Fi and a spectrum for public safety.
- Proximity services or proximity-based services (ProSe): services enabling discovery between devices in physical proximity to each other and communication through direct communication/communication through a base station/communication through a third device. Here, user plane data is exchanged through a direct data path or a direct mode data path without passing through a 3GPP core network (e.g., EPC). ProSe is referred to as D2D (Device-to-Device) services.
- Proximity: Whether a UE is in proximity to another UE is determined according to whether predetermined proximity standards are satisfied. Different proximity standards may be provided for ProSe discovery and ProSe communication. Furthermore, the proximity standards may be set as a control target of an operator.
- ProSe discovery: a process of identifying a UE approaching another UE using E-UTRA.
- ProSe communication: communication between UEs proximate to each other through a communication path established between the UEs. The communication path may be directly established between the UEs or routed through local eNodeBs.
- ProSe-enabled UE: a UE supporting ProSe discovery and/or ProSe communication. The ProSe-enabled UE is referred to as a UE in the following description.
- ProSe-enabled network: a network supporting ProSe discovery and/or ProSe communication. The ProSe-enabled network is referred to as a network in the following description.
- ProSe E-UTRA communication: ProSe communication using a ProSe E-UTRA communication path.
- ProSe-assisted WLAN direct communication: ProSe communication using a ProSe-assisted WLAN direct communication path. The ProSe-assisted WLAN direct communication may be referred to as EPC-assisted WLAN direct communication.
- ProSe group communication: a method of establishing a common communication path between ProSe-enabled UEs and which refers to one-to-many ProSe communication between two or more ProSe-enabled UEs adjacent to each other.
- ProSe broadcast communication: a method of establishing a common communication path between ProSe-enabled UEs and which refers to one-to-all ProSe communication between two or more ProSe-enabled UEs adjacent to each other.
- ProSe UE-to-network relay: a ProSe-enabled public safety UE in the form of a relay operating as a communication relay between a ProSe-enabled public safety UE and a ProSe-enabled network using E-UTRA.
- ProSe UE-to-UE relay: a ProSe-enabled public safety UE in the form of a relay operating as a ProSe communication relay between ProSe-enabled public safety UEs.
- ISR (Idle Mode Signaling Reduction): When a UE frequently moves between an E-UTRAN and a UTRAN/GERAN, network resources are wasted due to repeated location registration procedures. To reduce network resource waste, ISR enables the UE to register the location thereof with an MME and an SGSN (which are referred to as mobility management nodes hereinafter) via E-UTRAN and UTRAN/GERAN when the UE is in an idle mode and then not to register the location when the UE moves between previously registered two RATs (Radio Access Technologies) or performs cell reselection. Accordingly, when downlink data arrives at the UE, paging is simultaneously sent to E-UTRAN and UTRAN/GERAN so as to successfully discover the UE and transmit the downlink data thereto. Refer to 3GPP TS 23.401 and 3GPP TS 23.060 for details.
- RAN (Radio Access Network): a unit including a NodeB, an eNodeB and an RNC (Radio Network Controller) for controlling the NodeB and eNodeB in a 3GPP network. The RAN is present between a UE and a core network and provides connection to the core network.
- HLR (Home Location Register)/HSS (Home Subscriber Server): a database having subscriber information in a 3GPP network. The HSS can execute configuration storage, identity management, user status storage functions and the like.
- RANAP (RAN Application Part): an interface between nodes (MME (Mobility Management Entity)/SGSN (Serving GPRS(General Packet Radio Service) supporting Node)/MSC (Mobile Switching Center)) which control the RAN and the core network.
- PLMN (Public Land Mobile Network): a network configured for the purpose of providing mobile communication services to individuals. The PLMN can be configured per operator.
- NAS (Non-Access Stratum): a functional layer for exchanging signaling and traffic messages between a UE and a core network in the UMTS protocol stack. The NAS has main functions of supporting UE mobility and supporting a session management procedure for establishing and maintaining IP connection between a UE and a PDN GW (Packet Data Network Gateway).
- HNB (Home NodeB): CPE (Customer Premises Equipment) which provides UTRAN (UMTS Terrestrial Radio Access Network) coverage. Refer to standard document TS 25.467 for details.
- HeNodeB (Home eNodeB): CPE (Customer Premises Equipment) which provides E-UTRAN (Evolved-UTRAN) coverage. Refer to standard document TS 36.300 for details.
- CSG (Closed Subscriber Group): a subscriber group permitted to access one or more CSG cells in a PLMN (Public Land Mobile Network) as a member of a CSG of an H(e)NB.
- LIPA (Local IP Access): access by an IP capable UE to a different IP capable entity present in the same residential/enterprise IP network via an H(e)NB. LIPA traffic does not pass through an operator network. 3GPP release-10 provides access to resources on a local network (i.e., network located in the house or company of a customer) via an H(e)NB.
- SIPTO (Selected IP Traffic Offload): 3GPP release-10 supports transmission of user traffic by an operator by selecting a PGW (Packet data network GateWay) in proximity to a UE in an EPC network.
- PDN (Packet Data Network) connection: logical connection between a UE represented by one IP address (one IPv4 address and/or one IPv6 prefix) and a PDN represented by an APN (Access Point Name).

### EPC (Evolved Packet Core)

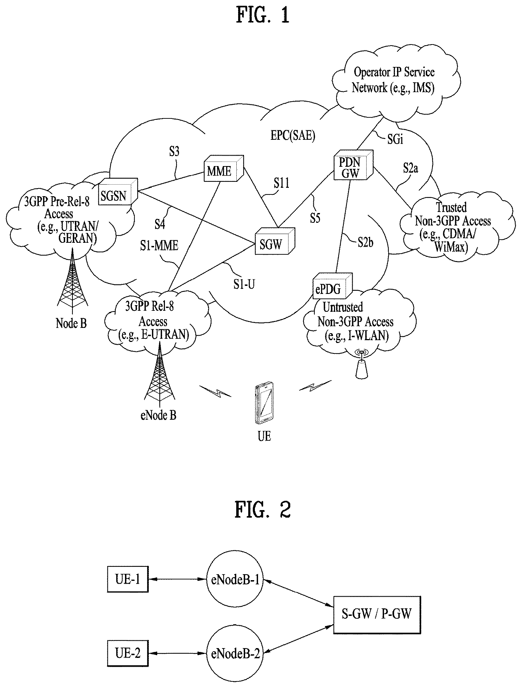

FIG. 1 is a view schematically illustrating the architecture of an Evolved Packet System (EPS) including an Evolved Packet Core (EPC).

The EPC is a core element of System Architecture Evolution (SAE) for improving the performance of 3GPP technology. SAE corresponds to a study item for deciding a network structure supporting mobility among various types of network. SAE aims to provide, for example, an optimized packet-based system which supports various radio access technologies based on IP and provides improved data transfer capabilities.

Specifically, the EPC is a core network of an IP mobile communication system for a 3GPP LTE system and may support packet-based real-time and non-real-time services. In a legacy mobile communication system (e.g., 2nd or 3rd generation mobile communication system), a core network function is implemented through two separated sub-domains, e.g., circuit-switched (CS) sub-domain for sound and packet-switched (PS) sub-domain for data. However, in a 3GPP LTE system which is evolved from the 3rd generation communication system, the CS and PS sub-domains are unified into a single IP domain. For example, in the 3GPP LTE system, IP-capable UEs can be connected via an IP-based base station (e.g., eNodeB (evolved Node B)), an EPC, an application domain (e.g., IMS (IP Multimedia Subsystem)). That is, the EPC is a structure inevitably required to implement end-to-end IP service.

The EPC may include various components and FIG. 1 illustrates a few of the components, e.g., Serving GateWay (SGW), Packet Data Network GateWay (PDN GW), Mobility Management Entity (MME), Serving GPRS (General Packet Radio Service) Supporting Node (SGSN), and enhanced Packet Data Gateway (ePDG).

The SGW operates as a boundary point between a Radio Access Network (RAN) and a core network and is an element which performs a function for maintaining a data path between an eNodeB and a PDG GW. In addition, if a UE moves across an area served by an eNodeB, the SGW serves as a local mobility anchor point. That is, packets may be routed via the SGW for mobility in an Evolved-UMTS (Universal Mobile Telecommunications System) Terrestrial Radio Access Network (E-UTRAN) defined after 3GPP Release-8. Further, the SGW may serve as an anchor point for mobility management with another 3GPP network such as RAN defined before 3GPP Release-8, e.g., UTRAN or GSM (Global System for Mobile communication)/EDGE (Enhanced Data rates for GSM Evolution) Radio Access Network (GERAN).

The PDN GW (or P-GW) corresponds to a termination point of a data interface directed to a packet data network. The PDN GW may support policy enforcement features, packet filtering and charging support. In addition, the PDN GW may serve as an anchor point for mobility management with a 3GPP network and a non-3GPP network (e.g., untrusted network such as Interworking Wireless Local Area Network (I-WLAN) and trusted network such as Code Division Multiple Access (CDMA) or WiMax).

Although the SGW and the PDN GW are configured as separate gateways in the network architecture of FIG. 1, the two gateways may be implemented according to a single gateway configuration option.

The MME performs signaling and control functions to support access of a UE for network connection, network resource allocation, tracking, paging, roaming and handover. The MME controls control plane functions related to subscriber and session management. The MME manages a large number of eNodeBs and performs signaling for selection of a typical gateway for handover to another 2G/3G network. In addition, the MME performs security procedures, terminal-to-network session handling, idle terminal location management, etc.

The SGSN handles all packet data such as mobility management and authentication of a user for another 3GPP network (e.g., GPRS network).

The ePDG serves as a security node for an untrusted non-3GPP network (e.g., I-WLAN, Wi-Fi hotspot, etc.).

As described above in relation to FIG. 1, an IP-capable UE may access an IP service network (e.g., IMS) provided by an operator, via various elements in the EPC based on non-3GPP access as well as 3GPP access.

FIG. 1 also illustrates various reference points (e.g., S1-U, S1-MME, etc.). In the 3GPP system, a conceptual link connecting two functions of different functional entities of E-UTRAN and EPC is defined as a reference point. Table 1 lists the reference points illustrated in FIG. 1. In addition to the examples of Table 1, various reference points may be present according to network architectures.

**[Table 1]**

| Reference Point | Description |
|---|---|
| S1-MME | Reference point for the control plane protocol between E-UTRAN and MME |
| S1-U | Reference point between E-UTRAN and Serving GW for the per bearer user plane tunneling and inter eNodeB path switching during handover |
| S3 | It enables user and bearer information exchange for inter 3GPP access network mobility in idle and/or active state. This reference point can be used intra-PLMN or inter-PLMN (e.g. in the case of Inter-PLMN HO). |
| S4 | It provides related control and mobility support between GPRS Core and the 3GPP Anchor function of Serving GW. In addition, if Direct Tunnel is not established, it provides the user plane tunneling. |
| S5 | It provides user plane tunneling and tunnel management between Serving GW and PDN GW. It is used for Serving GW relocation due to UE mobility and if the Serving GW needs to connect to a non-collocated PDN GW for the required PDN connectivity. |
| S11 | Reference point between MME and SGW |
| SGi | It is the reference point between the PDN GW and the packet data network. Packet data network may be an operator external public or private packet data network or an intra operator packet data network, e.g. for provision of IMS services. This reference point corresponds to Gi for 3GPP accesses. |

Among the reference points illustrated in FIG. 1, S2a and S2b correspond to non-3GPP interfaces. S2a is a reference point for providing a user plane with related control and mobility support between the trusted non-3GPP access and the PDNGW. S2b is a reference point for providing a user plane with related control and mobility support between the ePDG and the PDNGW.

### Control Mechanism for Providing Proximity Service (ProSe)

The present invention proposes a control mechanism for supporting ProSe or a D2D service in a mobile communication system such as a 3GPP EPS.

Due to increase in user demands related to SNS, etc., demand for detection/discovery and special applications/services (e.g., proximity-based applications/services), between physically adjacent users/devices, has arisen. To provide such services even in a 3GPP mobile communication system, potential use cases and scenarios of the ProSe and potential service requirements are under discussion.

The potential use cases of the ProSe may include a commercial/social service, network offloading, public safety, and integration of current infrastructure services (to assure the consistency of user experience including reachability and mobility aspects). In addition, use cases and potential requirements for public safety in the case of absence of E-UTRAN coverage (in this case, limiting the use cases to specific frequency bands and specific terminals that are designated for public safety under the condition that specific regional regulation and operator policy are satisfied, should be considered) are under discussion.

In particular, the scope of discussion of the ProSe that is underway in 3GPP assumes that the proximity-based applications/services are provided via LTE or a WLAN and that discovery and communication are performed between devices under the control of an operator/network.

FIG. 2 is a view illustrating a default data path for communication between two UEs in an EPS. That is, FIG. 2 illustrates an exemplary data path between UE-1 and UE-2 in a general case in which ProSe between UE-1 and UE-2 is not applied. This default path passes through a base station (e.g., an eNodeB or HeNodeB) and gateway nodes (e.g., an EPC or operator network). For example, as illustrated in FIG. 2, when UE-1 and UE-2 exchange data, data from UE-1 may be transmitted to UE-2 via eNodeB-1, an S-GW/P-GW, and eNodeB-2 and, likewise, data from UE-2 may be transmitted to UE-1 via eNodeB-2, an S-GW/P-GW, and eNodeB-1. Although UE-1 and UE-2 are camping on different eNodeBs in FIG. 2, UE-1 and UE-2 may camp on the same eNodeB. In addition, although the two UEs are served by the same S-GW and P-GW in FIG. 2, various combinations of services are allowed. For example, the UEs may be served by the same S-GW and different P-GWs, by different S-GWs and the same P-GW, or by different S-GWs and different P-GWs.

In the present invention, this default data path may be referred to as an infrastructure path, infrastructure data path, or infrastructure communication path. In addition, communication through the infrastructure data path may be referred to as infrastructure communication.

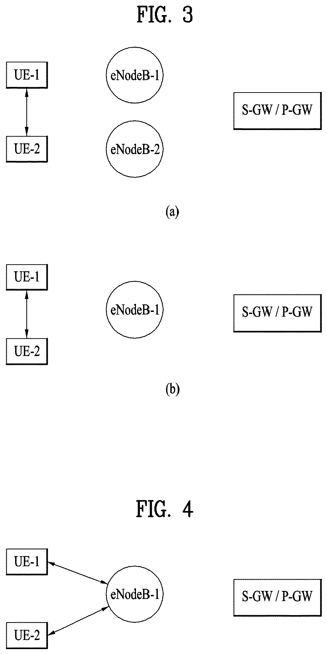

FIG. 3 is a view illustrating a direct mode data path between two UEs based on ProSe. This direct mode communication path does not pass via a base station (e.g., an eNodeB or HeNodeB) and gateway nodes (e.g., an EPC).

FIG. 3(a) illustrates an exemplary case in which UE-1 and UE-2 are camping on different eNodeBs (e.g., eNodeB-1 and eNodeB-2) and exchange data via a direct mode communication path. FIG. 3(b) illustrates an exemplary case in which UE-1 and UE-2 are camping on the same eNodeB (e.g., eNodeB-1) and exchange data via a direct mode communication path.

Meanwhile, it should be noted that a data path of a user plane is directly established between UEs without passing through an eNodeB or a gateway node as illustrated in FIG. 3 but a control plane path may be established via an eNodeB and a core network. Control information exchanged through the control plane path may be information about session management, authentication, authorization, security, billing, etc. In the case of ProSe communication between UEs served by different eNodeBs as illustrated in FIG. 3(a), control information for UE-1 may be exchanged via eNodeB-1 with a control node (e.g., an MME) of a core network and control information for UE-2 may be exchanged via eNodeB-2 with a control node (e.g., an MME) of a core network. In the case of ProSe communication between UEs served by the same eNodeB as illustrated in FIG. 3(b), control information for UE-1 and UE-2 may be exchanged via eNodeB-1 with a control node (e.g., an MME) of a core network.

FIG. 4 is a view illustrating a locally routed data path between two UEs based on ProSe. As illustrated in FIG. 4, a ProSe communication data path between UE-1 and UE-2 is established via eNodeB-1 but does not pass through a gateway node (e.g., an EPC) operated by an operator. For a control plane path, if a locally routed data path is established between UEs served by the same eNodeB as illustrated in FIG. 4, control information for UE-1 and UE-2 may be exchanged via eNodeB-1 with a control node (e.g., an MME) of a core network.

In the present invention, the communication path described above in relation to FIGS. 3 and 4 may be referred to as a direct data path, a data path for ProSe, a ProSe-based data path, or a ProSe communication path. In addition, communication through this direct data path may be referred to as direct communication, ProSe communication, or ProSe-based communication.

For ProSe, a procedure for discovering a UE in proximity to the corresponding UE using E-UTRA may be required. This procedure is referred to as ProSe discovery. Referring to service requirements for proximity services, defined in LTE related standard document 3GPP TS 22.278, ProSe discovery may be performed through a direct radio signal between UEs or through an operator network.

In relation to ProSe discovery through the operator network, 3GPP TR 23.703 defines EPC-level ProSe discovery, as described above. However, 3GPP TR 23.703 merely describes that EPC-level ProSe discovery is a process of determining proximity of a plurality of ProSe-enabled UEs and informing the plurality of ProSe-enabled UEs of proximity services but does not define a detailed scheme therefor.

That is, in the case of EPC-level ProSe discovery, a network needs to acquire the latest location information of a UE to be discovered. However, when ISR (Idle mode Signaling Reduction) is applied to an E-UTRAN UE capable of camping on a GERAN/UTRAN (that is, in an ISR activated state), the network cannot be aware of the correct location of the UE (that is, whether the UE is present in an E-UTRAN or in a UTRAN/GERAN).

However, since the scope of operation for providing proximity-based services corresponds to LTE (i.e., E-UTRAN), WLAN and public safety spectrum, generation of a mechanism for providing ProSe must not have an impact on UTRAN/GERAN and UMTS/GSM. Accordingly, it is necessary to acquire the latest correct location information of a UE without affecting UTRAN/GERAN and UMTS/GSM.

There is no conventional method for acquiring the latest correct location information of a UE, and thus the present invention proposes an EPC-level ProSe discovery method for acquiring location information of a UE to which ISR is applied (or to which ISR is applicable or for which ISR is activated) in order to solve the aforementioned problem.

In EPC-level ProSe discovery, the network determines proximity of two UEs. In the case of a shared Radio Access Network (RAN), the network may determine that two UEs are not proximate to each other even though the two UEs are in proximity to each other since cells on which the UEs camp have different ECGIs (E-UTRAN Cell Global Identifiers). For example, it is assumed that PLMN1 and PLMN2 share an eNodeB and UEs UE1 and UE2 are located in cell#1, one of the cells of the eNodeB, and are in proximity to each other. In this case, if UE1 camps on cell#1 of PLMN1 and UE2 camps on cell#1 of PLMN2, the cells on which two UEs camp are physically identical but have different ECGIs since the cells belong to different PLMNs. Accordingly, when the network determines whether the two UEs are in proximity to each other on the basis of only ECGI information, it is impossible or difficult to determine that UE1 and UE2 are in proximity to each other. To solve such problem, the present invention proposes an EPC-level ProSe discovery method for determining proximity of UEs in the case of network sharing.

Furthermore, in EPC-level ProSe discovery, when UE-A (e.g., discoverer) is in proximity to UE-B (e.g., discoveree) for a predetermined time (valid period (time window)), UE-A can request the network to inform UE-A of proximity of the two UEs. The requested network needs to continuously check the positions of UE-A and UE-B in order to check whether the two UEs are in proximity to each other for the valid period. However, if there is no possibility that UE-A and UE-B are in proximity to each other within the valid period since UE-A and UE-B are located at a long distance from each other, continuously checking the positions of the two UEs by the network may be meaningless. That is, signaling waste due to unnecessary location reporting may occur. Additionally, such unnecessary location reporting may enable the UEs to switch from an idle mode to a connected mode in order to perform location reporting, consuming battery power of the UEs. Therefore, the present invention provides EPC-level ProSe discovery methods for solving the aforementioned problems.

### 1. ProSe discovery method in a mobile communication system such as 3GPP EPS (Evolved Packet System)

A description will be given of ProSe discovery methods for efficiently providing proximity-based services in a mobile communication system such as 3GPP EPS (Evolved Packet System), which are proposed by the present invention.

### 1-1. ProSe discovery method - first scheme

In operation 1 of the first scheme, an HSS determines whether location information about a UE is required in relation to ProSe discovery/ProSe communication/ProSe. This operation can be performed in various manners. That is, the HSS may determine whether location information about a UE is required by receiving a message that requests the information from another network node (e.g., a server for proximity service/proximity discovery, the existing network node or the like) or the HSS may determine that it is necessary to acquire the information.

Here, the other network node that requests the HSS to provide the location information about the UE may explicitly or implicitly include, in the message, information indicating that the location information request relates to ProSe discovery/ProSe communication/ProSe. In addition, the other network node may include, in the message, information for instructing the HSS to immediately provide the location information or to provide the location information without delaying the same.

In operation 2 of the first scheme, the HSS can confirm a serving node registered for the UE. Here, the HSS can perform operations 2-1 to 2-3 described below according to the serving node confirmation result.

According to operation 2-1, when both an MME and an SGSN have been registered as serving nodes, the HSS transmits a message requesting the location information about the UE only to the MME. When the request message is transmitted, the HSS can include at least one piece of the following information in the message.
i) Information indicating that the request message is for requesting the location information
ii) Type of requested location information: for example, ECGI (E-UTRAN Cell Global Identifier), coordinate information, geographic location, information related to movement of the UE (e.g., velocity) and the like
iii) Information indicating that the location information request is for a) ProSe discovery, ProSe communication and/or ProSe related location information request and/or b) initiation of ProSe discovery, ProSe communication and/or proximity services
iv) Information indicating that the request message is for requesting latest location information (or current location information) of the UE
v) Information for instructing the MME to perform paging so as to acquire the location information or information for instructing the MME to perform paging when the UE is in an idle state (or idle mode)
vi) Information for instructing the MME to acquire the location information of the UE from a serving eNodeB of the UE (i.e., eNodeB to which the UE is connected) when the UE is in a connected state (or connected mode)

In addition to the aforementioned information, the request message may include information necessary for ProSe discovery (e.g., state information of the UE and the like) and various types of information for requesting information requested by other network nodes. Furthermore, the aforementioned information may be explicitly or implicitly combined or implied and included in the request message. For example, the MME that has received the request message can have the effect of receiving the information v and/or vi only with the information iii and the effect of receiving the information v and vi only with the information iv.

As the request message, a conventional message (e.g., an insert subscriber data request message) may be used or a message newly defined according to the present invention may be used. When the conventional message is used as the request message, the conventional message may be used in an extended form (e.g., in such a manner that a new information element (IE) is defined and/or a new value is defined while using conventional information elements). Furthermore, the aforementioned information may be included in the message or the message may have the information. In addition, the idea of selection/extension/definition of the message can be applied to the present invention.

The HSS can additionally consider the following information in addition to the types (i.e., both the MME and SGSN or only the MME) of serving nodes registered for the UE as standards by which the message includes the aforementioned information or not. However, the information described below is merely an example and the present invention is not limited thereto.
- Information indicating whether the location information about the UE is necessary for ProSe discovery only or for ProSe communication (i.e., whether ProSe communication is performed after ProSe discovery or ProSe communication is performed without ProSe discovery)
- Local policy
- Subscriber information about the UE
- Whether the UE roams

In addition, the HSS may include, in the message, at least one piece of the information i to vi irrespective of the types of serving odes registered for the UE and the aforementioned additional information. Alternatively, the HSS may include, in the message, at least one piece of the information i to vi irrespective of the types of serving nodes registered for the UE and the aforementioned additional information when the location information about the UE needs to be acquired for ProSe discovery/ProSe communication/ProSe.

According to operation 2-2, when only the MME is registered as the serving node, the HSS can transmit a message requesting the location information about the UE to the MME. The request message according to operation 2-2 corresponds to the aforementioned request message and thus detailed description thereof is replaced by the aforementioned description.

According to operation 2-3, when only the SGSN is registered as the serving node, the HSS does not transmit a message requesting the location information of the UE to the SGSN.

In operation 3 of the first scheme, upon reception of the message requesting the location information about the UE from the HSS, the MME can perform one of the following operations 3-1 to 3-4 on the basis of the request message, the information included in the request message, configuration and/or a local policy.

According to operation 3-1, the MME checks whether the UE is in an idle state or in a connected state and pages the UE when the UE is in the idle state so as to acquire the location information about the UE. When the UE is in the connected state, the MME obtains the location information about the UE from an eNodeB to which the UE is connected.

According to operation 3-2, the MME checks whether the UE is in an idle state or in a connected state. When the UE is in the idle state, the MME pages the UE so as to obtain the location information about the UE. When the UE is in the connected state, the MME determines that the location information about the UE, most recently obtained from the eNodeB, is used.

According to operation 3-3, the MME checks whether the UE is in an idle state or in a connected state and, when the UE is in the idle state, determines that the location information about the UE, most recently obtained from the eNodeB, is used. If the UE is in the connected state, the MME acquires the location information about the UE from the eNodeB to which the UE is connected.

According to operation 3-4, the MME determines that the location information about the UE, most recently obtained from the eNodeB, is used.

Furthermore, when the UE is in the connected state in relation to operation 3), the MME may use the conventional S1-AP message (location reporting control message or the like) or a newly defined message in order to acquire the location information about the UE from the eNodeB to which the UE is connected. When the conventional message is used, the MME may use the conventional message in an extended form (e.g., in such a manner that a new information element is defined and/or a new value is defined while using a conventional information element).

In operation 4 of the first scheme, the MME transmits a response message including the location information about the UE to the HSS. Here, a conventional message (e.g., insert subscriber data answer message or the like) or a newly defined message may be used as the response message. When the conventional message is used, the MME may use the conventional message in an extended form (e.g., in such a manner that a new information element is defined and/or a new value is defined while using a conventional information element). Furthermore, the response message may include various types of information requested by the HSS and/or information that can be provided by the MME in addition to the location information.

In operation 5 of the first scheme, upon reception of the response message including the location information, transmitted from the MME, the HSS can perform the following operation.
When the location information about the UE needs to be provided to another network node,
- if the HSS acquires the location information from the MME since the MME has been registered for the UE, the HSS provides, to the other network node, the location information and various types of information provided by the MME without changing the information or in a processed form.
- When the HSS confirms that only the SGSN has been registered for the UE in operation 2 of the first scheme (i.e., in the case of operation 2-3), the HSS transmits a message indicating that the location information cannot be obtained to the other network node. Here, the message may explicitly or implicitly indicate various types of information (e.g., information indicating that the UE is not reachable, information indicating that the UE is not found, information indicating that the UE is not served by E-UTRAN and/or information indicating that the UE is detached and the like).

### 1-2. ProSe discovery method - second scheme

In operation 1 of the second scheme, the HSS determines whether the location information about the UE is required in relation to ProSe discovery/ProSe communication/ProSe. This operation can be performed in various manners in such a manner that the MME determines whether the location information about the UE is required by receiving a message that requests the information from another network node (e.g., an HSS, a server for proximity service/proximity discovery, the existing network node or the like) or another UE or the MME determines that it is necessary to acquire the information.

The other network node or the other UE that requests the MME to provide the location information about the UE may explicitly or implicitly include, in the message, information indicating that the location information request a) relates to ProSe discovery/ProSe communication/ProSe and/or b) is for initiation of operation related to ProSe discovery/ProSe communication/ProSe. In addition, the other network node or UE may include, in the message, information for instructing the MME to immediately provide the location information or to provide the location information without delaying the same.

In operation 2 of the second scheme, the MME can check whether the UE is in an ISR state (i.e., whether ISR is activated for the UE). The MME performs the following operation 2-1 or 2-2 when ISR is activated, whereas the MME performs the following operation 2-3 or 2-4 when ISR is not activated (or when ISR is deactivated or the MME is not ISR-capable).

According to operation 2-1), when ISR is activated, the MME pages the UE if the UE is in an idle state so as to obtain the location information about the UE. If the UE is in a connected state, the MME acquires the location information about the UE from the eNodeB to which the UE is connected.

According to operation 2-2, when ISR is activated, the MME pages the UE so as to acquire the location information about the UE if the UE is in an idle state. If the UE is in a connected state, the MME determines that the location information about the UE, most recently obtained from the eNodeB, is used.

According to operation 2-3, when ISR is not activated, the MME determines that the location information about the UE, most recently obtained from the eNodeB, is used.

According to operation 2-4, when ISR is not activated, the MME pages the UE so as to acquire the location information about the UE if the UE is in an idle state. If the UE is in a connected state, the MME determines that the location information about the UE, most recently obtained from the eNodeB, is used.

Furthermore, when the UE is in a connected state in relation to the second scheme, a message used by the MME in order to acquire the location information about the UE from the eNodeB to which the UE is connected is the same as the message in the aforementioned first scheme and thus detailed description thereof is omitted.

In addition, the MME may page the UE if the UE is in an idle state when the location information about the UE needs to be obtained for ProSe communication (i.e., to perform ProSe communication after ProSe discovery or to perform ProSe communication without ProSe discovery) irrespective of an ISR state with respect to the UE.

According to operation 3, when the MME needs to provide the location information about the UE to another network node or another UE, the MME provides, to the other network node or UE, the location information about the UE and various type of information related thereto without modifying the same or in a processed form.

### 1-3. ProSe discovery method - third scheme

In operation 1 of the third scheme, the HSS can be requested by another network node (e.g., a server for proximity service/proximity discovery, the existing network node or the like) to provide routing information (or information on a serving node of the UE) with respect to ProSe discovery/ProSe.

According to operation 3 of the third scheme, the HSS can check serving nodes registered for the UE and perform one of the following operations 2-1 to 2-3.

According to operation 2-1, when both the MME and SGSN have been registered as serving nodes, a response message including only information on the MME is not transmitted to the node that has transmitted the request message. That is, the response message does not include information on the SGSN. Additionally, the response message may explicitly or implicitly include information for informing the UE of presence of another serving node in addition to the MME, information indicating that the UE may not be in a camped-on state for E-UTRAN, information indicating that the UE may not be reachable and/or information indicating that the UE may not be found and the like.

According to operation 2-2, when only the MME has been registered as a serving node, a response message including information about the MME can be transmitted to the node that has transmitted the request message.

According to operation 2-3, when only the SGSN has been registered as a serving node, a response message indicating that routing information is not present can be transmitted to the node that has transmitted the request message. Here, the response message may explicitly or implicitly indicate various types of information (e.g., information indicating that the UE is not reachable, information indicating that the UE is not found, information indicating that the UE is not served by E-UTRAN and/or information indicating that the UE is detached).

In operation 3, the other network node that has received the response message from the HSS can send a location information request to the MME, which is a serving node of the UE, on the basis of the response message. The other network node can transmit a location information request message to the MME on the basis of the response message received from the HSS. The location information request message may include the various types of information described in operation 2 of the first scheme.

In the case of the aforementioned methods 1-1 to 1-3, the present invention can be applied to operation of discovering a plurality of UEs (e.g., UEs belonging to a group) as well as operation of discovering one UE.

Furthermore, the present invention can be extended and applied to not only operation of providing location information one time but also operation of periodically providing location information.

In addition, the location information of the UE, mentioned in the present invention, may be interpreted in various manners, for example, as location related information or location related information necessary for ProSe discovery. For example, the location information of the UE can be one or more pieces of information such as a TAI, an ECGI, eNodeB information (eNodeB ID, global eNodeB ID or the like), coordinate information, geographic location information, and information related to movement of the UE (e.g., velocity). In the case of network sharing (GWCN: Gateway Core Network or MOCN: Multi-Operator Core Network) (that is, when the UE camps on a shared network), the location information of the UE may include a list of PLMNs broadcast by the eNodeB (i.e., PLMN IDs included in a system information block (SIB) and broadcast by the eNodeB). The broadcast PLMN list may be previously acquired by the MME from the eNodeB or may be provided by the eNodeB during interaction of the MME and the eNodeB for acquiring the location information about the UE.

The MME can transmit the broadcast PLMN list to the network node that requests the location information of the UE during transmission of the location information of the UE. In the case of network sharing, the location information of the UE may include information (e.g., indicator) indicating that the UE has camped on the shared network. Furthermore, PLMN information about the shared network stored in a network node (e.g., MME, HSS, ProSe server or the like) may be used. The PLMN information may be provided to another network node or acquired from another network node as necessary.

When it is impossible or difficult for the network node (e.g., ProSe server) or UE which finally determines proximity between two UEs to measure the distance/proximity between the two UEs only using location information of the two UEs, proximity between the two UEs can be determined using one or more pieces of information described in the following.
- Information about a neighbor cell, information about location relation between cells, a neighbor cell relation table, a neighbor relation table or a neighbor cell mapping table/list: if obtained location information about the UE is ECGI, UE#1 camps on ECGI#1 and UE#2 camps on ECGI#2, whether ECGI#1 and ECGI#2 are neighbor cells can be checked using a neighbor cell table. Accordingly, whether the two UEs are in proximity to each other can be determined. Here, information about a neighbor cell may include information about neighbors in the range within which proximity relation can be determined as well as information about the neighbor cell.
- Geographic information or coordinate information of a cell: center coordinate information of the cell, coordinate information about the east, west, south and north ends covered by the cell and/or information about the range covered by the cell (e.g., the radius from the center of the cell, the distance covered by the cell and the like). For example, when location information acquired for the UE is ECGI, UE#1 camps on ECGI#1 and UE#2 camps on ECGI#2, the longest distance between the two cells can be checked using coordinate information of ECGI#1 and ECGI#2. Accordingly, it is possible to determine whether the two UEs are in proximity to each other.
- Distance between cells/information on the distance between cells
- List of sets of cells that can be determined to be in proximity relation

Furthermore, the aforementioned information (i.e., information for determining proximity) may be applied or used in a combined form and/or sequentially. While the aforementioned information has been recited for convenience of description, the present invention is not limited to the information and can be applied to a case in which information modified by transforming/converting mapping location information obtained by the network node or UE which finally determines proximity between two UEs is applied or used. Furthermore, it is possible to use at least one of a method of configuring the aforementioned information in the network node or UE which finally determines proximity and a method of acquiring the information from another network node. Alternatively, the aforementioned information may be acquired whenever updated. The above-described methods may be used in various combined forms.

### 2. Embodiments of ProSe discovery methods in mobile communication systems such as 3GPP EPS (Evolved Packet System)

A description will be given of detailed embodiments about the aforementioned ProSe discovery methods.

### 2-1. First embodiment

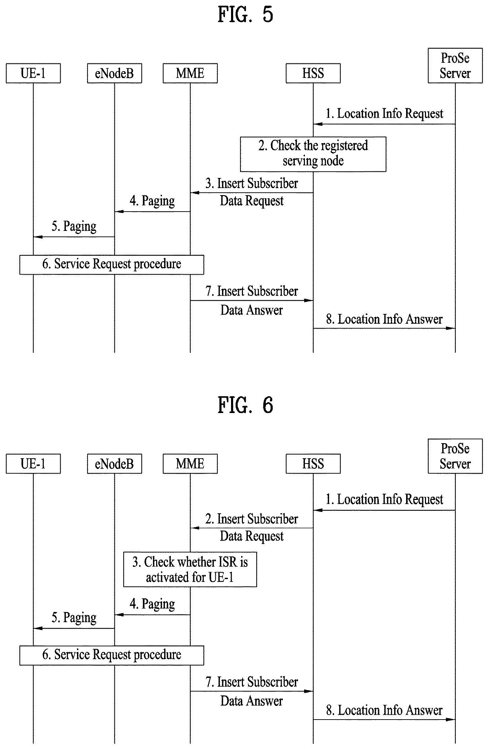

FIG. 5 is a reference view illustrating ProSe discovery operation based on the aforementioned first scheme according to the first embodiment of the present invention.

In step 1 of FIG. 5, a ProSe server transmits, to an HSS, a message for requesting location information of a UE (referred to as UE-1 hereinafter) corresponding to a ProSe discovery target, for example, Location Info Request message. Step 1 of FIG. 5 may be initiated when the ProSe server receives a request, for example, a proximity request, from another UE (referred to as UE-2 hereinafter) which requests determination of proximity to UE-1. Alternatively, step 1 may be initiated by a request from another network node (e.g., a ProSe application server or the like) which wants to know the location information of UE-1 or proximity between UE-1 and another UE.

UE-2 may transmit a proximity request message including the location information thereof to the ProSe server when requesting determination of proximity to UE-1. If UE-2 does not include the location information thereof in the proximity request message, the ProSe server can acquire the location information of UE-2 in the same manner as acquiring the location information of UE-1 in the present embodiment. This operation is equally applied to a case in which another network node that transmits a proximity request does not provide location information about another UE, proximity of which to UE-1 the network node wishes to know.

In step 2 of FIG. 5, the HSS checks serving nodes registered for UE-1. In the present embodiment, it is assumed that an MME and an SGSN have been registered as serving nodes.

In step 3 of FIG. 5, the HSS transmits, to the MME, a message for requesting the location information of UE-1, for example, Insert Subscriber Data Request message. Here, the HSS sets an EPS Location Information Request bit and a Current Location Request bit in IDR flags (refer to Table 2) constituting the Insert Subscriber Data Request message. In addition, the aforementioned message may be defined to additionally include the various types of information described in operation 2 of the first scheme.

**[Table 2]**

| **bit** | **name** | **Description** |
|---|---|---|
| 0 | UE Reachability Request | This bit when set shall indicate to the MME or the SGSN that the HSS is awaiting a Notification of UE Reachability. |
| 1 | T-ADS Data Request | This bit, when set, shall indicate to the MME or SGSN that the HSS requests the support status of "IMS Voice over PS Sessions", and the RAT Type and timestamp of the last radio contact with the UE. |
| 2 | EPS User State Request | This bit, when set, shall indicate to the MME or the SGSN that the HSS requests the MME or the SGSN for the current user state. |
| 3 | EPS Location Information Request | This bit, when set, shall indicate to the MME or the SGSN that the HSS requests the MME or SGSN for location information |
| 4 | Current Location Request | This bit when set shall indicate to the MME or the SGSN that the HSS requests the MME or SGSN to provide the most current location information by paging the UE if the UE is in idle mode. This bit is used only in combination with the"EPS Location Information Request" bit. |
| 5 | Local Time Zone Request | This bit when set shall indicate to the MME or the SGSN that the HSS requests the MME or SGSN to provide information on the time zone of the location in the visited network where the UE is attached. |
| 6 | Remove SMS Registration | This bit when set shall indicate to the MME that it shall consider itself unregistered for SMS. |
| 7 | RAT-Type Requested | This bit when set shall indicate to the MME or the SGSN that the HSS requests the MME or SGSN to provide the RAT Type that corresponds to the requested EPS Location Information. This bit is used only in combination with the"EPS Location Information Request" bit. |
| NOTE: | Bits not defined in this table shall be cleared by the sending HSS and discarded by the receiving MME. | |

In steps 4 and 5 of FIG. 5, upon reception of the request message (i.e., an Insert Subscriber Data Request message) transmitted from the HSS, the MME pages UE-1 on the basis of the request message since UE-1 is in an idle state. In the present embodiment, the MME performs operation 3-1 of the first scheme on the assumption that UE-1 is in an idle state.

In step 6 of FIG. 5, upon reception of a paging message, UE-1 performs a service request procedure (refer to "UE triggered Service Request" of section 5.3.4.1 of 3GPP TS 23.401 for the service request procedure). The MME acquires the location information about UE-1. The MME can acquire the location information by including the location information (e.g., TAI, ECGI or the like) about the UE in an S1-AP message (e.g., INITIAL UE MESSAGE) which is transmitted by the eNodeB in order to forward the service request message transmitted from UE-1 to the MME to the MME.

In step 7 of FIG. 5, upon acquisition of the location information about UE-1, the MME transmits, to the HSS, an Insert Subscriber Data Answer message including the location information about UE-1.

In step 8 of FIG. 5, the HSS transmits, to the ProSe server, a response message including the location information of UE-1, for example, a Location Info Answer message. Here, the ProSe server, which has acquired the location information about UE-1, may determine whether UE-1 and the UE (e.g., UE-2 in the case of step 1) which requests proximity are in proximity to each other and respond to UE-2. If UE-1 and UE-2 are in proximity to each other, the ProSe server may selectively inform UE-1 of the proximity of UE-1 and UE-2.

### 2-2. Second embodiment

FIG. 6 is a reference view illustrating ProSe discovery operation based on the second scheme according to the second embodiment of the present invention.

In step 1 of FIG. 6, a ProSe server transmits, to an HSS, a message for requesting location information of a UE (referred to as UE-1 hereinafter) corresponding to a ProSe discovery target, for example, a Location Info Request message. For reference, when an interface is present between the ProSe server and an MME which serves UE-1, the ProSe server may transmit the message for requesting the location information to the MME. Step 1 of FIG. 6 may be initiated when the ProSe server receives a request, for example, proximity request, from another UE (referred to as UE-2 hereinafter) which requests determination of proximity to UE-1. Alternatively, step 1 may be initiated by a request from another network node (e.g., a ProSe application server or the like) which wants to know the location information of UE-1 or proximity between UE-1 and another UE.

UE-2 may transmit a proximity request message including the location information thereof to the ProSe server when requesting determination of proximity to UE-1. If UE-2 does not include the location information thereof in the proximity request message, the ProSe server can acquire the location information of UE-2 in the same manner as acquiring the location information of UE-1 in the present embodiment. This operation is equally applied to a case in which another network node that transmits a proximity request does not provide location information about another UE, proximity of which to UE-1 the network node wishes to know.

In step 2 of FIG. 6, the HSS transmits, to the MME which serves UE-1, a message for requesting the location information of UE-1, for example, an Insert Subscriber Data Request message. Here, the HSS sets an EPS Location Information Request bit in IDR flags constituting the Insert Subscriber Data Request message. In addition, the aforementioned request message may include information indicating that the location information request relates to ProSe discovery.

In step 3 of FIG. 6, upon reception of the Insert Subscriber Data Request message transmitted from the HSS, the MME checks an ISR state with respect to the UE (i.e., whether ISR is activated or not). It is assumed that ISR is activated for UE-1 in the present embodiment.

In steps 4 and 5 of FIG. 6, the MME pages UE-1 since ISR is activated for UE-1 and UE-1 is in an idle state. In the present embodiment, it is assumed that the MME performs operation 2-1 of the second scheme on the assumption that UE-1 is in an idle state.

In step 6 of FIG. 6, upon reception of a paging message, UE-1 performs a service request procedure (refer to "UE triggered Service Request" of section 5.3.4.1 of 3GPP TS 23.401 for the service request procedure). The MME acquires the location information about UE-1. The MME can acquire the location information by including the location information (e.g., TAI, ECGI or the like) about the UE in an S1-AP message (e.g., INITIAL UE MESSAGE) which is transmitted by the eNodeB in order to forward the service request message transmitted from UE-1 to the MME to the MME.

In step 7 of FIG. 6, upon acquisition of the location information about UE-1, the MME transmits, to the HSS, an Insert Subscriber Data Answer message including the location information about UE-1. For reference, when the ProSe server transmits the message for requesting the location information of UE-1 to the MME in step 1 of FIG. 6, the MME may transmit a response message to the ProSe server.

In step 8 of FIG. 6, the HSS transmits, to the ProSe server, a response message including the location information of UE-1, for example, a Location Info Answer message. Here, the ProSe server, which has acquired the location information about UE-1, may determine whether UE-1 and the UE (e.g., UE-2 in step 1) which requests proximity are in proximity to each other and respond to UE-2. If UE-1 and UE-2 are in proximity to each other, the ProSe server may selectively inform UE-1 of the proximity of UE-1 and UE-2.

### 2-3. Third embodiment

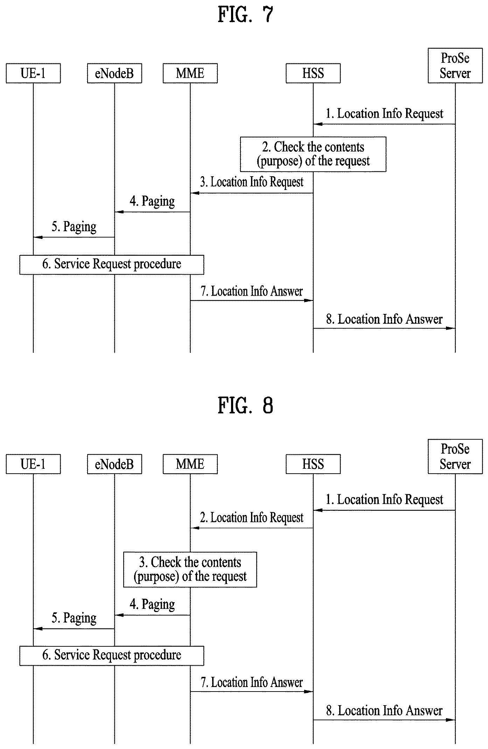

FIG. 7 is a reference view illustrating ProSe discovery operation based on the aforementioned first scheme according to the third embodiment of the present invention.

In step 1 of FIG. 7, a ProSe server transmits, to an HSS, a message for requesting location information of a UE (referred to as UE-1 hereinafter) corresponding to a ProSe discovery target, for example, a Location Info Request message. Step 1 may be initiated when the ProSe server receives a request, for example, proximity request, from another UE (referred to as UE-2 hereinafter) which requests determination of proximity to UE-1. Alternatively, step 1 may be initiated by a request from another network node (e.g., a ProSe application server or the like) which wants to know the location information of UE-1 or proximity between UE-1 and another UE. UE-2 may transmit a proximity request message including the location information thereof to the ProSe server when requesting determination of proximity to UE-1. If UE-2 does not include the location information thereof in the proximity request message, the ProSe server can acquire the location information of UE-2 in the same manner as acquiring the location information of UE-1 in the present embodiment. This operation is equally applied to a case in which another network node that transmits a proximity request does not provide location information about another UE for which the network node wants to know proximity to UE-1.

In step 2 of FIG. 7, the HSS checks information included in the received request message. Here, it is assumed that the request message includes information indicating that the request relates to ProSe communication or information indicating that the request is for initiating ProSe communication (i.e., for performing ProSe communication after ProSe discovery or for performing ProSe communication without ProSe discovery).

In step 3 of FIG. 7, the HSS transmits, to an MME which is a serving node of the UE, a message for requesting location information about UE-1, for example, a Location Info Request message. Here, the HSS includes, in the Location Info Request message, information indicating that the location information request is for initiating ProSe communication. Furthermore, various types of information described in operation 2 of the aforementioned first scheme may be additionally included in the Location Info Request message.

In steps 4 and 5 of FIG. 7, upon reception of the Location Info Request message transmitted from the HSS, the MME pages UE-1 on the basis of the request message since UE-1 is in an idle state. In the present embodiment, the MME performs operation 3-1 of the first scheme on the assumption that UE-1 is in an idle state.

In step 6 of FIG. 7, upon reception of a paging message, UE-1 performs a service request procedure (refer to "UE triggered Service Request" of section 5.3.4.1 of 3GPP TS 23.401 for the service request procedure). The MME acquires the location information about UE-1. The MME can acquire the location information by including the location information (e.g., TAI, ECGI or the like) about the UE in an S1-AP message (e.g., INITIAL UE MESSAGE) which is transmitted by the eNodeB in order to forward the service request message transmitted from UE-1 to the MME to the MME.

In step 7 of FIG. 7, upon acquisition of the location information about UE-1, the MME transmits, to the HSS, a Location Info Answer message including the location information about UE-1.

In step 8 of FIG. 8, the HSS transmits, to the ProSe server, a response message including the location information of UE-1, for example, a Location Info Answer message. The ProSe server, which has acquired the location information about UE-1 from the HSS, may determine whether UE-1 and the UE (e.g., UE-2 in the present embodiment) which requests proximity are in proximity to each other and respond to UE-2. Here, the ProSe server may additionally provide information necessary for ProSe communication. If UE-1 and UE-2 are in proximity to each other, the ProSe server may transmit, to UE-1, information indicating that UE-2 wants to perform ProSe communication along with the information necessary for ProSe communication. Since UE-1 is in a connected state, the MME need not page UE-1 to enable the ProSe server and UE-1 to perform communication.

### 2-4. Fourth embodiment

FIG. 8 is a reference view illustrating ProSe discovery operation based on the second scheme according to the fourth embodiment of the present invention.

In step 1 of FIG. 8, a ProSe server transmits, to an HSS, a message for requesting location information of a UE (referred to as UE-1 hereinafter) corresponding to a ProSe discovery target, for example, a Location Info Request message. For reference, when an interface is present between the ProSe server and an MME which serves UE-1, the ProSe server may transmit the message for requesting the location information to the MME.

Step 1 may be initiated when the ProSe server receives a request, for example, a proximity request, from another UE (referred to as UE-2 hereinafter) which requests determination of proximity to UE-1. Alternatively, step 1 may be initiated by a request from another network node (e.g., a ProSe application server or the like) which wants to know the location information of UE-1 or proximity between UE-1 and another UE. UE-2 may transmit a proximity request message including the location information thereof to the ProSe server when requesting determination of proximity to UE-1. If UE-2 does not include the location information thereof in the proximity request message, the ProSe server can acquire the location information of UE-2 in the same manner as acquiring the location information of UE-1 in the present embodiment. This operation is equally applied to a case in which another network node that transmits a proximity request does not provide location information about another UE for which the network node wants to know proximity to UE-1.

It is assumed that the request message transmitted by the ProSe server includes information indicating that the request relates to ProSe communication or information indicating that the request is for initiating ProSe communication (i.e., for performing ProSe communication after ProSe discovery or for performing ProSe communication without ProSe discovery).

In step 2 of FIG. 8, the HSS transmits, to the MME which serves UE-1, a message for requesting the location information of UE-1, for example, a Location Info Request message, on the basis of the request message transmitted from the ProSe server.

In step 3 of FIG. 8, upon reception of the Location Info Request message transmitted from the HSS, the MME checks information included in the received request message.

In steps 4 and 5 of FIG. 8, since the request message includes information indicating that the request message is for initiating ProSe communication and UE-1 is in an idle state, the MME pages UE-1.

In step 6 of FIG. 8, upon reception of a paging message, UE-1 performs a service request procedure (refer to "UE triggered Service Request" of section 5.3.4.1 of 3GPP TS 23.401 for the service request procedure). The MME acquires the location information about UE-1. The MME can acquire the location information by including the location information (e.g., TAI, ECGI or the like) about the UE in an S1-AP message (e.g., INITIAL UE MESSAGE) which is transmitted by the eNodeB in order to forward the service request message transmitted from UE-1 to the MME to the MME.

In step 7 of FIG. 8, upon acquisition of the location information about UE-1, the MME transmits, to the HSS, a Location Info Request message including the location information about UE-1. When the ProSe server transmits the message for requesting the location information of UE-1 to the MME in step 1 of FIG. 8, the MME may transmit a response message to the ProSe server.

In step 8 of FIG. 8, the HSS transmits, to the ProSe server, a response message including the location information of UE-1, for example, a Location Info Answer message.

Here, the ProSe server, which has acquired the location information about UE-1, may determine whether UE-1 and the UE (e.g., UE-2 in the present embodiment) which requests proximity are in proximity to each other and respond to UE-2. Here, the ProSe server may additionally provide information necessary for ProSe communication. If UE-1 and UE-2 are in proximity to each other, the ProSe server may transmit, to UE-1, information indicating that UE-2 wants to perform ProSe communication along with the information necessary for ProSe communication. Since UE-1 is in a connected state, the MME need not page UE-1 to enable the ProSe server and UE-1 to perform communication.

### 2-5. Fifth embodiment

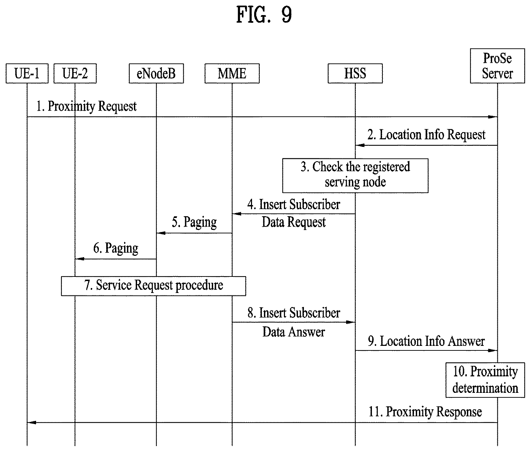

FIG. 9 is a reference view illustrating ProSe discovery operation based on the aforementioned first scheme according to the fifth embodiment of the present invention. In the present embodiment, it is assumed that UE-1 and UE-2 camp on a shared network (GWCN or MOCN).

In step 1 of FIG. 9, a UE (UE-1 hereinafter) which intends to perform ProSe discovery transmits, to a ProSe server, a proximity information request message, for example, a Proximity Request message, in order to check whether UE-1 is in proximity to a UE (UE-2 hereinafter) which is a ProSe discovery target. UE-1, which performs the request, may include the location information thereof in the Proximity Request message and send the Proximity Request message including the location information thereof. In addition, since UE-1 camps on the shared network, UE-1 may include PLMN list information broadcast by a camped-on eNodeB in the request message.

In step 2 of FIG. 9, the ProSe server transmits a request message for requesting the location information of UE-2 to an HSS.

In step 3 of FIG. 9, the HSS checks serving nodes registered for UE-2. In the present embodiment, it is assumed that both the MME and SGSN have been registered as serving nodes.

In step 4 of FIG. 9, the HSS transmits, to the MME, a message for requesting the location information about UE-2, for example, an Insert Subscriber Data Request message. Here, the HSS sets EPS Location Information Request bit and Current Location Request bit in IDR flags (refer to Table 2) constituting the Insert Subscriber Data Request message. Furthermore, the request message may additionally include various pieces of information described in operation 2 of the aforementioned first scheme.

In steps 5 and 6 of FIG. 9, upon reception of the Insert Subscriber Data Request message transmitted from the HSS, the MME pages UE-2 on the basis of the request message since UE-2 is in an idle state. In the present embodiment, it is assumed that the MME performs operation 3-1 of the aforementioned first scheme on the assumption that UE-2 is in an idle state.

In step 7 of FIG. 9, upon reception of a paging message, UE-2 performs a service request procedure (refer to "UE triggered Service Request" of section 5.3.4.1 of 3GPP TS 23.401). The MME acquires the location information about UE-2.

The location information can be acquired by including the location information (e.g., TAI, ECGI or the like) about UEs in S1-AP message (e.g., INITIAL UE MESSAGE) which is transmitted by the eNodeB in order to forward a service request message, transmitted from UE-2 to the MME, to the MME. The eNodeB is a shared eNodeB and thus the eNodeB can include broadcast PLMN list information in the S1-AP message when transmitting the S1-AP message to the MME.

In addition, the shared eNodeB may i) include the broadcast PLMN list information along with location information about UEs all the time, ii) include the broadcast PLMN list information on the basis of configuration or iii) include the broadcast PLMN list information on the basis of information (which may be newly defined information for the present invention) included in the paging message transmitted by the MME in step 5 of FIG. 9. To include the broadcast PLMN list information, a conventional S1-AP message (e.g., INITIAL UE MESSAGE) may be extended or new S1-AP message may be defined.

In step 8 of FIG. 9, upon acquisition of the location information about UE-2, the MME transmits, to the HSS, a response message including the location information about UE-2, for example, an Insert Subscriber Data Answer message. The location information about UE-2 includes the broadcast PLMN list information of the eNodeB. To include the broadcast PLMN list information in the location information about UE-2, a conventional Insert Subscriber Data Answer message may be extended or a new response message may be defined.

In step 9 of FIG. 9, the HSS transmits, to the ProSe server, a response message including the location information about UE-2, for example, a Location Info Answer message.

In step 10 of FIG. 9, upon acquisition of the location information about UE-2 from the HSS, the ProSe server determines proximity. When UE-1 and UE-2 camping on the shared network have registered with different PLMNs and are in proximity to each other, the ProSe server can determine proximity on the basis of the location information including broadcast PLMN list information about UE-1 and UE-2.

If UE-2 does not include the location information thereof in step 1 of FIG. 9, the ProSe server may acquire the location information of UE-1 in the same manner of obtaining the location information of UE-2 in order to determine whether UE-1 and UE-2 are in proximity to each other.

In step 11 of FIG. 9, the ProSe server transmits a response message indicating a proximity determination result, for example, a Proximity Response message, to UE-1 which requests proximity determination. Here, when UE-1 and UE-2 are in proximity to each other, the ProSe server may selectively inform UE-2 of the proximity between UE-1 and UE-2.

### 2-6. Sixth embodiment

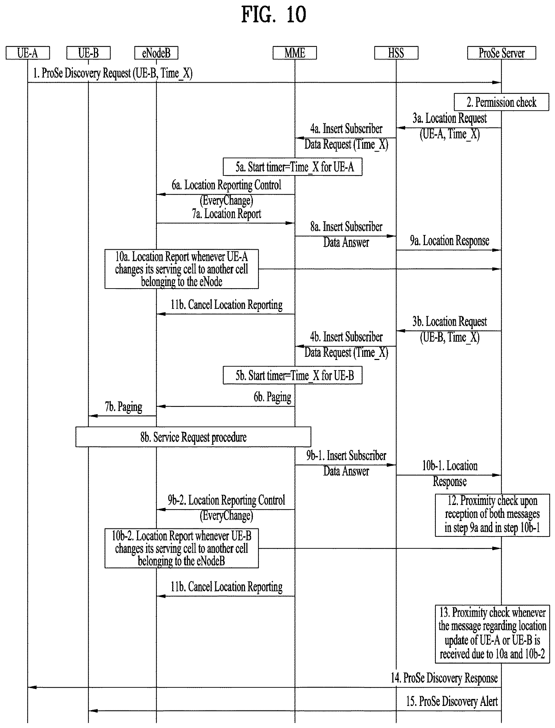

FIG. 10 is a reference view illustrating ProSe discovery operation according to another embodiment of the present invention.

In step 1 of FIG. 10, UE-A transmits, to a ProSe server, a proximity information request message, for example, a ProSe Discovery Request message in order to check whether UE-A is in proximity to UE-B. Here, UE-A includes time information (e.g., Time_X) in the proximity information request message and transmits the message in order to request the ProSe server to notify UE-A of proximity between UE-A and UE-B when UE-A becomes adjacent to UE-B within a predetermined time.

In step 2 of FIG. 10, the ProSe server checks permission of UE-A to discover UE-B. This operation may include operation of authorizing UE-A with regard to ProSe discovery request and ProSe related operation.

Steps 3a to 11a of FIG. 10 correspond to operation of acquiring location information about UE-A.

In step 3a of FIG. 10, the ProSe server transmits, to an HSS, a request message for requesting the location information about UE-A, for example, Location Request message. Here, the ProSe server includes information Time X in the request message.

In step 4a of FIG. 10, the HSS transmits, to an MME, a message for requesting the location information about UE-A, for example, an Insert Subscriber Data Request message. Here, the HSS may set an EPS Location Information Request bit and a Current Location Request value in IDR flags constituting the Insert Subscriber Data Request message. Various pieces of information described in operation 2 of the aforementioned first scheme may be additionally included in the request message. In addition, the HSS includes the information Time_X in the message.

In step 5a of FIG. 10, the MME starts a timer with Time_X.

In step 6a of FIG. 10, the MME transmits, to the eNodeB, a message for requesting the eNodeB to report the location information, for example, a Location Reporting Control message in order to acquire the location information of UE-A in a connected state. Here, the message includes information for instructing the eNodeB to report the location information of UE-A whenever the serving cell of UE-A is changed. When the Location Reporting Control message, which is a conventional S1-AP message, is used in step 6a, a new value may be added to the existing information element or a new information element may be defined and used in order to include the instruction information in the message.

In step 7a of FIG. 10, the eNodeB transmits, to the MME, a response message including information on the current location (i.e., most recent location) of UE-A, for example, a Location Report message.

In step 8a of FIG. 10, upon acquisition of the location information about UE-A, the MME transmits, to the HSS, an Insert Subscriber Data Answer message including the location information of UE-A.

In step 9a of FIG. 10, the HSS transmits, to the ProSe server, a response message including the location information of UE-A, for example, a Location Response message.

In step 10a of FIG. 10, the eNodeB transmits, to the MME, a message (e.g., a Location Report message) including changed location information of UE-A whenever the serving cell of UE-A is changed on the basis of the Location Reporting Control message received in step 6a of FIG. 10. Upon reception of the message, the MME transmits the received location information to the HSS, and the HSS sends the received location information to the ProSe server.

In step 11a of FIG. 10, upon expiration of the timer starting in step 5a of FIG. 10, the MME transmits, to the eNodeB, a message indicating that the location information about UE-A need not be reported, for example, a Cancel Location Reporting message.

Steps 3b to 11b of FIG. 10 correspond to operation of acquiring location information about UE-B.

In step 3b of FIG. 10, the ProSe server transmits, to the HSS, a request message for requesting the location information of UE-B, for example, a Location Request message. Here, the ProSe servers include the information Time_X in the request message.

In step 4b of FIG. 10, the HSS transmits, to the MME, a message for requesting the location information about UE-B, for example, an Insert Subscriber Data Request message. Here, the HSS sets an EPS Location Information Request bit and a Current Location Request bit in IDR flags constituting the Insert Subscriber Data Request message. Information described in operation 2 of the aforementioned first scheme may be additionally included in the message. The HSS includes the information Time X in the message.

In step 5b of FIG. 10, the MME starts the timer with Time_X.

In steps 6b and 7b of FIG. 10, upon reception of the Insert Subscriber Data Request message transmitted from the HSS, the MME pages UE-B on the basis of the request message since UE-B is in an idle state (it is assumed that UE-B is in an idle state in the current embodiment).

In step 8b of FIG. 10, upon reception of a paging message from the MME, UE-B performs a service request procedure. (Refer to "UE triggered Service Request" of section 5.3.4.1 of 3GPP TS 23.401 for the service request procedure). The MME acquires the location information about UE-B. The location information can be acquired by including the location information (e.g., TAI, ECGI or the like) about UEs in an S1-AP message (e.g., INITIAL UE MESSAGE) which is transmitted by the eNodeB in order to forward a Service Request message, transmitted from UE-1 to the MME, to the MME.

In step 9b-1 of FIG. 10, upon acquisition of the location information about UE-B, the MME transmits, to the HSS, a response message including the location information about UE-B, for example, an Insert Subscriber Data Answer message.

In step 10b-1 of FIG. 10, the HSS transmits, to the ProSe server, a response message including the location information of UE-B, for example, a Location Response message.

In step 9b-2 of Fig. 10, the MME transmits, to the eNodeB, a message for requesting the eNodeB to report the location information, for example, a Location Reporting Control message, in order to acquire the location information of UE-B in a connected state. Here, the message may include information for instructing the eNodeB to report the location information of UE-B whenever the serving cell of UE-B is changed. When the Location Reporting Control message, which is a conventional S1-AP message, is used in step 9b-2, a new value may be added to the existing information element or a new information element may be defined and used in order to include the instruction information in the message.

In step 10b-2 of FIG. 10, the eNodeB transmits, to the MME, a message including changed location information of UE-A whenever the serving cell of UE-A is changed, for example, a Location Report message on the basis of the Location Reporting Control message received in step 9b-2 of FIG. 10. Upon reception of the message, the MME transmits the received location information to the HSS, and the HSS sends the received location information to the ProSe server.

In step 11b of FIG. 10, upon expiration of the timer starting in step 5b of FIG. 10, the MME transmits, to the eNodeB, a message indicating that the location information about UE-B need not be reported, for example, a Cancel Location Reporting message.

Here, operation of acquiring the location information about UE-A (i.e., steps 3a to 11a) and operation of acquiring the location information about UE-B (i.e., steps 3b to 11b) can be performed in parallel.

In addition, the ProSe server may transmit one request message including information about UE-A and UE-B to the HSS, instead of transmitting the respective requests messages as described in steps 3a and 3b, when sending the message for requesting the location information of UE-A and the location information of UE-B to the same HSS.

In step 12 of FIG. 10, upon reception of the response messages from the HSS in steps 9a and 10b-1, the ProSe server checks proximity between UE-A and UE-B on the basis of the obtained location information of the two UEs. If the two UEs are in proximity to each other, step 14 and the following step of FIG. 10 are performed.

In step 13 of FIG. 10, the ProSe server checks proximity between UE-A and UE-B whenever receiving the message including the location information about UE-A or the message including the location information about UE-B from the HSS. If the two UEs are in proximity to each other, step 14 and the following step of FIG. 10 are performed.

In step 14 of FIG. 10, the ProSe server transmits a response message indicating proximity check result, for example, a ProSe Discovery Response message, to UE-A which has requested proximity check.

In step 15 of FIG. 10, when UE-A and UE-B are in proximity to each other, the ProSe server may selectively transmit a message indicating the proximity, for example, a ProSe Discovery Alert message, to UE-B.

In the present embodiment, when the two UEs are not in proximity to each other for the time requested by UE-A (i.e., Time_X), the ProSe server may transmit, to UE-A, a message for notifying UE-A that the two UEs are not in proximity to each other upon expiration of Time_X. To this end, the ProSe server may enable the timer with respect to Time_X to start after step 1 of FIG. 10.

With regard to steps 10a and 10b-2 of FIG. 10, the eNodeB may maintain UE-A and UE-B in a connected state for a period in which the eNodeB needs to report the location information about UE-A and UE-B to the MME (i.e., before receiving Cancel Location Reporting messages from the MME) in order to check whether the serving cells of UE-A and UE-B are changed.

The present embodiment focuses on acquisition of the location information about UE-A and UE-B by the MME for the period requested by UE-A by managing the timer with respect to Time X by the MME. However, the eNodeB may report the location information about UE-A and UE-B to the MME for the period requested by UE-A by managing the timer with respect to Time_X. Alternatively, the eNodeB may report the location information about UE-A and UE-B to the MME for the period requested by UE-A by managing the timer with respect to Time X in parallel with management of the timer with respect to Time_X by the MME. Furthermore, the HSS or the ProSe server may operate as the MME by managing the timer with respect to Time_X. (That is, the HSS requests the MME to start location information reporting and cancels the request upon expiration of the timer, and the ProSe server requests the HSS to start location information reporting and cancels the request upon expiration of the timer.)

### 3. Embodiments of EPC-level ProSe discovery according to the present invention

A description will be given of ProSe discovery operation, more specifically, EPC-level ProSe discovery operation according to the present invention.

In the embodiments, for EPC-level ProSe discovery, the ProSe server is present in the EPC and executes the following functions.
- Interaction with UEs supporting the EPC-level ProSe discovery function
- Interaction with an HSS in order to acquire location information of a UE
- Determine proximity between a discoverer UE and a discoveree UE
- Communication with a home ProSe server of an inbound roamer in order to acquire location information about an inbound roamer UE
- Communication with ProSe server peers of a different PLMN for supporting EPC-level ProSe discovery when the discoverer UE and the discoveree UE are registered with different PLMNs

Prior to transmission of a ProSe discovery request to the ProSe server, the discoverer UE registers with a ProSe server present in a PLMN with which the discoverer UE has registered. Accordingly, the discoverer registers with a home ProSe server when the discoverer UE is a non-roaming UE and registers with a visited ProSe server when the discoverer UE is a roaming UE.

In the following embodiments, a representative example of location information of a UE, which is provided by an eNodeB/MME/HSS/ProSe server to the next node may be information (e.g., ECGI) related to cell information. However, the location information is not limited thereto and various types of location information described with respect to "1. ProSe discovery method in a mobile communication system such as a 3GPP EPS (Evolved Packet System)" may be provided as the location information.

### 3-1. Seventh embodiment

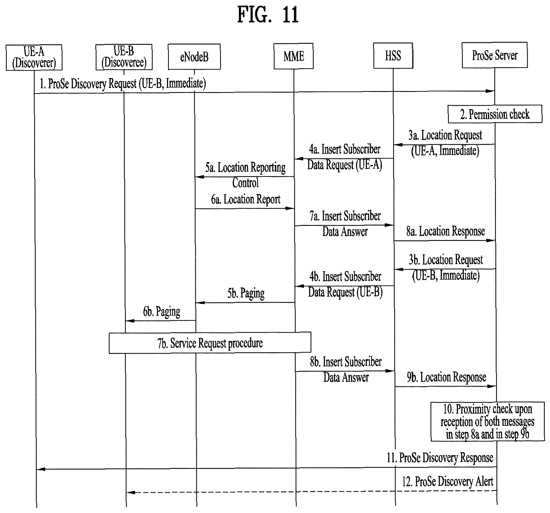

FIG. 11 is a reference view illustrating EPC-level ProSe discovery operation when a discoverer UE and a discoveree UE are present within the same PLMN (both the discoverer UE and the discoveree UE being non-roaming UEs) according to the seventh embodiment of the present invention.

To check whether a discoveree UE (referred to UE-B hereinafter) is currently present, a discovery UE (referred to as UE-A hereinafter) requests ProSe discovery to the corresponding network, as shown in FIG. 11. It is assumed that UE-A (i.e., discoverer) and UE-B (i.e., discoveree) register with the same PLMN and are non-roaming UEs in the following processes.

UE-A and UE-B have registered with the ProSe server.

In step 1 of FIG. 11, UE-A transmits a ProSe Discovery Request message to the ProSe server in order to obtain information about proximity to UE-B, that is, whether UE-B can be discovered. Here, UE-A may include, in the ProSe Discovery Request message, information for instructing the ProSe server to immediately provide information about proximity to UE-B. In this case, UE-A and UE-B may substantially refer to an application on ProSe-enabled UE-A and an application on ProSe-enabled UE-B.

In step 2 of FIG. 11, the ProSe server authorizes the ProSe Discovery Request message transmitted from UE-A and checks whether UE-A/user-A is permitted to discover UE-B/user-B. If UE-A/user-A is not permitted to discover UE-B/user-B, step 11 of FIG. 11 is performed.

Steps 3a to 8a of FIG. 11 are performed in order to obtain the location information of UE-A.

In step 3a of FIG. 11, the ProSe server transmits a Location Request message to an HSS in order to request the current location information of UE-A.

In step 4a of FIG. 11, the HSS transmits an Insert Subscriber Data Request message to an MME which serves UE-A. Here, the HSS can set an "EPS Location Information Request" bit and a "Current Location Request" bit included in the Insert Subscriber Data Request message such that the MME is requested to provide the most recent location information of UE-A.

In step 5a of FIG. 11, UE-A is assumed to be in a connected state. The MME transmits a Location Reporting Control message to an eNodeB in order to acquire most recent cell information about UE-A. A request type information element (IE) included in the Location Reporting Control message instructs the eNodeB to immediately report the location information of UE-A.

In step 6a of FIG. 11, the eNodeB provides the most recent cell information about UE-A by transmitting a Location Report message to the MME.

In step 7a of FIG. 11, the MME transmits, to the HSS, an Insert Subscriber Data Answer message including the most recent location information of UE-A.

In step 8a of FIG. 11, the HSS transmits a Location Response message including the most recent location information of UE-A to the ProSe server.

Steps 3b to 9b of FIG. 11 are performed in order to obtain the location information of UE-B.

In step 3b of FIG. 11, the ProSe server transmits a Location Request message to the HSS in order to request the current location information of UE-B.

In step 4b of FIG. 11, the HSS transmits an Insert Subscriber Data Request message to the MME which serves UE-B. Here, the HSS can set the "EPS Location Information Request" bit and the "Current Location Request" bit included in the Insert Subscriber Data Request message such that the MME is requested to provide most recent location information of UE-B.

In step 5b of FIG. 11, it is assumed that UE-B is in an idle state. The MME transmits a paging message to each eNodeB belonging to a tracking region in which UE-B has registered. Alternatively, the MME may transmit, to the HSS, a response message indicating that UE-B is in an idle state (and/or that current location information cannot be provided), instead of paging UE-B in an idle state.

Alternatively, the MME may include i) location information about UE-B that the MME has or ii) location information about UE-B, acquired from the eNodeB, in the response message and transmit the response message to the HSS, instead of paging UE-B in an idle state. Here, the MME may additionally include, in the response message, information about the time when the location information is acquired (e.g., time when the MME acquires the location information when the MME provides the location information that the MME has or time when the eNodeB acquires the location information from the UE when the location information is provided by the eNodeB).

Furthermore, the MME can transmit the response message, instead of paging UE-B, on the basis of one of the following pieces of information.
- Configuration information in the MME
- Subscriber information
- Operator policy
- User preference information
- User setting information (e.g., information indicating that paging for acquiring location information for discovery is not performed in an idle state)
- The location information request message sent by the HSS may explicitly or implicitly include information for instructing the MME to perform the aforementioned response. Furthermore, the ProSe server transmits the location information request message including the aforementioned information and the HSS may also transmit the location information request message including the aforementioned information. The ProSe server may determine inclusion of the aforementioned information on the basis of local configuration information, subscriber information, operator policy, user preference information, user setting information and the like.

The aforementioned operation of the MME to transmit the response message to the HSS instead of paging the UE in an idle state can be equally applied to embodiments 8, 9 and 11 which will be described later.

In step 6b of FIG. 11, UE-B receives a paging message from the eNodeB.

In step 7b of FIG. 11, UE-B initiates a service request procedure according to the received paging message.

In step 8b of FIG. 11, upon acquisition of the cell information of UE-B in step 7b of FIG. 11, the MME transmits, to the HSS, an Insert Subscriber Data Answer message including the most recent location information of UE-B.

In step 9b of FIG. 11, the HSS transmits, to the ProSe server, Location Response message including the most recent location information of UE-B.

In step 10 of FIG. 11, the ProSe server determines whether UE-A and UE-B are in proximity to each other according to the location information of UE-A, the location information of UE-B and proximity criteria on the basis of both the Location Response message received in step 8a of FIG. 11 and the Location Response message received in step 8b of FIG. 11.

In step 11 of FIG. 11, the ProSe server transmits, to UE-A, a ProSe Discovery Response message along with information indicating whether UE-A and UE-B are in proximity to each other. When UE-A/user-A has no authority to discover UE-B/user-B, the ProSe Discovery Response message indicates that the ProSe discovery request from UE-A has been rejected.

In step 12 of FIG. 11, when UE-A is in proximity to UE-B, the ProSe server may inform UE-B that UE-A wants to discover UE-B by transmitting ProSe Discovery Alert message to UE-B.

UE-A and UE-B may attempt to discover each other.

Furthermore, steps (i.e., steps 3a to 8a) for acquiring the location information of UE-A and steps (i.e., steps 3b to 9b) for acquiring the location information of UE-B may be performed in parallel.

When UE-A is in an idle state, steps 5b to 7b of FIG. 11 for obtaining location information of the UE in the idle state may be performed instead of steps 5a and 6a of FIG. 11. When UE-B is in a connected state, steps 5a and 6a of FIG. 11 for obtaining location information of the UE in the connected state may be performed instead of steps 5b to 7b of FIG. 11.

While a case in which UE-A and UE-B are served by the same eNodeB and the same MME is described with reference to FIG. 11 for convenience of description, the aforementioned embodiments can be applied to a case in which UE-A and UE-B are served by different eNodeBs and the same MME, a case in which UE-A and UE-B are served by the same eNodeB and different MMEs or a case in which UE-A and UE-B are served by different eNodeBs and different MMEs.

### 3-2. Eighth embodiment

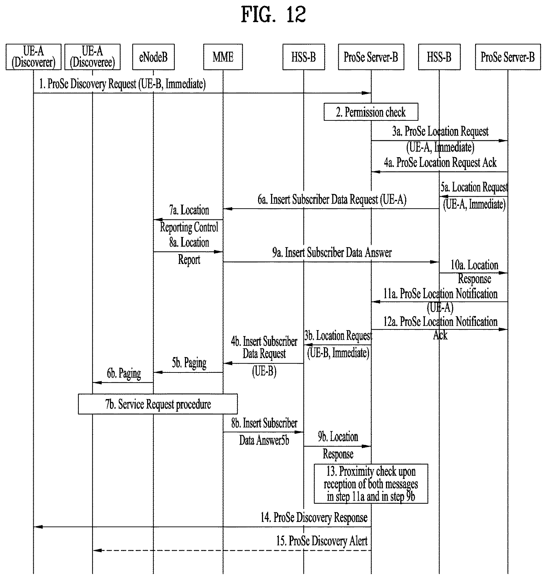

FIG. 12 is a reference view illustrating EPC-level ProSe discovery operation when a discoverer UE and a discoveree UE are present within the same PLMN (both the discoverer UE and the discoveree UE being non-roaming UEs) according to the eighth embodiment of the present invention.

To check whether a discoveree UE (referred to as UE-B hereinafter) is currently present, a discovery UE (referred to as UE-A hereinafter) requests ProSe discovery to the corresponding network, as shown in FIG. 12. It is assumed that UE-A (i.e., discoverer) and UE-B (i.e., discoveree) register with the same PLMN (i.e., PLMN-B during roaming of UE-A from HPLMN (i.e., PLMN-A) in the following processes. In FIG. 12, an HSS-A and a ProSe server-A belong to PLMN-A and an eNodeB, an MME, an HSS-B and a ProSe server-B belong to PLMN-B.

UE-A and UE-B have registered with the ProSe server-B.

In step 1 of FIG. 12, UE-A transmits ProSe Discovery Request message to the ProSe server-B, which is a visited ProSe server, in order to obtain information about proximity to UE-B, that is, whether UE-B can be discovered. Here, UE-A may include, in the ProSe Discovery Request message, information for instructing the ProSe server-B to immediately provide information about proximity to UE-B. In this case, UE-A and UE-B may substantially refer to an application on ProSe-enabled UE-A and an application on ProSe-enabled UE-B.

In step 2 of FIG. 12, the ProSe server-B authorizes the ProSe Discovery Request message transmitted from UE-A and checks whether UE-A/user-A is permitted to discover UE-B/user-B. If UE-A/user-A is not permitted to discover UE-B/user-B, step 14 of FIG. 12 is performed.

Steps 3a to 12a of FIG. 12 are performed in order to obtain the location information of UE-A.

In step 3a of FIG. 12, the ProSe server-B transmits a ProSe Location Request message to the ProSe server-A (i.e. home ProSe server) in order to request the current location information of UE-A. Here, the ProSe server-B may include, in the ProSe Location Request message, information for instructing the ProSe server-A to immediately provide the location information of UE-A to the ProSe server-B.

In step 4a of FIG. 12, the ProSe server-A returns a ProSe Location Request Ack message to the ProSe server-B.

In step 5a of FIG. 12, the Prose server-A transmits a Location Request message to the HSS-A in order to request the current location information of UE-A.

In step 6a of FIG. 12, the HSS-A transmits an Insert Subscriber Data Request message to the MME which serves UE-A. Here, the HSS-A can set an "EPS Location Information Request" bit and a "Current Location Request" bit included in the Insert Subscriber Data Request message such that the MME is requested to provide the most recent location information of UE-A.

In step 7a of FIG. 12, UE-A is assumed to be in a connected state. The MME transmits a Location Reporting Control message to an eNodeB in order to acquire the most recent cell information about UE-A. A request type information element (IE) included in the Location Reporting Control message instructs the eNodeB to immediately report the location information of UE-A.

In step 8a of FIG. 12, the eNodeB returns the most recent cell information about UE-A to the MME by transmitting a Location Report message to the MME.

In step 9a of FIG. 12, the MME transmits, to the HSS-A, an Insert Subscriber Data Answer message including the most recent location information of UE-A.

In step 10a of FIG. 12, the HSS-A transmits a Location Response message including the most recent location information of UE-A to the ProSe server-A.

In step 11a of FIG. 12, the Prose server-A transmits a ProSe Location Notification message to the ProSe server-B in order to provide the current location information of UE-A.

In step 12a of FIG. 12, the ProSe server-B returns a ProSe Location Notification Ack message to the ProSe server-A.

Steps 3b to 9b of FIG. 12 are performed in order to obtain the location information of UE-B.

In step 3b of FIG. 12, the ProSe server-B transmits Location Request message to the HSS-B in order to request the current location information of UE-B.

In step 4b of FIG. 12, the HSS-B transmits an Insert Subscriber Data Request message to the MME which serves UE-B. Here, the HSS-B can set an "EPS Location Information Request" bit and a "Current Location Request" bit included in the Insert Subscriber Data Request message such that the MME is requested to provide the most recent location information of UE-B.

In step 5b of FIG. 12, it is assumed that UE-B is in an idle state. The MME transmits a paging message to each eNodeB belonging to a tracking region in which UE-B has registered.

In step 6b of FIG. 12, UE-B receives a paging message from the eNodeB.

In step 7b of FIG. 12, UE-B initiates a service request procedure according to the received paging message.

In step 8b of FIG. 12, upon acquisition of the cell information of UE-B in step 7b of FIG. 12, the MME transmits, to the HSS-B, an Insert Subscriber Data Answer message including the most recent location information of UE-B.

In step 9b of FIG. 12, the HSS-B transmits, to the ProSe server-B, a Location Response message including the most recent location information of UE-B.

In step 13 of FIG. 12, the ProSe server-B determines whether UE-A and UE-B are in proximity to each other according to the location information of UE-A, the location information of UE-B and proximity criteria on the basis of both the ProSe Location Notification message received in step 11a of FIG. 12 and the Location Response message received in step 9b of FIG. 12.

In step 14 of FIG. 12, the ProSe server-B transmits, to UE-A, ProSe Discovery Response message along with information indicating whether UE-A and UE-B are in proximity to each other. When UE-A/user-A has no authority to discover UE-B/user-B, the ProSe Discovery Response message indicates that the ProSe discovery request from UE-A has been rejected.

In step 15 of FIG. 12, when UE-A is in proximity to UE-B, the ProSe server-B may inform UE-B that UE-A wants to discover UE-B by transmitting a ProSe Discovery Alert message to UE-B.

UE-A and UE-B may attempt to discover each other.

Furthermore, steps (i.e., steps 3a to 12a) for acquiring the location information of UE-A and steps (i.e., steps 3b to 9b) for acquiring the location information of UE-B may be performed in parallel.

When UE-A is in an idle state, steps 5b to 7b of FIG. 12 for obtaining location information of the UE in the idle state may be performed instead of steps 7a and 8a of FIG. 12. When UE-B is in a connected state, steps 7a and 8a of FIG. 12 for obtaining location information of the UE in the connected state may be performed instead of steps 5b to 7b of FIG. 12.

While a case in which UE-A and UE-B are served by the same eNodeB and the same MME is described with reference to FIG. 12 for convenience of description, the aforementioned embodiments can be applied to a case in which UE-A and UE-B are served by different eNodeBs and the same MME, a case in which UE-A and UE-B are served by the same eNodeB and different MMEs or a case in which UE-A and UE-B are served by different eNodeBs and different MMEs.

### 3-3. Ninth embodiment

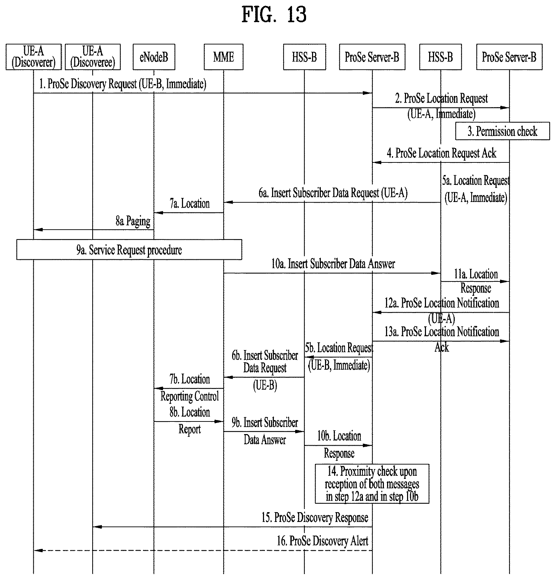

FIG. 13 is a reference view illustrating EPC-level ProSe discovery operation when a discoverer UE and a discoveree UE are present within the same PLMN (both the discoverer UE and the discoveree UE being non-roaming UEs) according to the ninth embodiment of the present invention.

To check whether a discoveree UE (referred to as UE-A hereinafter) is currently present, a discoverer UE (referred to as UE-B hereinafter) makes a ProSe discovery request to the corresponding network, as shown in FIG. 13. It is assumed that UE-B (i.e., discoverer) and UE-A (i.e., discoveree) register with the same PLMN (i.e., PLMN-B during roaming of UE-A from HPLMN (i.e., PLMN-A) in the following processes. In FIG. 13, an HSS-A and a ProSe server-A belong to PLMN-A and an eNodeB, an MME, an HSS-B and a ProSe server-B belong to PLMN-B.

UE-A and UE-B have registered with the ProSe server-B.

In step 1 of FIG. 13, UE-B transmits a ProSe Discovery Request message to the ProSe server-B, which is a home ProSe server, in order to obtain information about proximity to UE-A, that is, whether UE-A can be discovered. Here, UE-B may include, in the ProSe Discovery Request message, information for instructing the ProSe server-B to immediately provide information about proximity to UE-A to UE-B. In this case, UE-A and UE-B may substantially refer to an application on ProSe-enabled UE-A and an application on ProSe-enabled UE-B.

In step 2 of FIG. 13, the ProSe server-B authorizes the ProSe Discovery Request message transmitted from UE-B and transmits a ProSe Location Request message to the ProSe server-A (i.e., home ProSe server) in order to request the current location information of UE-A. Here, the ProSe server-B can include, in the ProSe Location Request message, information for instructing the ProSe server-A to immediately provide the location information of UE-A to the ProSe server-B. Furthermore, the ProSe server-B can include, in the ProSe Location Request message, information indicating that UE-B wants to discover UE-A.

In step 3 of FIG. 13, the ProSe server-A checks whether UE-B/user-B is permitted to discovery UE-A/user-A.

In step 4 of FIG. 13, the ProSe server-A returns, to the ProSe server-B, ProSe Location Request Ack message along with information indicating whether UE-B/user-B is permitted to discover UE-A/user-A. If UE-B/user-B is not permitted to discover UE-A/user-A, step 15 of FIG. 13 is performed.

Steps 5a to 13a of FIG. 13 are performed in order to obtain the location information of UE-A.

In step 5a of FIG. 13, the ProSe server-A transmits a Location Request message to the HSS-A in order to request the current location information of UE-A.

In step 6a of FIG. 13, the HSS-A transmits an Insert Subscriber Data Request message to the MME which serves UE-A. Here, the HSS-A can set an "EPS Location Information Request" bit and a "Current Location Request" bit included in the Insert Subscriber Data Request message such that the MME is requested to provide most recent location information of UE-A.

In step 7a of FIG. 13, it is assumed that UE-A is in an idle state. The MME transmits a paging message to each eNodeB belonging to a tracking region in which UE-A has registered.

In step 8a of FIG. 13, UE-A receives a paging message from the eNodeB.

In step 9a of FIG. 13, UE-A initiates a service request procedure according to the received paging message.

In step 10a of FIG. 13, upon acquisition of the cell information of UE-A in step 9a of FIG. 13, the MME transmits, to the HSS-A, an Insert Subscriber Data Answer message including the most recent location information of UE-A.

In step 11a of FIG. 13, the HSS-A transmits, to the ProSe server-A, a Location Response message including the most recent location information of UE-A.

In step 12a of FIG. 13, the Prose server-A transmits ProSe Location Notification message to the ProSe server-B in order to provide the current location information of UE-A.

In step 13a of FIG. 13, the ProSe server-B returns a ProSe Location Notification Ack message to the ProSe server-A.

Steps 5b to 10b of FIG. 13 are performed in order to obtain the location information of UE-B.

In step 5b of FIG. 13, the ProSe server-B transmits a Location Request message to the HSS-B in order to request the current location information of UE-B.

In step 6b of FIG. 13, UE-B is assumed to be in a connected state. The HSS-B transmits an Insert Subscriber Data Request message to the MME which serves UE-B. Here, the HSS-B can set an "EPS Location Information Request" bit and a "Current Location Request" bit included in the Insert Subscriber Data Request message such that the MME is requested to provide the most recent location information of UE-B.

In step 7b of FIG. 13, the MME transmits a Location Reporting Control message to the eNodeB in order to acquire the most recent cell information about UE-B. A request type information element (IE) included in the Location Reporting Control message instructs the eNodeB to immediately report the location information of UE-B.

In step 8b of FIG. 13, the eNodeB returns the most recent cell information about UE-A to the MME by transmitting a Location Report message to the MME.

In step 9b of FIG. 13, the MME transmits, to the HSS-B, an Insert Subscriber Data Answer message including the most recent location information of UE-B.

In step 10b of FIG. 13, the HSS-B transmits a Location Response message including the most recent location information of UE-B to the ProSe server-B.

In step 14 of FIG. 13, the ProSe server-B determines whether UE-A and UE-B are in proximity to each other according to the location information of UE-A, the location information of UE-B and proximity criteria on the basis of both the ProSe Location Notification message received in step 12a of FIG. 13 and the Location Response message received in step 10b of FIG. 13.

In step 15 of FIG. 12, the ProSe server-B transmits, to UE-B, a ProSe Discovery Response message along with information indicating whether UE-A and UE-B are in proximity to each other. When UE-A/user-A has no authority to discover UE-B/user-B, the ProSe Discovery Response message indicates that the ProSe discovery request from UE-B has been rejected.

In step 16 of FIG. 13, when UE-A is in proximity to UE-B, the ProSe server-B may inform UE-A that UE-B wants to discover UE-A by transmitting ProSe Discovery Alert message to UE-A.

UE-A and UE-B may attempt to discover each other.

Furthermore, steps (i.e., steps 5a to 13a) for acquiring the location information of UE-A and steps (i.e., steps 5b to 10b) for acquiring the location information of UE-B may be performed in parallel.

When UE-A is in a connected state, steps 7b and 8B of FIG. 13 for obtaining location information of the UE in the connected state may be performed instead of steps 7a to 9a of FIG. 13. When UE-B is in an idle state, steps 7a to 9a of FIG. 13 for obtaining location information of the UE in the idle state may be performed instead of steps 7b and 8b of FIG. 13.

While a case in which UE-A and UE-B are served by the same eNodeB and the same MME is described with reference to FIG. 13 for convenience of description, the aforementioned embodiments can be applied to a case in which UE-A and UE-B are served by different eNodeBs and the same MME, a case in which UE-A and UE-B are served by the same eNodeB and different MMEs or a case in which UE-A and UE-B are served by different eNodeBs and different MMEs.

### 3-4. Tenth embodiment

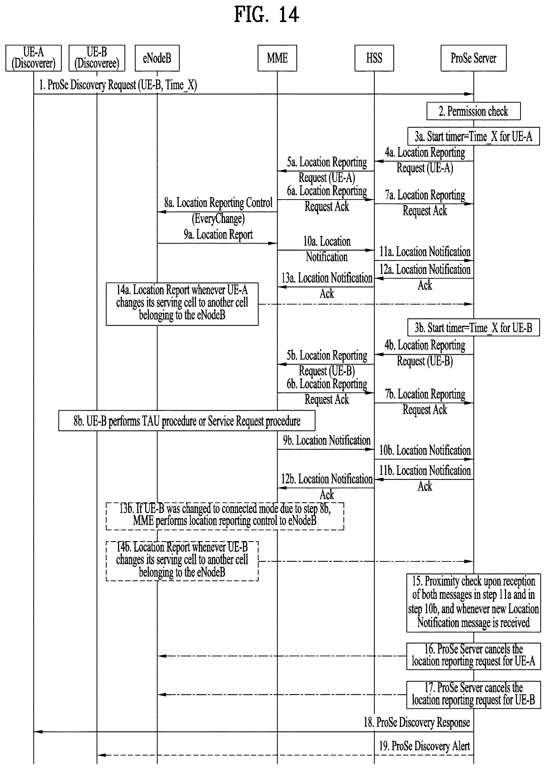

FIG. 14 is a reference view illustrating EPC-level ProSe discovery to which a time window is applied when a discoverer and a discoveree are present in the same PLMN (both the discoverer and discoveree being non-roaming) according to the tenth embodiment of the present invention.

As shown in FIG. 14, UE-A requests ProSe discovery to the network with a time window in order to be alerted when UE-A enters proximity to UE-B with the time window. In the following, it is assumed that both UE-B (i.e., discoverer) and UE-A (i.e., discoveree) are registered with the same PLMN (i.e., PLMN-B during roaming of UE-A from HPLMN thereof (i.e., PLMN-A)) and are non-roaming.

UE-A and UE-B have been registered with the ProSe server.

In step 1 of FIG. 14, UE-A transmits a ProSe Discovery Request message to the ProSe server in order to be alerted of proximity with UE-B within the time window.

Here, UE-A can include, in the ProSe Discovery Request message, time window information (i.e., Time_X of FIG. 14) indicating to the ProSe server how long the request is valid. In this case, UE-A and UE-B may substantially refer to an application on ProSe-enabled UE-A and an application on ProSe-enabled UE-B.

In step 2 of FIG. 14, the ProSe server authorizes the ProSe Discovery Request message transmitted from UE-A and checks whether UE-A/user-A is permitted to discover UE-B/user-B. If UE-A/user-A is not permitted to discover UE-B/user-B, step 16 of FIG. 14 is performed.

Steps 3a to 14a of FIG. 14 are performed in order to obtain the location information of UE-A.

In step 3a of FIG. 14, the ProSe server starts a timer with Time_X for UE-A.

In step 4a of FIG. 14, the ProSe server requests the HSS to start location reporting related to UE-A by transmitting a Location Reporting Request message to the HSS.

In step 5a of FIG. 14, the HSS enables the MME to start location reporting with respect to UE-A by sending a Location Reporting Request message to the MME.

In step 6a of FIG. 14, the MME responds by sending a Location Reporting Request Ack message to the HSS.

In step 7a of FIG. 14, the HSS responds by sending a Location Reporting Request Ack message to the ProSe server.

In step 8a of FIG. 14, it is assumed that UE-A is in a connected mode. The MME transmits a Location Reporting Control message to the eNodeB in order to acquire the most recent cell information about UE-A. In addition, the MME may include, in the Location Reporting Control message, information for instructing the eNodeB to report the current location of UE-A whenever UE-A changes the serving cell thereof to another cell belonging to the eNodeB.

In step 9a of FIG. 14, the eNodeB returns the most recent cell information about UE-A to the MME by transmitting a Location Report message to the MME.

In step 10a of FIG. 14, the MME transmits, to the HSS, a Location Notification message including the most recent location information of UE-A.

In step 11a of FIG. 14, the HSS transmits a Location Notification message including the most recent location information of UE-A to the ProSe server.

In step 12a of FIG. 14, the ProSe server responds by sending a Location Notification Ack message to the HSS.

In step 13a of FIG. 14, the HSS responds by sending a Location Notification Ack message to the MME.

In step 14a of FIG. 14, the eNodeB transmits a Location Report message to the MME whenever UE-A changes the serving cell thereof to another cell belonging to the eNodeB, after step 9a. The updated location information is transmitted from the MME to the ProSe server via the HSS, as described in steps 10a to 13a of FIG. 14.

Steps 3b to 14b are performed in order to obtain the location information of UE-B.

In step 3b of FIG. 14, the ProSe server starts a timer with Time_X for UE-B.

In step 4b of FIG. 14, the ProSe server requests that the HSS start location reporting relating to UE-B by transmitting a Location Reporting Request message to the HSS.

In step 5b of FIG. 14, the HSS enables the MME to start location reporting related to UE-B by transmitting a Location Reporting Request message to the MME.

In step 6b of FIG. 14, the MME responds by sending a Location Reporting Request Ack message to the HSS.

In step 7b of FIG. 14, the HSS responds by sending a Location Reporting Request Ack message to the ProSe server.

In step 8b of FIG. 14, it is assumed that UE-B is in an idle state. The MME waits until UE-B performs i) a tracking area update procedure, ii) a UE triggered service request procedure or iii) a network triggered service request procedure. At some time, UE-B performs the tracking area update procedure or the service request procedure.

In step 9b of FIG. 14, upon acquisition of cell information of UE-B in step 8b of FIG. 14, the MME transmits, to the HSS, a Location Notification message including the most recent location information of UE-B.

In step 10b of FIG. 14, the HSS transmits, to the ProSe server, a Location Notification message including the most recent location information of UE-B.

In step 11b of FIG. 14, the ProSe server responds by sending a Location Notification Ack message to the HSS.

In step 12b of FIG. 14, the HSS responds by sending a Location Notification Ack message to the MME.

In step 13b of FIG. 14, after 8b, if UE-B is changed to a connected mode due to step 8b, the MME performs location reporting control to instruct the eNodeB to report the current location of UE-B whenever UE-B changes the serving cell thereof to another cell belonging to the eNodeB, as described in step 8a.

In step 14b of FIG. 14, if the MMME performs location reporting control on the eNodeB in step 13b, the eNodeB transmits a Location Report message to the MME whenever UE-B changes the serving cell thereof to another cell belonging to the eNodeB. The updated location information is transmitted from the MME to the ProSe server via the HSS as described in steps 9b to 12b of FIG. 14.

In step 15 of FIG. 14, upon reception of both the Location Notification message received in step 11a of FIG. 14 and the Location Notification message received in step 10b of FIG. 14 the ProSe server determines that UE-A and UE-B are in proximity to each other based on the location information of UE-A, the location information of UE-B and proximity criteria. If the ProSe server determines that UE-A is in proximity to UE-B, step 16 of FIG. 14 is performed. Otherwise, the ProSe server performs proximity check whenever a new Location Notification message is received from the HSS. When the ProSe server determines that UE-A and UE-B are in proximity to each other or the timer started in step 3a of FIG. 14 and the timer started in step 3b of FIG. 14 expire, step 16 of FIG. 14 is performed.

In step 16 of FIG. 14, the ProSe server requests the HSS to stop location reporting with respect to UE-A. Such location reporting cancellation may be applied to the MME and, as necessary, to the eNodeB.

In step 17 of FIG. 14, the ProSe server requests the HSS to stop location reporting with respect to UE-B. Such location reporting cancellation may be applied to the MME and, as necessary, to the eNodeB.

In step 18 of FIG. 14, the ProSe server transmits, to UE-A, a ProSe Discovery Response message along with information indicating whether UE-A and UE-B are in proximity to each other. If UE-A/user-A has no authority to discover UE-B/user-B, the ProSe Discovery Response message indicates that the ProSe discovery request from UE-A is rejected.

In step 19 of FIG. 14, if UE-A and UE-B are in proximity to each other, the ProSe server may inform UE-B that UE-A wants to discover UE-B by sending a ProSe Discovery Alert message to UE-B.

UE-A and UE-B may attempt to discover each other.

Furthermore, steps (i.e., steps 3a to 14a) for acquiring the location information of UE-A and steps (i.e., steps 3b to 14b) for acquiring the location of UE-B may be performed in parallel.

In addition, the ProSe server may start a single timer with Time X for UE-A and UE-B, instead of starting respective timers for UE-A and UE-B.

When UE-A is in an idle state, steps 8b to 14b of FIG. 14 for obtaining location information of the UE in the idle state may be performed instead of steps 8a and 14a of FIG. 14. When UE-B is in a connected state, steps 8a and 14a of FIG. 14 for obtaining location information of the UE in the connected state may be performed instead of steps 8b to 14b of FIG. 14.

While a case in which UE-A and UE-B are served by the same eNodeB and the same MME is described with reference to FIG. 14 for convenience of description, the aforementioned embodiments can be applied to a case in which UE-A and UE-B are served by different eNodeBs and the same MME, a case in which UE-A and UE-B are served by the same eNodeB and different MMEs or a case in which UE-A and UE-B are served by different eNodeBs and different MMEs.

Furthermore, steps 16 and 17 of FIG. 14 may be performed in parallel with steps 18 and 19 of FIG. 14.

In addition, steps 16 and 17 of FIG. 14 can be performed when the ProSe server determines that UE-A and UE-B are in proximity to each other. However, steps 16 and 17 of FIG. 14 may be performed upon reception of a UE-B discovery acknowledgement message from UE-A after step 18. Alternatively, steps 16 and 17 of FIG. 14 may be performed upon reception of a UE-A discovery acknowledgment message from UE-B after step 19.

### 3-5. Eleventh embodiment

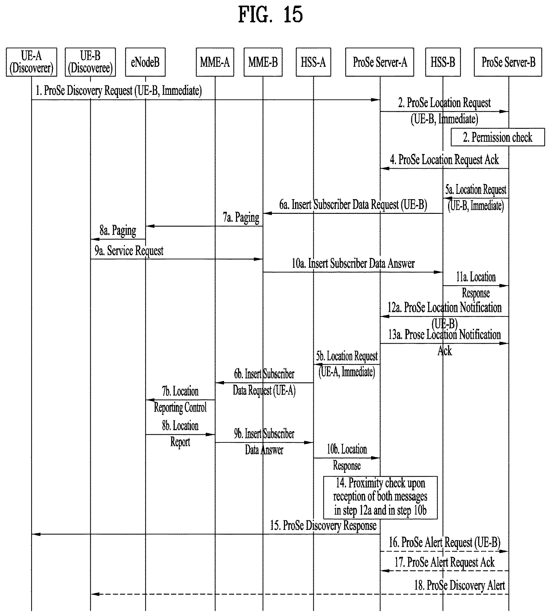

FIG. 15 is a reference view illustrating EPC-level ProSe discovery operation when a discoverer and a discoveree are respectively present in different PLMNs (both the discoverer and the discoveree being non-roaming) according to the eleventh embodiment of the present invention.

To check whether a UE (referred to as UE-B hereinafter) which is currently discoverable is present, a discovery UE (referred to as UE-A hereinafter) makes a ProSe discovery request to the network, as shown in FIG. 15. It is assumed that UE-A (i.e., discoverer) and UE-B (i.e., discoveree) are respectively registered with different PLMNs (i.e., PLMN-A and PLMN-B) in the following processes. In FIG. 15, UE-A and UE-B are non-roaming UEs, an MME-A, an HSS-A and a ProSe server-A belong to PLMN-A and an MME-B, an HSS-B and a ProSe server-B belong to PLMN-B.

UE-A has registered with the ProSe server-A and UE-B has registered with the ProSe server-B.

In step 1 of FIG. 15, UE-A transmits a ProSe Discovery Request message to the ProSe server-A in order to obtain information about proximity to UE-B, that is, whether UE-B is discoverable or not. Here, UE-A may include, in the ProSe Discovery Request message, information for instructing the ProSe server-A to immediately provide information about proximity to UE-B to UE-A. In this case, UE-A and UE-B may substantially refer to an application on ProSe-enabled UE-A and an application on ProSe-enabled UE-B.

In step 2 of FIG. 15, the ProSe server-A authorizes the ProSe Discovery Request message transmitted from UE-A and transmits a ProSe Location Request message to the ProSe server-B (i.e. home ProSe server) in order to request the current location information of UE-B. Here, the ProSe server-A may include, in the ProSe Location Request message, information for instructing the ProSe server-B to immediately provide the location information of UE-B to the ProSe server-A. In addition, the ProSe server-A may include information indicating that UE-A wants to discover UE-B in the ProSe Location Request message. This is because the discoveree, that is UE-B, has not been registered with ProSe server-A and thus the ProSe server-A decides that network sharing information is needed to check whether UE-A is in proximity to UE-B. Accordingly, the ProSe server-A may include, in the Prose Location Request message, information for instructing the ProSe server-B to provide the network sharing information together with the location information of UE-B to the ProSe server-A.

In step 3 of FIG. 15, the ProSe server-B checks whether UE-A/user-A is permitted to discover UE-B/user-B.

In step 4 of FIG. 15, the ProSe server-B returns, to the ProSe server-A, a ProSe Location Request Ack message along with information indicating whether UE-A/user-A is permitted to discover UE-B/user-B. If UE-A/user-A is not permitted to discover UE-B/user-B, step 15 of FIG. 15 is performed.

Steps 5a to 13a of FIG. 15 are performed in order to obtain the location information of UE-B.

In step 5a of FIG. 15, the ProSe server-B transmits a Location Request message to the HSS-B in order to request the current location information of UE-B. Here, the ProSe server-B may include, in the Location Request message, information for instructing the HSS-B to provide the network sharing information along with the location information of UE-B to the ProSe server-B.

In step 6a of FIG. 15, the HSS-B transmits an Insert Subscriber Data Request message to the MME-B which serves UE-B. Here, the HSS-B can set an "EPS Location Information Request" bit and a "Current Location Request" bit included in the Insert Subscriber Data Request message to ask the MME-B to provide the most recent location information of UE-B. In addition, the HSS-B may set a new bit of "Network Sharing Information Request" in the Insert Subscriber Data Request message in order to instruct the MME-B to provide the network sharing information to the HSS-B.

In step 7a of FIG. 15, it is assumed that UE-B is in an idle state. The MME-B transmits a paging message to each eNodeB belonging to a tracking region in which UE-B is registered.

In step 8a of FIG. 15, UE-B receives a paging message from the eNodeB.

In step 9a of FIG. 15, UE-B initiates a service request procedure according to the received paging message.

In step 10a of FIG. 15, upon acquisition of the cell information of UE-B in step 9a of FIG. 15, the MME transmits, to the HSS-B, an Insert Subscriber Data Answer message including the most recent location information of UE-B. When the eNodeB which serves UE-B is a shared radio access network (RAN), the MME-B may include, in the Insert Subscriber Data Answer message, network sharing information about broadcast PLMNs in relation to the eNodeB which serves UE-B. The information about broadcast PLMNs may be a list of identifiers of PLMNs broadcast by the eNodeB which serves UE-B.

In addition, the MME may unconditionally include the network sharing information in the response message, that is, the Insert Subscriber Data Answer message and transmit the Insert Subscriber Data Answer message including the network sharing information to the HSS when the eNodeB which serves UE-B is a shared RAN even if the "Network Sharing Information Request" bit for requesting the network sharing information included in the Insert Subscriber Data Request message is neither set nor present. This operation can be equally applied to step 9b of FIG. 15.

In step 11a of FIG. 15, the HSS-B provides the most recent location information of UE-B to the ProSe server-B and, when the list of identifiers of PLMNs is present, transmits a Location Response message in order to provide the identifier list.

In step 12a of FIG. 15, the ProSe server-B provides the most recent location information of UE-B to the ProSe server-A and, when the PLMN identifier list is present, transmits ProSe Location Notification message in order to provide the PLMN identifier list.

In step 13a of FIG. 15, the ProSe server-A returns a ProSe Location Notification Ack message to the ProSe server-B.

Steps 5b to 10b of FIG. 15 are performed in order to obtain the location information of UE-A.

In step 5b of FIG. 15, the ProSe server-A transmits a Location Request message to the HSS-A in order to request the current location information of UE-A. This is because the discoveree, that is UE-B, has not been registered with ProSe server-A and thus the ProSe server-A determines that network sharing information is necessary to check whether UE-A is in proximity to UE-B. Accordingly, the ProSe server-A may include, in the ProSe Location Request message, information for instructing the HSS-A to provide the network sharing information along with the location information of UE-B to the ProSe server-A.

In step 6b of FIG. 15, the HSS-A transmits an Insert Subscriber Data Request message to the MME-A which serves UE-A. Here, the HSS-A can set an "EPS Location Information Request" bit and a "Current Location Request" bit included in the Insert Subscriber Data Request message to ask the MME-A to provide the most recent location information of UE-A. In addition, the HSS-A may set a new bit of "Network Sharing Information Request" in the Insert Subscriber Data Request message in order to instruct the MME-A to provide the network sharing information to the HSS-A.

In step 7b of FIG. 15, it is assumed that UE-A is in a connected state. The MME-A transmits a Location Reporting Control message to the eNodeB in order to acquire the most recent cell information about UE-A. A request type information element (IE) included in the Location Reporting Control message instructs the eNodeB to immediately report the location information of UE-A.

In step 8b of FIG. 15, the eNodeB returns the most recent cell information about UE-A to the MME-A by transmitting a Location Report message to the MME.

In step 9b of FIG. 15, the MME transmits, to the HSS-A, an Insert Subscriber Data Answer message including the most recent location information of UE-A. When the eNodeB which serves UE-A is a shared RAN, the MME-A may include, in the Insert Subscriber Data Answer message, network sharing information about broadcast PLMNs related to the eNodeB which serves UE-A. Here, information about broadcast PLMNs may be a list of identifiers of PLMNs broadcast by the eNodeB which serves UE-A.

In step 10b of FIG. 15, the HSS-A provides the most recent location information of UE-A to the ProSe server-A and, when the list of identifiers of PLMNs is present, transmits a Location Response message including the identifier list.

In step 14 of FIG. 15, the ProSe server-A determines whether UE-A and UE-B are in proximity to each other according to the location information of UE-A, the location information of UE-B, the network sharing information about the broadcast PLMNs and proximity criteria on the basis of both the ProSe Location Notification message received in step 12a of FIG. 15 and the Location Response message received in step 10b of FIG. 15. Here, the network sharing information may be configured by the ProSe server or acquired by the ProSe server from another network node or another UE, instead of being provided by the MME.

In step 15 of FIG. 15, the ProSe server-A transmits, to UE-A, a ProSe Discovery Response message along with information indicating whether UE-A and UE-B are in proximity to each other. When UE-A/user-A is not permitted to discover UE-B/user-B, the ProSe Discovery Response message indicates that the ProSe discovery request from UE-A is rejected.

In step 16 of FIG. 15, when UE-A is in proximity to UE-B, the ProSe server-A may request the ProSe server-B to inform UE-B that UE-A wants to discover UE-B by transmitting a ProSe Discovery Alert message to the ProSe server-B.

UE-A and UE-B may attempt to discover each other.

Furthermore, steps (i.e., steps 5a to 13a) for acquiring the location information of UE-A and steps (i.e., steps 5b to 10b) for acquiring the location information of UE-B may be performed in parallel.

Moreover, steps (i.e., steps 5a to 13a) for acquiring the location information of UE-B and steps (i.e., steps 5b to 10b) for acquiring the location information of UE-A may be performed in parallel.

When UE-A is in a connected state, steps 7b and 8b of FIG. 15 for obtaining location information of the UE in the connected state may be performed instead of steps 7a to 9a of FIG. 15. When UE-B is in an idle state, steps 7a to 9a of FIG. 15 for obtaining location information of the UE in the idle state may be performed instead of steps 7b and 8b of FIG. 15.

The embodiment described with reference to FIG. 15 can be applied to a case in which UE-A and UE-B are served by the same eNodeB and the same MME, a case in which UE-A and UE-B are served by different eNodeBs and the same MME, a case in which UE-A and UE-B are served by the same eNodeB and different MMEs and a case in which UE-A and UE-B are served by different eNodeBs and different MMEs.

### 3-6. Twelfth embodiment

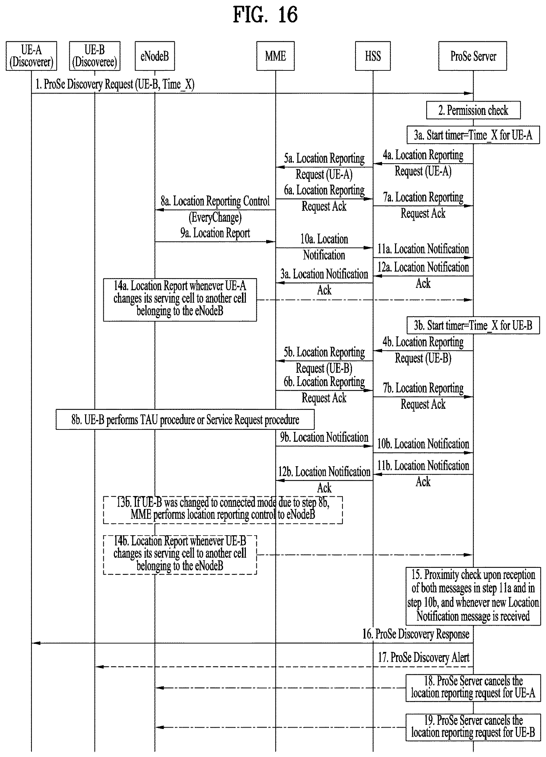

FIG. 16 illustrates EPC-level ProSe discovery to which a time window is applied according to the twelfth embodiment of the present invention.

As shown in FIG. 16, UE-A requests ProSe discovery to the network with a time window in order to be alerted when UE-A enters proximity with UE-B in the time window. It is assumed that both UE-A (i.e., discoverer) and UE-B (i.e., discoveree) are registered with the same PLMN and are non-roaming in the following.

UE-A and UE-B have been registered with a ProSe server.

In step 1 of FIG. 16, UE-A sends a ProSe Discovery Request message to the ProSe server in order to be alerted of proximity with UE-B in the time window. Here, UE-A can include, in the ProSe Discovery Request message, time window information (i.e., Time X of FIG. 16) indicating to the ProSe server how long the request is valid. In this case, UE-A and UE-B may substantially refer to an application on ProSe-enabled UE-A and an application on ProSe-enabled UE-B.

In step 2 of FIG. 16, the ProSe server authorizes the ProSe Discovery Request message transmitted from UE-A and checks whether UE-A/user-A is permitted to discover UE-B/user-B. If UE-A/user-A is not permitted to discover UE-B/user-B, step 16 of FIG. 16 is performed.

Steps 3a to 14a of FIG. 16 are performed in order to obtain the location information of UE-A.

In step 3a of FIG. 16, the ProSe server starts a timer with Time_X for UE-A.

In step 4a of FIG. 16, the ProSe server requests the HSS to start location reporting with respect to UE-A by transmitting a Location Reporting Request message to the HSS.

In step 5a of FIG. 16, the HSS enables the MME to start location reporting with respect to UE-A by transmitting a Location Reporting Request message to the MME.

In step 6a of FIG. 16, the MME responds by sending a Location Reporting Request Ack message to the HSS. Here, the MME may include, in the Location Reporting Request Ack message, the most recent location information about UE-A stored therein (e.g., last known ECGI stored in MM context of the UE, TAI of the last TAU (e.g., TAI of the TA in which the last Tracking Area Update was initiated) and/or a current tracking area list). This can be equally applied to the following embodiments of the present invention.

In step 7a of FIG. 16, the HSS responds by sending a Location Reporting Request Ack message to the ProSe server.

In step 8a of FIG. 16, it is assumed that UE-A is in a connected mode. The MME transmits a Location Reporting Control message to the eNodeB in order to acquire the most recent cell information about UE-A. In addition, the MME may include, in the Location Reporting Control message, information for instructing the eNodeB to report the current location of UE-A whenever UE-A changes the serving cell thereof to another cell belonging to the eNodeB.

In step 9a of FIG. 16, the eNodeB returns the most recent cell information about UE-A to the MME by transmitting a Location Report message to the MME.

In step 10a of FIG. 16, the MME transmits, to the HSS, a Location Notification message including the most recent location information of UE-A.

In step 11a of FIG. 16, the HSS transmits a Location Notification message including the most recent location information of UE-A to the ProSe server.

In step 12a of FIG. 16, the ProSe server responds by sending a Location Notification Ack message to the HSS.

In step 13a of FIG. 16, the HSS responds by sending a Location Notification Ack message to the MME.

In step 14a of FIG. 16, the eNodeB transmits a Location Report message to the MME whenever UE-A changes the serving cell thereof to another cell belonging to the eNodeB after step 9a. The updated location information is transmitted from the MME to the ProSe server via the HSS, as described in steps 10a to 13a of FIG. 16.

Steps 3b to 14b of FIG. 16 are performed in order to obtain the location information of UE-B.

In step 3b of FIG. 16, the ProSe server starts a timer with Time_X for UE-B.

In step 4b of FIG. 16, the ProSe server requests the HSS to start location reporting with respect to UE-B by transmitting a Location Reporting Request message to the HSS.

In step 5b of FIG. 16, the HSS enables the MME to start location reporting with respect to UE-B by transmitting a Location Reporting Request message to the MME.

In step 6b of FIG. 16, the MME responds by sending a Location Reporting Request Ack message to the HSS.

Here, the MME may include, in the Location Reporting Request Ack message, the most recent location information about UE-A stored therein (e.g., last known ECGI stored in MM context of the UE, TAI of the last TAU (e.g., TAI of the TA in which the last Tracking Area Update was initiated) and/or a current tracking area list). This can be equally applied to the following embodiments of the present invention.

In step 7b of FIG. 16, the HSS responds by sending a Location Reporting Request Ack message to the ProSe server.

In step 8b of FIG. 16, it is assumed that UE-B is in an idle state. The MME waits until UE-B performs i) a tracking area update procedure, ii) a UE triggered service request procedure or iii) a network triggered service request procedure. At some time, UE-B performs the tracking area update procedure or the service request procedure.

In step 9b of FIG. 16, upon acquisition of cell information of UE-B in step 8b of FIG. 14, the MME transmits, to the HSS, a Location Notification message including the most recent location information of UE-B.

In step 10b of FIG. 16, the HSS transmits, to the ProSe server, a Location Notification message including the most recent location information of UE-B.

In step 11b of FIG. 16, the ProSe server responds by sending a Location Notification Ack message to the HSS.

In step 12b of FIG. 16, the HSS responds by sending a Location Notification Ack message to the MME.

In step 13b of FIG. 16, after step 8b, if UE-B is changed to a connected mode due to step 8b, the MME performs location reporting control to instruct the eNodeB to report the current location of UE-B whenever UE-B changes the serving cell thereof to another cell belonging to the eNodeB, as described in step 8a.

In step 14b of FIG. 16, if the MME performs location reporting control on the eNodeB in step 13b, the eNodeB transmits a Location Report message to the MME whenever UE-B changes the serving cell thereof to another cell belonging to the eNodeB. The updated location information is transmitted from the MME to the ProSe server via the HSS as described in steps 9b to 12b of FIG. 16.

In step 15 of FIG. 16, the ProSe server determines whether UE-A and UE-B are in proximity to each other according to the location information of UE-A, the location information of UE-B and proximity criteria on the basis of both the Location Notification message received in step 11a of FIG. 16 and the Location Notification message received in step 10b of FIG. 16. When the ProSe server determines that UE-A is in proximity to UE-B, step 16 of FIG. 16 is performed. When the ProSe server determines that UE-A is not in proximity to UE-B, the ProSe server performs proximity check whenever a new Location Notification message is received from the HSS. When the ProSe server determines that UE-A and UE-B are in proximity to each other or the timer started in step 3a of FIG. 16 and the timer started in step 3b of FIG. 16 expire, step 16 of FIG. 16 is performed.

If the MME has included the most recent location information about UE-A in the Location Reporting Request Ack message in step 6a of FIG. 16, the ProSe server may perform initial proximity determination/checking operation on the basis of the location information of UE-A, included in the Location Reporting Request Ack Message of step 7a, upon reception of the Location Reporting Request Ack Message of step 7a instead of the Location Notification Message of FIG. 11a of FIG. 16.

If the MME has included the most recent location information about UE-B in the Location Reporting Request Ack message in step 6b of FIG. 16, the ProSe server may perform initial proximity determination/checking operation on the basis of the location information of UE-B, included in the Location Reporting Request Ack Message of step 7b, upon reception of the Location Reporting Request Ack Message of step 7b instead of the Location Notification Message of FIG. 10b of FIG. 16.

Details related to initial proximity determination/checking operation described in the present embodiment can be equally applied to the following embodiments.

In addition, the ProSe server may selectively perform the following optimization operation. (Operation described below can be equally applied to the following embodiments of the present invention.)

That is, when the ProSe server recognizes that UE-A and UE-B are spaced apart from each other by a predetermined distance or more from the initial proximity determination/checking operation, the ProSe server can determine that the two UEs cannot be in proximity to each other within the time window (e.g. Time X).

Accordingly, the ProSe server can determine i) that proximity check is not performed any longer, ii) stop/cancellation of proximity check, iii) stop/cancellation of proximity request procedure/operation, iv) stop/cancellation of location reporting procedure/operation or v) stop/cancellation of ProSe discovery operation.

To this end, the ProSe server can transmit, to UE-A which performs ProSe discovery, a response message to the ProSe Discovery Request message received in step 1 of FIG. 16, e.g., a ProSe Discovery Response message, and perform steps 18 and 19 of FIG. 16. Here, the response message can explicitly or implicitly include i) information indicating that UE-A and UE-B are not in proximity to each other, ii) information indicating that UE-A and UE-B cannot be in proximity to each other and/or iii) information indicating that UE-A and UE-B are spaced apart from each other by a predetermined distance or more. Here, while the "predetermined distance" may be an actual distance value, the predetermined distance may be information by which a distance between the two UEs or a degree of separation between the two UEs can be inferred. The "predetermined distance" information may be configured in the ProSe server (in the form of proximity criteria, for example) or acquired by the ProSe server from another network node.

Furthermore, the optimization operation is performed by the ProSe server, which is a network node that checks/determines proximity in the present embodiment. However, when a network node (i.e., network node that checks/determines proximity) other than the ProSe server is present, the optimization operation may be performed by the network node.

In addition, as a method of tracking/reporting the location of a UE, methods (e.g., LCS (Location Services), SUPL (Secure User Plane Location) and the like) other than the method of the present embodiment can be used. Furthermore, the aforementioned optimization operation can be performed only during initial proximity determination/check or whenever proximity determination/check is performed.

In step 16 of FIG. 16, the ProSe server transmits, to UE-A, a ProSe Discovery Response message along with information indicating whether UE-A and UE-B are in proximity to each other. If UE-A/user-A is not permitted to discover UE-B/user-B, the ProSe Discovery Response message indicates that the ProSe discovery request from UE-A is rejected.

In step 17 of FIG. 16, if UE-A and UE-B are in proximity to each other, the ProSe server may notify UE-B that UE-A wants to discover UE-B by transmitting a ProSe Discovery Alert message to UE-B.

UE-A and UE-B may attempt to discover each other.

In step 18 of FIG. 16, the ProSe server requests the HSS to stop location reporting with respect to UE-A. Such location reporting cancellation may be applied to the MME and, as necessary, to the eNodeB.

In step 19 of FIG. 16, the ProSe server requests the HSS to stop location reporting with respect to UE-B. Such location reporting cancellation may be applied to the MME and, as necessary, to the eNodeB.

Furthermore, steps (i.e., steps 3a to 14a) for acquiring the location information of UE-A and steps (i.e., steps 3b to 14b) for acquiring the location of UE-B may be performed in parallel.

In addition, the ProSe server may start a single timer with Time_X for UE-A and UE-B, instead of starting respective timers for UE-A and UE-B.

When UE-A is in an idle state, steps 8b to 14b of FIG. 16 for obtaining location information of the UE in the idle state may be performed instead of steps 8a and 14a of FIG. 16. When UE-B is in a connected state, steps 8a and 14a of FIG. 16 for obtaining location information of the UE in the connected state may be performed instead of steps 8b to 14b of FIG. 16.

While a case in which UE-A and UE-B are served by the same eNodeB and the same MME is described with reference to FIG. 16 for convenience of description, the aforementioned embodiments can be applied to a case in which UE-A and UE-B are served by different eNodeBs and the same MME, a case in which UE-A and UE-B are served by the same eNodeB and different MMEs or a case in which UE-A and UE-B are served by different eNodeBs and different MMEs.

### 3-7. Thirteenth embodiment

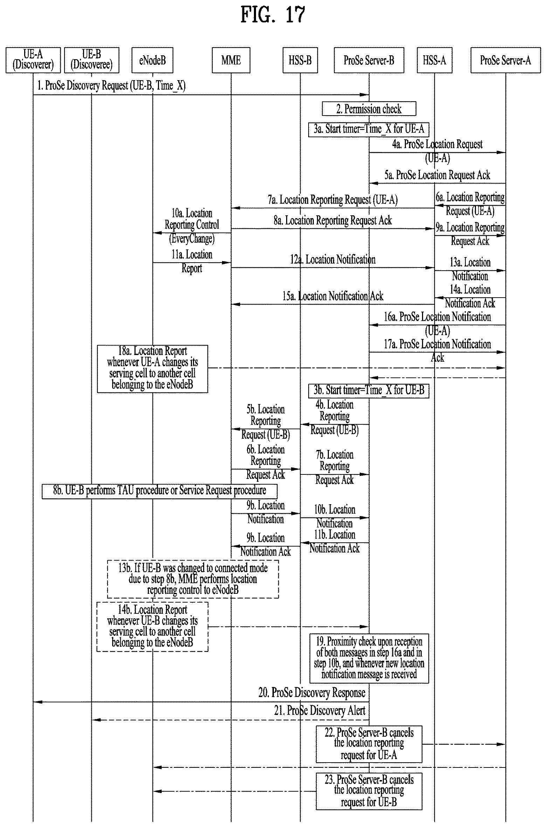

FIG. 17 illustrates EPC-level ProSe discovery with a time window set thereto when a discoverer and a discoveree are registered with the same PLMN and the discoverer is roaming according to the thirteenth embodiment of the present invention.

As shown in FIG. 17, UE-A requests ProSe discovery to the network with the time window in order to be alerted when UE-A enters proximity with UE-B in the time window. It is assumed that both UE-A (i.e., discoverer) and UE-B (i.e., discoveree) are registered with the same PLMN (i.e., PLMN-B, UE-A roaming from HPLMN thereof, that is, PLMN-A) in the following description. In FIG. 17, an HSS-A and a ProSe server-A belong to PLMN-A and an eNodeB, an HSS-B and a ProSe server-B belong to PLMN-B.

UE-A and UE-B have been registered with the ProSe server-B.

In step 1 of FIG. 17, UE-A sends a ProSe Discovery Request message to the ProSe server-B, that is, a visited ProSe server of UE-A in order to be alerted of proximity with UE-B in the time window. Here, UE-A can include, in the ProSe Discovery Request message, time window information (i.e., Time_X of FIG. 17) indicating to the ProSe server-B how long the request is valid. In this case, UE-A and UE-B may substantially refer to an application on ProSe-enabled UE-A and an application on ProSe-enabled UE-B.

In step 2 of FIG. 17, the ProSe server authorizes the ProSe Discovery Request message transmitted from UE-A and checks whether UE-A/user-A is permitted to discover UE-B/user-B. If UE-A/user-A is not permitted to discover UE-B/user-B, step 20 of FIG. 17 is performed.

Steps 3a to 18a of FIG. 17 are performed in order to obtain the location information of UE-A.

In step 3a of FIG. 17, the ProSe server-B starts a timer with Time_X for UE-A.

In step 4a of FIG. 17, the ProSe server-B requests location reporting with respect to UE-A by sending a ProSe Location Reporting Request message to the ProSe server-A (i.e., the home ProSe server of UE-A).

In step 5a of FIG. 17, the ProSe server-A returns a ProSe Location Request Ack message to the ProSe server-B.

In step 6a of FIG. 17, the ProSe server-A requests the HSS-A to start location reporting with respect to UE-A by transmitting a Location Reporting Request message to the HSS-A.

In step 7a of FIG. 17, the HSS-A enables the MME to start location reporting with respect to UE-A by transmitting a Location Reporting Request message to the MME.

In step 8a of FIG. 17, the MME responds by sending a Location Reporting Request Ack message to the HSS.

In step 9a of FIG. 17, the HSS-A responds by sending a Location Reporting Request Ack message to the ProSe server-A.

In step 10a of FIG. 17, it is assumed that UE-A is in a connected mode. The MME transmits a Location Reporting Control message to the eNodeB in order to acquire the most recent cell information about UE-A. In addition, the MME may include, in the Location Reporting Control message, information for instructing the eNodeB to report the current location of UE-A whenever UE-A changes the serving cell thereof to another cell belonging to the eNodeB.

In step 11a of FIG. 17, the eNodeB returns the most recent cell information about UE-A to the MME by transmitting a Location Report message to the MME.

In step 12a of FIG. 17, the MME transmits, to the HSS-A, a Location Notification message including the most recent location information of UE-A.

In step 13a of FIG. 17, the HSS-A transmits a Location Notification message including the most recent location information of UE-A to the ProSe server-A.

In step 14a of FIG. 17, the ProSe server-A responds by sending a Location Notification Ack message to the HSS-A.

In step 15a of FIG. 17, the HSS-A responds by sending a Location Notification Ack message to the MME.

In step 16a of FIG. 17, the ProSe server-A transmits a ProSe Location Notification message to the ProSe server-B in order to provide the current location information of UE-A.

In step 17a of FIG. 17, the ProSe server-B returns a ProSe Location Notification Ack message to the ProSe server-A.

In step 18a of FIG. 17, the eNodeB transmits a Location Report message to the MME whenever UE-A changes the serving cell thereof to another cell belonging to the eNodeB after step 11a. The updated location information is transmitted from the MME to the ProSe server-A through the HSS-A, as described in steps 12a to 15a of FIG. 17. If the ProSe server-A receives the updated location information, the received information can be forwarded to the ProSe server-B as described in steps 16a and 17a of FIG. 17.

Steps 3b to 14b of FIG. 17 are performed in order to obtain the location information of UE-B.

In step 3b of FIG. 17, the ProSe server-B starts a timer with Time_X for UE-B.

In step 4b of FIG. 17, the ProSe server-B requests the HSS-B to start location reporting with respect to UE-B by transmitting a Location Reporting Request message to the HSS-B.

In step 5b of FIG. 17, the HSS-B enables the MME to start location reporting with respect to UE-B by transmitting a Location Reporting Request message to the MME.

In step 6b of FIG. 17, the MME responds by sending a Location Reporting Request Ack message to the HSS-B.

In step 7b of FIG. 17, the HSS-B responds by sending a Location Reporting Request Ack message to the ProSe server-B.

In step 8b of FIG. 17, it is assumed that UE-B is in an idle state. The MME waits until UE-B performs i) a tracking area update procedure, ii) a UE triggered service request procedure or iii) a network triggered service request procedure. Then, UE-B performs the tracking area update procedure or the service request procedure.

In step 9b of FIG. 17, upon acquisition of cell information of UE-B in step 8b of FIG. 17, the MME transmits, to the HSS-B, a Location Notification message including the most recent location information of UE-B.

In step 10b of FIG. 17, the HSS-B transmits, to the ProSe server-B, a Location Notification message including the most recent location information of UE-B.

In step 11b of FIG. 17, the ProSe server-B responds by sending a Location Notification Ack message to the HSS-B.

In step 12b of FIG. 17, the HSS-B responds by sending a Location Notification Ack message to the MME.

In step 13b of FIG. 17, after step 8b, if UE-B is changed to a connected mode due to step 8b, the MME performs location reporting control to instruct the eNodeB to report the current location of UE-B whenever UE-B changes the serving cell thereof to another cell belonging to the eNodeB, as described in step 10a.

In step 14b of FIG. 17, if the MME performs location reporting control on the eNodeB in step 13b, the eNodeB transmits a Location Report message to the MME whenever UE-B changes the serving cell thereof to another cell belonging to the eNodeB. The updated location information is transmitted from the MME to the ProSe server-B through the HSS-B as described in steps 9b to 12b of FIG. 17.

In step 19 of FIG. 17, the ProSe server-B determines whether UE-A and UE-B are in proximity to each other according to the location information of UE-A, the location information of UE-B and proximity criteria on the basis of both the ProSe Location Notification message received in step 16a of FIG. 17 and the Location Notification message received in step 10b of FIG. 17. When the ProSe server-B determines that UE-A is in proximity to UE-B, step 20 of FIG. 17 is performed. When the ProSe server-B determines that UE-A is not in proximity to UE-B, the ProSe server-B performs proximity check whenever a new Location Notification message is received from the ProSe server-A or the HSS-B. When the ProSe server-B determines that UE-A and UE-B are in proximity to each other or the timer started in step 3a of FIG. 17 and the timer started in step 3b of FIG. 17 expire, step 20 of FIG. 17 is performed.

In step 20 of FIG. 17, the ProSe server-B transmits, to UE-A, a ProSe Discovery Response message along with information indicating whether UE-A and UE-B are in proximity to each other. If UE-A/user-A is not permitted to discover UE-B/user-B, the ProSe Discovery Response message indicates that the ProSe discovery request from UE-A is rejected.

In step 21 of FIG. 17, if UE-A and UE-B are in proximity to each other, the ProSe server-B may notify UE-B that UE-A wants to discover UE-B by transmitting a ProSe Discovery Alert message to UE-B.

UE-A and UE-B may attempt to discover each other.

In step 22 of FIG. 17, the ProSe server-B requests the ProSe server-A to stop location reporting with respect to UE-A. Such location reporting cancellation may be applied to the MME and, as necessary, to the eNodeB through the HSS-A.

In step 23 of FIG. 17, the ProSe server-B requests the HSS-B to stop location reporting with respect to UE-B. Such location reporting cancellation may be applied to the MME and, as necessary, to the eNodeB.

Furthermore, steps (i.e., steps 3a to 18a) for acquiring the location information of UE-A and steps (i.e., steps 3b to 14b) for acquiring the location of UE-B may be performed in parallel.

In addition, the ProSe server-B may start a single timer with Time X for UE-A and UE-B, instead of starting respective timers for UE-A and UE-B.

When UE-A is in an idle state, steps 8b to 14b of FIG. 17 for obtaining location information of the UE in the idle state may be performed instead of steps 10a to 15a and 18a of FIG. 17. When UE-B is in a connected state, steps 10a to 15a and 18a of FIG. 17 for obtaining location information of the UE in the connected state may be performed instead of steps 8b to 14b of FIG. 17.

While a case in which UE-A and UE-B are served by the same eNodeB and the same MME is described with reference to FIG. 17 for convenience of description, the aforementioned embodiments can be applied to a case in which UE-A and UE-B are served by different eNodeBs and the same MME, a case in which UE-A and UE-B are served by the same eNodeB and different MMEs or a case in which UE-A and UE-B are served by different eNodeBs and different MMEs.

### 3-8. Fourteenth embodiment

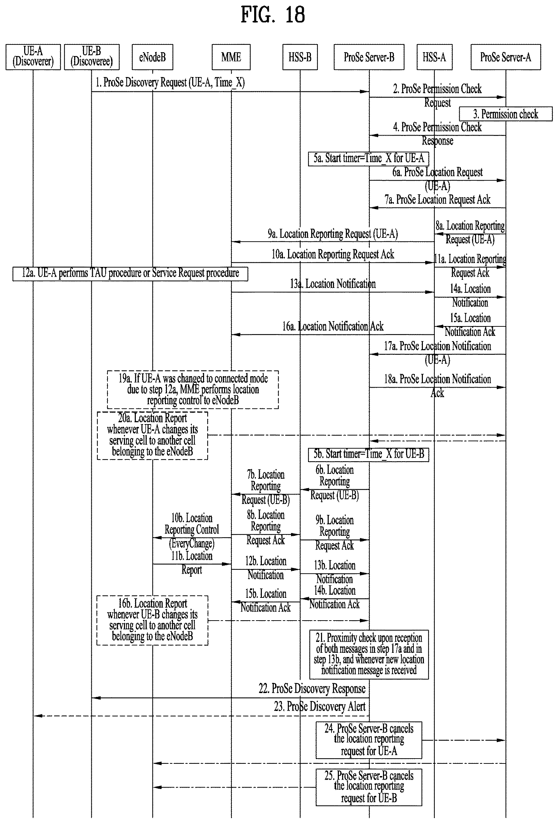

FIG. 18 illustrates EPC-level ProSe discovery with a time window set thereto when a discoverer and a discoveree are registered with the same PLMN and the discoveree is roaming according to the fourteenth embodiment of the present invention.

As shown in FIG. 18, UE-A requests ProSe discovery to the network with the time window in order to be alerted when UE-A enters proximity with UE-A within the time window. It is assumed that both UE-B (i.e., discoverer) and UE-A (i.e., discoveree) are registered with the same PLMN (i.e., PLMN-B, UE-A roaming from HPLMN thereof, that is, PLMN-A) in the following description. In FIG. 18, an HSS-A and a ProSe server-A belong to PLMN-A and an eNodeB, an HSS-B and a ProSe server-B belong to PLMN-B.

UE-A and UE-B have been registered with the ProSe server-B.

In step 1 of FIG. 18, UE-B sends a ProSe Discovery Request message to the ProSe server-B in order to be alerted of proximity with UE-A in the time window. Here, UE-B can include, in the ProSe Discovery Request message, time window information (i.e., Time_X of FIG. 18) indicating to the ProSe server-B how long the request is valid. In this case, UE-A and UE-B may substantially refer to an application on ProSe-enabled UE-A and an application on ProSe-enabled UE-B.

In step 2 of FIG. 18, the ProSe server-B authorizes the ProSe Discovery Request message transmitted from UE-B and requests the ProSe server-A, which is the home ProSe server of UE-A, to check whether UE-B/user-B is permitted to discover UE-A/user-A by sending a ProSe Permission Check Request message to the ProSe server-A.

In step 3 of FIG. 18, the ProSe server-A checks whether UE-B/user-B is permitted to discover UE-A/user-A.

In step 4 of FIG. 18, the ProSe server A transmits, to the ProSe server-B, a ProSe Permission Check Response message along with information indicating whether UE-B/user-B is permitted to discover UE-A/user-A. When UE-B/user-B is not permitted to discover UE-A/user-A, step 22 of FIG. 18 is performed.

Steps 5a to 20a of FIG. 18 are performed in order to obtain the location information of UE-A.

In step 5a of FIG. 18, the ProSe server-B starts a timer with Time_X for UE-A.

In step 6a of FIG. 18, the ProSe server-B requests location reporting with respect to UE-A to the ProSe server-A (i.e., the home ProSe server of UE-A) by transmitting a ProSe Location Reporting Request message to the ProSe server-A.

In step 7a of FIG. 18, the ProSe server-A returns a ProSe Location Request Ack message to the ProSe server-B.

In step 8a of FIG. 18, the ProSe server-A requests the HSS-A to start location reporting with respect to UE-A by transmitting a Location Reporting Request message to the HSS-A.

In step 9a of FIG. 18, the HSS-A enables the MME to start location reporting with respect to UE-A by transmitting a Location Reporting Request message to the MME.

In step 10a of FIG. 18, the MME responds with a Location Reporting Request Ack message to the HSS-A.

In step 11a of FIG. 18, the HSS-A responds with a Location Reporting Request Ack message to the ProSe server-A.

In step 12a of FIG. 18, it is assumed that UE-A is in an idle state. The MME waits until UE-A performs i) a tracking area update procedure, ii) a UE triggered service request procedure or iii) a network triggered service request procedure. At some time, UE-A performs the tracking area update procedure or the service request procedure.

In step 13a of FIG. 18, upon acquisition of cell information of UE-A in step 12a of FIG. 18, the MME transmits, to the HSS-A, a Location Notification message including the most recent location information of UE-A.

In step 14a of FIG. 18, the HSS-A transmits, to the ProSe server-A, a Location Notification message including the most recent location information of UE-A.

In step 15a of FIG. 18, the ProSe server-A responds by sending a Location Notification Ack message to the HSS-A.

In step 16a of FIG. 18, the HSS-A responds by sending a Location Notification Ack message to the MME.

In step 17a of FIG. 18, the ProSe server-A transmits a ProSe Location Notification message to the ProSe server-B in order to provide the current location information of UE-A.

In step 18a of FIG. 18, the ProSe server-B returns a ProSe Location Notification Ack message to the ProSe server-A.

In step 19a of FIG. 18, after 12a, if UE-A is changed to a connected mode due to step 12a, the MME performs location reporting control to instruct the eNodeB to report the current location of UE-A whenever UE-A changes the serving cell thereof to another cell belonging to the eNodeB, as described in step 10b.

In step 20a of FIG. 18, if the MME performs location reporting control on the eNodeB in step 19a, the eNodeB transmits a Location Report message to the MME whenever UE-A changes the serving cell thereof to another cell belonging to the eNodeB. The updated location information is transmitted from the MME to the ProSe server-A through the HSS-A as described in steps 13a to 16a of FIG. 18. If the ProSe server-A receives the updated location information, the location information is forwarded to the ProSe server-B, as described in steps 17a and 18a.

Steps 5b to 16b of FIG. 18 are performed in order to obtain the location information of UE-B.

In step 5b of FIG. 18, the ProSe server-B starts a timer with Time_X for UE-B.

In step 6b of FIG. 18, the ProSe server-B requests the HSS-B to start location reporting with respect to UE-B by transmitting a Location Reporting Request message to the HSS-B.

In step 7b of FIG. 18, the HSS-B enables the MME to start location reporting with respect to UE-B by transmitting a Location Reporting Request message to the MME.

In step 8b of FIG. 18, the MME responds by sending a Location Reporting Request Ack message to the HSS-B.

In step 9b of FIG. 18, the HSS-B responds by sending a Location Reporting Request Ack message to the ProSe server-B.

In step 10b of FIG. 18, it is assumed that UE-B is in a connected mode. The MME transmits a Location Reporting Control message to the eNodeB in order to acquire the most recent cell information about UE-B. In addition, the MME may include, in the Location Reporting Control message, information for instructing the eNodeB to report the current location of UE-B whenever UE-B changes the serving cell thereof to another cell belonging to the eNodeB.

In step 11b of FIG. 18, the eNodeB returns the most recent cell information about UE-B to the MME by transmitting a Location Report message to the MME.

In step 12b of FIG. 18, the MME transmits, to the HSS-B, a Location Notification message including the most recent location information of UE-B.

In step 13b of FIG. 18, the HSS-B transmits a Location Notification message including the most recent location information of UE-B to the ProSe server-B.

In step 14b of FIG. 18, the ProSe server-B responds by sending a Location Notification Ack message to the HSS-B.

In step 15b of FIG. 18, the HSS-B responds by sending a Location Notification Ack message to the MME.

In step 16b of FIG. 18, the eNodeB transmits a Location Report message to the MME whenever UE-B changes the serving cell thereof to another cell belonging to the eNodeB after step 11b. The updated location information is transmitted from the MME to the ProSe server-B through the HSS-B, as described in steps 12b and 13b of FIG. 18.

In step 21 of FIG. 18, the ProSe server-B determines whether UE-A and UE-B are in proximity to each other according to the location information of UE-A, the location information of UE-B and proximity criteria on the basis of both the ProSe Location Notification message received in step 17a of FIG. 18 and the Location Notification message received in step 13b of FIG. 18. When the ProSe server-B determines that UE-A is in proximity to UE-B, step 22 of FIG. 18 is performed. When the ProSe server-B determines that UE-A is not in proximity to UE-B, the ProSe server-B performs proximity check whenever a new Location Notification message is received from the ProSe server-A or the HSS-B. When the ProSe server-B determines that UE-A and UE-B are in proximity to each other or the timer started in step 5a of FIG. 18 and the timer started in step 5b of FIG. 18 expire, step 22 of FIG. 18 is performed.

In step 22 of FIG. 18, the ProSe server-B transmits, to UE-B, a ProSe Discovery Response message along with information indicating whether UE-A and UE-B are in proximity to each other. If UE-B/user-B is not permitted to discover UE-A/user-A, the ProSe Discovery Response message indicates that the ProSe discovery request from UE-B is rejected.

In step 23 of FIG. 18, if UE-A and UE-B are in proximity to each other, the ProSe server-B may notify UE-A that UE-B wants to discover UE-A by transmitting a ProSe Discovery Alert message to UE-A.

UE-A and UE-B may attempt to discover each other.

In step 24 of FIG. 18, the ProSe server-B requests that the ProSe server-A stop location reporting with respect to UE-A. Such location reporting cancellation may be applied to the MME and, as necessary, to the eNodeB through the HSS-A.

In step 25 of FIG. 18, the ProSe server-B requests that the HSS-B stop location reporting with respect to UE-B. Such location reporting cancellation may be applied to the MME and, as necessary, to the eNodeB.

Furthermore, steps (i.e., steps 5a to 20a) for acquiring the location information of UE-A and steps (i.e., steps 5b to 16b) for acquiring the location of UE-B may be performed in parallel.

In addition, the ProSe server-B may start a single timer with Time_X for UE-A and UE-B, instead of starting respective timers for UE-A and UE-B.

When UE-A is in a connected state, steps 10b to 16b of FIG. 18 for obtaining location information of the UE in the connected state may be performed instead of steps 12a to 16a and 19a to 20a of FIG. 18. When UE-B is in an idle state, steps 12a to 16a, 19a and 20a of FIG. 18 for obtaining location information of the UE in the idle state may be performed instead of steps 10b to 16b of FIG. 18.

While a case in which UE-A and UE-B are served by the same eNodeB and the same MME is described with reference to FIG. 18 for convenience of description, the aforementioned embodiments can be applied to a case in which UE-A and UE-B are served by different eNodeBs and the same MME, a case in which UE-A and UE-B are served by the same eNodeB and different MMEs or a case in which UE-A and UE-B are served by different eNodeBs and different MMEs.

### 3-9. Fifteenth embodiment

A description will be given of EPC-level ProSe discovery performed in different PLMNs.

When a ProSe server receives a ProSe discovery request from a discoverer, the ProSe server checks whether a discoveree has been registered therewith. If the discoveree has not been registered with the ProSe server, the ProSe server determines that the discoveree has been registered with a PLMN other than the PLMN in which the ProSe server is present and the discoverer has been registered.

Accordingly, when the ProSe server checks network sharing information in order to determine proximity between the discoverer and the discoveree and makes a location reporting request to another network node, the ProSe server instructs the other network node to provide the network sharing information along with location information of UEs.

When an eNodeB which serves a UE (discoverer or discoveree) is a shared RAN, an MME provides location information of UEs along with the network sharing information. The network sharing information may be a list of identifiers of PLMNs broadcast by the eNodeB which serves the UE.

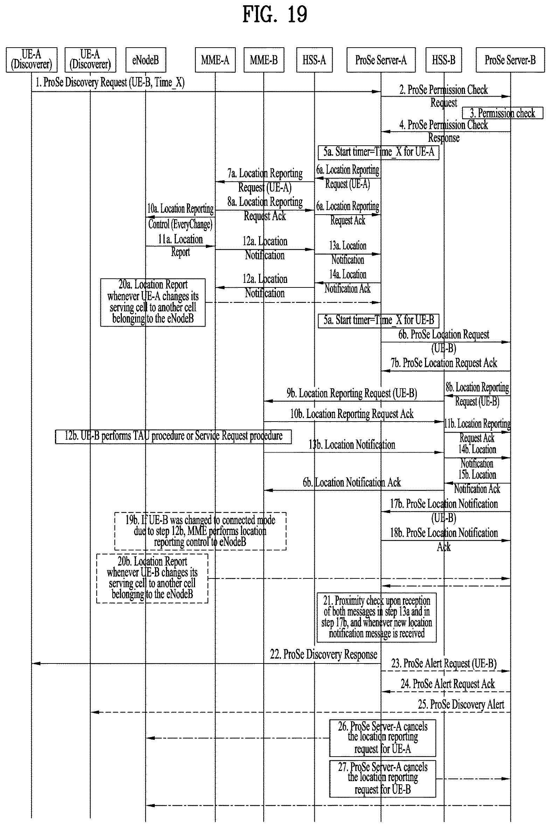

FIG. 19 is a reference view illustrating EPC-level ProSe discovery performed in different PLMNs according to an embodiment of the present invention. Here, it is assumed that a discoverer and a discoveree are non-roaming.

As shown in FIG. 19, UE-A requests ProSe discovery to the network with the time window in order to be alerted when UE-A enters proximity with UE-B within the time window. It is assumed that both UE-A (i.e., discoverer) and UE-B (i.e., discoveree) are respectively registered with different PLMNs, that is, PLMN-A and PLMN-B in the following description. Here, UE-A and UE-B are assumed to be non-roaming UEs. In FIG. 19, an MME-A, an HSS-A and a ProSe server-A belong to PLMN-A and an MME-B, an HSS-B and a ProSe server-B belong to PLMN-B.

UE-A has been registered with the ProSe server-A and UE-B has been registered with the ProSe server-B.

In step 1 of FIG. 19, UE-A sends a ProSe Discovery Request message to the ProSe server-A in order to be alerted of proximity with UE-B in the time window. Here, UE-A can include, in the ProSe Discovery Request message, time window information (i.e., Time X of FIG. 19) indicating to the ProSe server how long the request is valid. In this case, UE-A and UE-B may substantially refer to an application on ProSe-enabled UE-A and an application on ProSe-enabled UE-B.

In step 2 of FIG. 19, the ProSe server-A authorizes the ProSe Discovery Request message transmitted from UE-A and requests the ProSe server-B, which is the home ProSe server of UE-B, to check whether UE-A/user-A is permitted to discover UE-B/user-B by transmitting a ProSe Permission Check Request message to the ProSe server-B.

In step 3 of FIG. 19, the ProSe server-B checks whether UE-A/user-A is permitted to discover UE-B/user-B.

In step 4 of FIG. 19, the ProSe server B transmits, to the ProSe server-A, a ProSe Permission Check Response message along with information indicating whether UE-A/user-A is permitted to discover UE-B/user-B. When UE-A/user-A is not permitted to discover UE-B/user-B, step 22 of FIG. 19 is performed.

Steps 5a to 16a of FIG. 19 are performed in order to obtain the location information of UE-A.

In step 5a of FIG. 19, the ProSe server-A starts a timer with Time_X for UE-A.

In step 6a of FIG. 19, the ProSe server-A request the HSS-A to start location reporting with respect to UE-A by transmitting a Location Reporting Request message to the HSS-A. This is because the discoveree, that is UE-B, has not been registered with ProSe server-A and thus the ProSe server-A determines that network sharing information is necessary to check whether UE-A is in proximity to UE-B. Accordingly, the ProSe server-A may include, in the Location Reporting Request message, information for instructing the HSS-A to provide the location information of UE-A along with the network sharing information to the ProSe server-A. Here, the information indicating provision of the network sharing information may be various types of information (e.g., information indicating that the discoverer UE and the discoveree UE are registered/located in different PLMNs). That is, the information may be explicit or implicit indication information, and a plurality of pieces of information may be combined and included in the Location Reporting Request message. This can be equally applied when the HSS-A sends a Location Reporting Request message to the MME-A in step 7a of FIG. 19.

In step 7a of FIG. 19, the HSS-A transmits a Location Reporting Request message to the MME-A so as to enable the MME-A to start location reporting with respect to UE-A.

In step 8a of FIG. 19, the MME-A responds by sending a Location Reporting Request Ack message to the HSS-A.

In step 9a of FIG. 19, the HSS-A responds by sending a Location Reporting Request Ack message to the ProSe server-A.

In step 10a of FIG. 19, it is assumed that UE-A is in a connected mode. The MME-A transmits a Location Reporting Control message to the eNodeB in order to acquire the most recent cell information about UE-A. In addition, the MME-A may include, in the Location Reporting Control message, information for instructing the eNodeB to report the current location of UE-A whenever UE-A changes the serving cell thereof to another cell belonging to the eNodeB.

In step 11a of FIG. 19, the eNodeB returns the most recent cell information about UE-A to the MME-A by transmitting a Location Report message to the MME-A.

In step 12a of FIG. 19, the MME-A transmits, to the HSS-A, a Location Notification message including the most recent location information of UE-A. If the eNodeB which serves UE-A is a shared RAN, the MME-A can include, in the Location Notification message, network sharing information about broadcast PLMNs related to the eNodeB. Here, the information about the broadcast PLMNs may be a list of identifiers of PLMNs broadcast by the eNodeB which serves UE-A.

In step 13a of FIG. 19, the HSS-A transmits, to the ProSe server-A, a Location Notification message including the most recent location information of UE-A and the broadcast PLMN identifier list if the list is present.

In step 14a of FIG. 19, the ProSe server-A responds by sending a Location Notification Ack message to the HSS-A.

In step 15a of FIG. 19, the HSS-A responds by sending a Location Notification Ack message to the MME-A.

In step 16a of FIG. 19, the eNodeB transmits a Location Report message to the MME-A whenever UE-A changes the serving cell thereof to another cell belonging to the eNodeB after step 11a. The updated location information is transmitted from the MME-A to the ProSe server-A through the HSS-A, as described in steps 12a to 15a of FIG. 19.

Steps 5b to 20b of FIG. 19 are performed in order to obtain the location information of UE-B.

In step 5b of FIG. 19, the ProSe server-A starts a timer with Time_X for UE-B.

In step 6b of FIG. 19, the ProSe server-A transmits a ProSe Location Request message to the ProSe server-B, which is the home ProSe server of UE-B, in order to request the location information of UE-B. This is because the discoveree, that is UE-B, has not been registered with ProSe server-A and thus the ProSe server-A determines that network sharing information is necessary to check whether UE-A is in proximity to UE-B. Accordingly, the ProSe server-A may include, in the ProSe Location Request message, information for instructing the ProSe server-B to provide the location information of UE-B along with the network sharing information to the ProSe server-A. Here, the information indicating provision of the network sharing information may be various types of information (e.g., information indicating that the discoverer UE and the discoveree UE are registered/located in different PLMNs). That is, the information may be explicit or implicit indication information, and a plurality of pieces of information may be combined and included in the Location Reporting Request message. This can be equally applied when the ProSe server-B sends a Location Reporting Request message to the HSS-B in step 8b of FIG. 19 and when the HSS-B transmits a Location Reporting Request message to the MME-B in step 9b of FIG. 19.

In step 7b of FIG. 19, the ProSe server-B returns a ProSe Location Request Ack message to the ProSe server-A.

In step 8b of FIG. 19, the ProSe server-B requests the HSS-B to start location reporting with respect to UE-B by transmitting a Location Reporting Request message to the HSS-B. Here, the ProSe server-B may include, in the Location Reporting Request message, information for instructing the HSS-B to provide the location information of UE-B along with the network sharing information to the ProSe-server B.

In step 9b of FIG. 19, the HSS-B requests the MME-B to start location reporting with respect to UE-B by transmitting a Location Reporting Request message to the MME-B. Here, the HSS-B may include, in the Location Reporting Request message, information for instructing the MME-B to provide the location information of UE-B along with the network sharing information to the HSS-B.

In step 10b of FIG. 19, the MME-B responds by sending a Location Reporting Request Ack message to the HSS-B.

In step 11b of FIG. 19, the HSS-B responds by sending a Location Reporting Request Ack message to the ProSe server-B.

In step 12b of FIG. 19, it is assumed that UE-B is in an idle state. The MME-B waits until UE-B performs i) a tracking area update procedure, ii) a UE triggered service request procedure or iii) a network triggered service request procedure. Then, UE-B performs the tracking area update procedure or the service request procedure.

In step 13b of FIG. 19, upon acquisition of cell information of UE-B in step 12b of FIG. 19, the MME-B transmits, to the HSS-B, a Location Notification message including the most recent location information of UE-B. If the eNodeB which serves UE-B is a shared RAN, the MME-B can include, in the Location Notification message, network sharing information about broadcast PLMNs related to the eNodeB. Here, the information about the broadcast PLMNs may be a list of identifiers of PLMNs broadcast by the eNodeB which serves UE-B.

In step 14b of FIG. 19, the HSS-B transmits, to the ProSe server-B, a Location Notification message including the most recent location information of UE-B and the broadcast PLMN identifier list if the list is present.

In step 15b of FIG. 19, the ProSe server-B responds by sending a Location Notification Ack message to the HSS-B.

In step 16b of FIG. 19, the HSS-B responds by sending a Location Notification Ack message to the MME-B.

In step 17b of FIG. 19, the ProSe server-B transmits a ProSe Location Notification message to the ProSe server-A in order to provide the most recent location information of UE-B and the broadcast PLMN identifier list if the list is present.

In step 18b of FIG. 19, the ProSe server-A returns a ProSe Location Notification Ack message to the ProSe server-B.

In step 19b of FIG. 19, after step 12b, if UE-B is changed to a connected mode due to step 12b, the MME-B performs location reporting control to instruct the eNodeB to report the current location of UE-B whenever UE-B changes the serving cell thereof to another cell belonging to the eNodeB, as described in step 10a.

In step 20b of FIG. 19, if the MME-B performs location reporting control on the eNodeB in step 19b, the eNodeB transmits a Location Report message to the MME-B whenever UE-B changes the serving cell thereof to another cell belonging to the eNodeB. Updated location information is transmitted from the MME-B to the ProSe server-B through the HSS-B as described in steps 13b to 16b of FIG. 19. If the ProSe server-B receives the updated location information, the location information is forwarded to the ProSe server-A, as described in steps 17b and 18b.

In step 21 of FIG. 19, the ProSe server-A determines whether UE-A and UE-B are in proximity to each other according to the location information of UE-A, the location information of UE-B, network sharing information about broadcast PLMNs and proximity criteria on the basis of both the Location Notification message received in step 13a of FIG. 19 and the ProSe Location Notification message received in step 17b of FIG. 19. When the ProSe server-A determines that UE-A is in proximity to UE-B, step 22 of FIG. 19 is performed. When the ProSe server-A determines that UE-A is not in proximity to UE-B, the ProSe server-A performs proximity check whenever a new Location Notification message is received from the ProSe server-B or the HSS-A. When the ProSe server-A determines that UE-A and UE-B are in proximity to each other or the timer started in step 5a of FIG. 19 and the timer started in step 5b of FIG. 19 expire, step 22 of FIG. 19 is performed.

In step 22 of FIG. 19, the ProSe server-A transmits, to UE-A, a ProSe Discovery Response message along with information indicating whether UE-A and UE-B are in proximity to each other. If UE-A/user-A is not permitted to discover UE-B/user-B, the ProSe Discovery Response message indicates that the ProSe discovery request from UE-A is rejected.

In steps 23 to 25 of FIG. 19, if UE-A and UE-B are in proximity to each other, the ProSe server-A may request the ProSe server-B to notify UE-B that UE-A wants to discover UE-B by transmitting a ProSe Discovery Alert message to UE-B.

UE-A and UE-B may attempt to discover each other.

In step 26 of FIG. 19, the ProSe server-A requests the HSS-A to stop location reporting with respect to UE-A. Such location reporting cancellation may be applied to the MME-A and, as necessary, to the eNodeB.

In step 27 of FIG. 19, the ProSe server-A requests the ProSe server-B to stop location reporting with respect to UE-B. Such location reporting cancellation may be applied to the MME-B and, as necessary, to the eNodeB through the HSS-B.

Furthermore, steps (i.e., steps 5a to 16a) for acquiring the location information of UE-A and steps (i.e., steps 5b to 20b) for acquiring the location of UE-B may be performed in parallel.

In addition, the ProSe server-A may start a single timer with Time X for UE-A and UE-B, instead of starting respective timers for UE-A and UE-B.

When UE-A is in an idle state, steps 12b to 16b, 19b and 20b of FIG. 19 for obtaining location information of the UE in the idle state may be performed instead of steps 10a to 16a of FIG. 19. When UE-B is in a connected state, steps 10a to 16a of FIG. 19 for obtaining location information of the UE in the connected state may be performed instead of steps 12b to 16b, 19b and 20b of FIG. 19.

The procedure described with reference to FIG. 19 may be applied to a case in which UE-B and UE-A are served by the same eNodeB and the same MME, a case in which UE-A and UE-B are served by different eNodeBs and the same MME and a case in which UE-A and UE-B are served by different eNodeBs and different MMEs.

### 3-10. Sixteenth embodiment

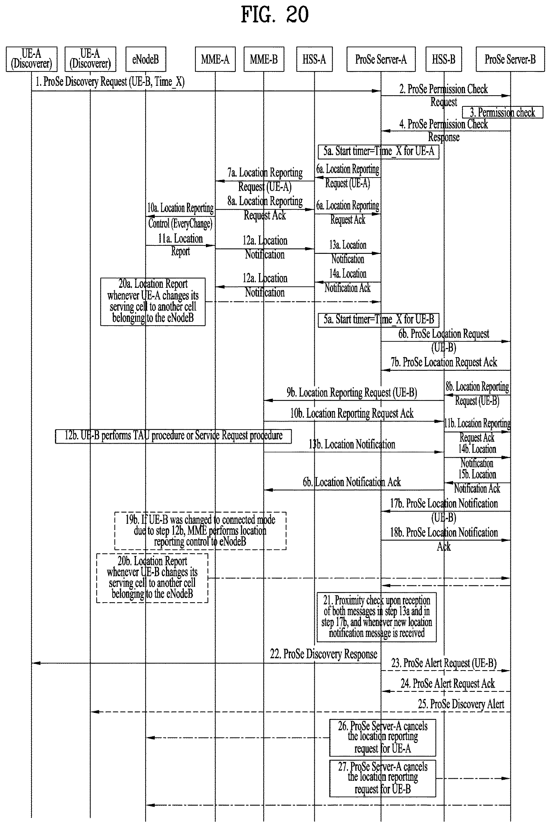

A description will be given of inter-PLMN EPC-level ProSe discovery. In FIG. 20, it is assumed that a discoverer and a discoveree are non-roaming.

As shown in FIG. 20, UE-A requests ProSe discovery to the network with the time window in order to be alerted when UE-A enters proximity with UE-B within the time window. It is assumed that both UE-A (i.e., discoverer) and UE-B (i.e., discoveree) are respectively registered with different PLMNs, that is, PLMN-A and PLMN-B in the following description. Here, UE-A and UE-B are assumed to be non-roaming UEs. In FIG. 20, an MME-A, an HSS-A and a ProSe server-A belong to PLMN-A and an MME-B, an HSS-B and a ProSe server-B belong to PLMN-B.

UE-A has been registered with the ProSe server-A and UE-B has been registered with the ProSe server-B.

In step 1 of FIG. 20, UE-A sends a ProSe Discovery Request message to the ProSe server-A in order to be alerted of proximity with UE-B within the time window. Here, UE-A can include, in the ProSe Discovery Request message, time window information (i.e., Time_X of FIG. 20) indicating to the ProSe server how long the request is valid. In this case, UE-A and UE-B may substantially refer to an application on ProSe-enabled UE-A and an application on ProSe-enabled UE-B.

In step 2 of FIG. 20, the ProSe server-A authorizes the ProSe Discovery Request message transmitted from UE-A and requests the ProSe server-B, which is the home ProSe server of UE-B, to check whether UE-A/user-A is permitted to discover UE-B/user-B by transmitting a ProSe Permission Check Request message to the ProSe server-B.

In step 3 of FIG. 20, the ProSe server-B checks whether UE-A/user-A is permitted to discover UE-B/user-B.

In step 4 of FIG. 20, the ProSe server B transmits, to the ProSe server-A, a ProSe Permission Check Response message along with information indicating whether UE-A/user-A is permitted to discover UE-B/user-B. When UE-A/user-A is not permitted to discover UE-B/user-B, step 22 of FIG. 20 is performed.

Steps 5a to 16a of FIG. 20 are performed in order to obtain the location information of UE-A.

In step 5a of FIG. 20, the ProSe server-A starts a timer with Time_X for UE-A.

In step 6a of FIG. 20, the ProSe server-A request the HSS-A to start location reporting with respect to UE-A by transmitting a Location Reporting Request message to the HSS-A.

In step 7a of FIG. 20, the HSS-A transmits a Location Reporting Request message to the MME-A so as to enable the MME-A to start location reporting with respect to UE-A.

In step 8a of FIG. 20, the MME-A responds by sending a Location Reporting Request Ack message to the HSS-A.

In step 9a of FIG. 20, the HSS-A responds by sending a sending Location Reporting Request Ack message to the ProSe server-A.

In step 10a of FIG. 20, it is assumed that UE-A is in a connected mode. The MME-A transmits Location Reporting Control message to the eNodeB in order to acquire most recent cell information about UE-A. In addition, the MME-A may include, in the Location Reporting Control message, information for instructing the eNodeB to report the current location of UE-A whenever UE-A changes the serving cell thereof to another cell belonging to the eNodeB.

In step 11a of FIG. 20, the eNodeB returns the most recent cell information about UE-A to the MME-A by transmitting a Location Report message to the MME-A.

In step 12a of FIG. 20, the MME-A transmits, to the HSS-A, a Location Notification message including the most recent location information of UE-A.

In step 13a of FIG. 20, the HSS-A transmits, to the ProSe server-A, a Location Notification message including the most recent location information of UE-A.

In step 14a of FIG. 20, the ProSe server-A responds by sending a Location Notification Ack message to the HSS-A.

In step 15a of FIG. 20, the HSS-A responds by sending a Location Notification Ack message to the MME-A.

In step 16a of FIG. 20, the eNodeB transmits a Location Report message to the MME-A whenever UE-A changes the serving cell thereof to another cell belonging to the eNodeB after step 11a. The updated location information is transmitted from the MME-A to the ProSe server-A through the HSS-A, as described in steps 12a to 15a of FIG. 20.

Steps 5b to 20b of FIG. 20 are performed in order to obtain the location information of UE-B.

In step 5b of FIG. 20, the ProSe server-A starts a timer with Time_X for UE-B.

In step 6b of FIG. 20, the ProSe server-A transmits a ProSe Location Request message to the ProSe server-B, which is the home ProSe server of UE-B, in order to request the location information of UE-B. This is because the discoveree, that is UE-B, has not been registered with ProSe server-A and thus the ProSe server-A determines that network sharing information is necessary to check whether UE-A is in proximity to UE-B. Accordingly, the ProSe server-A may include, in the ProSe Location Request message, information for instructing the ProSe server-B to provide the location information of UE-B along with information related to coordinates to the ProSe server-A.

Here, the information indicating provision of the coordinates related information may be various types of information (e.g., information indicating that the discoverer UE and the discoveree UE are registered/located in different PLMNs). That is, the information may be explicit or implicit indication information, and a plurality of pieces of information may be combined and included in the Location Reporting Request message.

In step 7b of FIG. 20, the ProSe server-B returns a ProSe Location Request Ack message to the ProSe server-A.

In step 8b of FIG. 20, the ProSe server-B requests the HSS-B to start location reporting with respect to UE-B by transmitting a Location Reporting Request message to the HSS-B.

In step 9b of FIG. 20, the HSS-B requests the MME-B to start location reporting with respect to UE-B by transmitting a Location Reporting Request message to the MME-B.

In step 10b of FIG. 20, the MME-B responds by sending a Location Reporting Request Ack message to the HSS-B.

In step 11b of FIG. 20, the HSS-B responds by sending a Location Reporting Request Ack message to the ProSe server-B.

In step 12b of FIG. 20, it is assumed that UE-B is in an idle state. The MME-B waits until UE-B performs i) a tracking area update procedure, ii) a UE triggered service request procedure or iii) a network triggered service request procedure. Then, UE-B performs the tracking area update procedure or the service request procedure.

In step 13b of FIG. 20, upon acquisition of cell information of UE-B in step 12b of FIG. 20, the MME-B transmits, to the HSS-B, Location Notification message including the most recent location information of UE-B.

In step 14b of FIG. 20, the HSS-B transmits, to the ProSe server-B, a Location Notification message including the most recent location information of UE-B and the broadcast PLMN identifier list if the list is present.

In step 15b of FIG. 20, the ProSe server-B responds by sending a Location Notification Ack message to the HSS-B.

In step 16b of FIG. 20, the HSS-B responds by sending a Location Notification Ack message to the MME-B.

In step 17b of FIG. 20, the ProSe server-B transmits a ProSe Location Notification message to the ProSe server-A in order to provide the current location information of UE-B.

If the ProSe Location Request message received in step 6b of FIG. 20 includes the information indicating provision of the coordinates related information, the ProSe server-B includes coordinates information extracted/derived/determined on the basis of the current location information of UE-B in the ProSe Location Notification message sent to the ProSe server-A. Here, the cell information (i.e., ECGI information) of UE-B may or may not be included in the ProSe Location Notification message.

Even when the ProSe Location Request message received in step 6b of FIG. 20 does not include the information indicating provision of the coordinates related information, the ProSe server-B includes, in the ProSe Location Notification message sent to the ProSe server-A, coordinates information extracted/derived/determined on the basis of the current location information of UE-B, which is included in the Location Notification message received in step 14b of FIG. 20 if UE-B has not been registered with the ProSe server-B. Here, the cell information (i.e., ECGI information) of UE-B may or may not be included in the ProSe Location Notification message.

In addition, the ProSe server-B may keep mapping information necessary to extract/derive/determine/convert coordinates information from the location information (e.g., cell information or ECGI) of a UE or acquire coordinates information corresponding/mapped to the cell information through interaction with another network node. The coordinates information may be i) center coordinates of a cell (i.e., latitude and longitude), ii) coordinates of four cardinal points covered by the cell (i.e., latitude and longitude), iii) information on the horizontal distance covered by the cell and/or iv) information on the vertical distance covered by the cell. In addition, the coordinates information may be an accurate value or an approximate value.

In step 18b of FIG. 20, the ProSe server-A returns a ProSe Location Notification Ack message to the ProSe server-B.

In step 19b of FIG. 20, after step 12b, if UE-B is changed to a connected mode due to step 12b, the MME-B performs location reporting control to instruct the eNodeB to report the current location of UE-B whenever UE-B changes the serving cell thereof to another cell belonging to the eNodeB, as described in step 10a.

In step 20b of FIG. 20, if the MME-B performs location reporting control on the eNodeB in step 19b, the eNodeB transmits a Location Report message to the MME-B whenever UE-B changes the serving cell thereof to another cell belonging to the eNodeB. The updated location information is transmitted from the MME-B to the ProSe server-B through the HSS-B as described in steps 13b to 16b of FIG. 20. If the ProSe server-B receives the updated location information, the location information is forwarded to the ProSe server-A, as described in steps 17b and 18b.

In step 21 of FIG. 20, the ProSe server-A determines whether UE-A and UE-B are in proximity to each other according to the location information of UE-A, the location information of UE-B and proximity criteria on the basis of both the Location Notification message received in step 13a of FIG. 20 and the ProSe Location Notification message received in step 17b of FIG. 20. When the ProSe server-A determines that UE-A is in proximity to UE-B, step 22 of FIG. 20 is performed. When the ProSe server-A determines that UE-A is not in proximity to UE-B, the ProSe server-A performs proximity check whenever a new Location Notification message is received from the ProSe server-B or the HSS-A. When the ProSe server-A determines that UE-A and UE-B are in proximity to each other or the timer started in step 5a of FIG. 20 and the timer started in step 5b of FIG. 20 expire, step 22 of FIG. 20 is performed.

The location information used for the ProSe server-A to determine whether UE-A and UE-B are in proximity to each other is the coordinates information, not the cell information (i.e., ECGI information).

Here, the ProSe server-A may keep mapping information necessary to extract/derive/determine/convert coordinates information from the location information (e.g., cell information or ECGI) of a UE or acquire coordinates information corresponding/mapped to the cell information through interaction with another network node. The coordinates information may be i) center coordinates of a cell (i.e., latitude and longitude), ii) coordinates of four cardinal points covered by the cell (i.e., latitude and longitude), iii) information on the horizontal distance covered by the cell and/or iv) information on the vertical distance covered by the cell. In addition, the coordinates information may be an accurate value or an approximate value.

In step 22 of FIG. 20, the ProSe server-A transmits, to UE-A, a ProSe Discovery Response message along with information indicating whether UE-A and UE-B are in proximity to each other. If UE-A/user-A is not permitted to discover UE-B/user-B, the ProSe Discovery Response message indicates that the ProSe discovery request from UE-A is rejected.

In steps 23 to 25 of FIG. 20, if UE-A and UE-B are in proximity to each other, the ProSe server-A may request the ProSe server-B to notify UE-B that UE-A wants to discover UE-B by transmitting a ProSe Discovery Alert message to UE-B.

UE-A and UE-B may attempt to discover each other.

In step 26 of FIG. 20, the ProSe server-A requests the HSS-A to stop location reporting with respect to UE-A. Such location reporting cancellation may be applied to the MME-A and, as necessary, to the eNodeB.

In step 27 of FIG. 20, the ProSe server-A requests the ProSe server-B to stop location reporting with respect to UE-B. Such location reporting cancellation may be applied to the MME-B and, as necessary, to the eNodeB through the HSS-B.

Furthermore, steps (i.e., steps 5a to 16a) for acquiring the location information of UE-A and steps (i.e., steps 5b to 20b) for acquiring the location of UE-B may be performed in parallel.

In addition, the ProSe server-A may start a single timer with Time_X for UE-A and UE-B, instead of starting respective timers for UE-A and UE-B.

When UE-A is in an idle state, steps 12b to 16b, 19b and 20b of FIG. 20 for obtaining location information of the UE in the idle state may be performed instead of steps 10a to 16a of FIG. 20. When UE-B is in a connected state, steps 10a to 16a of FIG. 20 for obtaining location information of the UE in the connected state may be performed instead of steps 12b to 16b, 19b and 20b of FIG. 20.

The procedure described with reference to FIG. 20 may be applied to a case in which UE-B and UE-A are served by the same eNodeB and the same MME, a case in which UE-A and UE-B are served by different eNodeBs and the same MME and a case in which UE-A and UE-B are served by different eNodeBs and different MMEs.

The above description is applicable to a case in which the discoverer UE and the discoveree UE have been registered with different PLMNs which do not share a RAN/network as well as a case in which the discoverer UE and the discoveree UE have been registered with different PLMNs sharing a RAN/network (i.e., RAN sharing or network sharing PLMNs).

In addition, while a ProSe server performs operation of extracting/deriving/determining/converting coordinates information from cell information (ECGI information) in the aforementioned embodiments, an MME or an HSS may perform the operation.

Furthermore, the above-described method of determining proximity based on coordinates information is applicable not only to inter-PLMN discovery (that is, a case in which the discoverer UE and the discoveree UE have been registered with different PLMNs) but also to intra-PLMN discovery (that is, a case in which the discoverer UE and the discoveree UE have been registered with the same PLMN). Particularly, the method of determining proximity based on coordinates information can be used when the discoverer UE and the discoveree UE camp on different cells in the case of intra-PLMN discovery.

### 3-11. Seventeenth embodiment

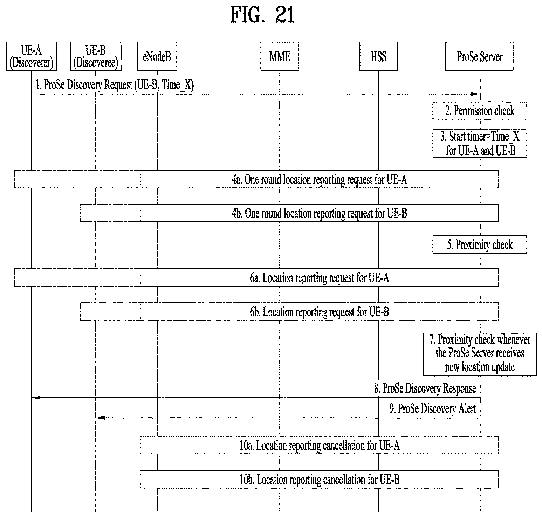

A description will be given of EPC-level ProSe discovery to which a time window is applied according to another embodiment of the present invention. In FIG. 21, it is assumed that UE-A (i.e., discoverer) and UE-B (i.e., discoveree) have been registered with the same PLMN and are non-roaming UEs.

As shown in FIG. 21, UE-A requests ProSe discovery to the network with the time window in order to be alerted when UE-A enters proximity with UE-B in the time window. It is assumed that UE-A (i.e., discoverer) and UE-B (i.e., discoveree) are registered with the same PLMN and are non-roaming UEs.

UE-A and UE-B have been registered with a ProSe server.

In step 1 of FIG. 21, UE-A sends a ProSe Discovery Request message to the ProSe server in order to be alerted of proximity with UE-B in the time window. Here, UE-A can include, in the ProSe Discovery Request message, time window information (i.e., Time_X of FIG. 21) indicating to the ProSe server how long the request is valid. In this case, UE-A and UE-B may substantially refer to an application on ProSe-enabled UE-A and an application on ProSe-enabled UE-B.

In step 2 of FIG. 21, the ProSe server authorizes the ProSe Discovery Request message transmitted from UE-A and checks whether UE-A/user-A is permitted to discover UE-B/user-B. When UE-A/user-A is not permitted to discover UE-B/user-B, step 8 of FIG. 21 is performed.

In step 3 of FIG. 21, the ProSe server starts a timer with Time_X for UE-A and UE-B for the request (i.e., request from UE-A).

In step 4a of FIG. 21, to obtain the most recent cell information (i.e., ECGI) of UE-A, the ProSe server makes a one round location reporting request for UE-A to an MME through an HSS. The MME transmits a response including the ECGI of UE-A to the ProSe server through the HSS. If UE-A is in an idle state, the MME pages UE-A so as to acquire the ECGI of UE-A.

In step 4b of FIG. 21, to obtain the most recent cell information (i.e., ECGI) of UE-B, the ProSe server makes a one round location reporting request for UE-B to the MME through the HSS. The MME transmits a response including the ECGI of UE-B to the ProSe server through the HSS. If UE-B is in an idle state, the MME pages UE-B in order to acquire the ECGI of UE-B.

In step 5 of FIG. 21, upon reception of the location information of UE-A and UE-B, the ProSe server checks proximity between UE-A and UE-B on the basis of the location information of UE-A, the location information of UE-B and proximity criteria.

When the ProSe server determines that UE-A and UE-B are not in proximity to each other until the time (i.e., Time_X) for proximity check expires, the ProSe server determines that subsequent proximity check is not performed. In this case, only step 8 of FIG. 21 is performed and thus the ProSe server transmits, to UE-A, information indicating that UE-A and UE-B are not proximity to each other along with a ProSe Discovery Response message. In other cases, steps 6a and 6b of FIG. 21 are performed.

In step 6a of FIG. 21, the ProSe server makes a location reporting request for UE-A to the MME through the HSS. The ProSe server may have a location reporting period when performing the location reporting request. The location reporting period may be a fixed value configured in the ProSe server or a value calculated/set on the basis of Time X (e.g., a value smaller than Time X).

Upon reception of the location reporting request from the ProSe server, the MME operates as follows.
- When UE-A is in a connected mode: The MME requests the eNodeB to report the location information (i.e., ECGI) of UE-A to the MME whenever UE-A changes cells. (Conventional location reporting control operation (refer to section 5.9.1 of 3GPP TS 23.401) is used as is or is extended/modified and used). The MME reports cell change to the ProSe server through the HSS. Reporting of the MME is performed even when the ECGI of UE-A is changed after step 4a of FIG. 21.
- When the UE is in an idle mode or the UE is switched from a connected mode to an idle mode during reception of the location reporting request: The MME starts/initiates a timer (timer_r) set to a location reporting period value. i) If UE-A performs TAU (Tracking Area Update) procedure or SR (Service Request) procedure (which may be UE-triggered or network-triggered) before expiration of timer_r, the MME reports ECGI information of UE-A, acquired through the procedure, to the ProSe server through the HSS. In addition, simultaneously with or prior to reporting to the ProSe server, the MME stops time r. ii) Upon expiration of time_r, the MME pages UE-A in order to obtain the ECGI information of UE-A. The MME reports the acquired ECGI information of UE-A to the ProSe server through the HSS.

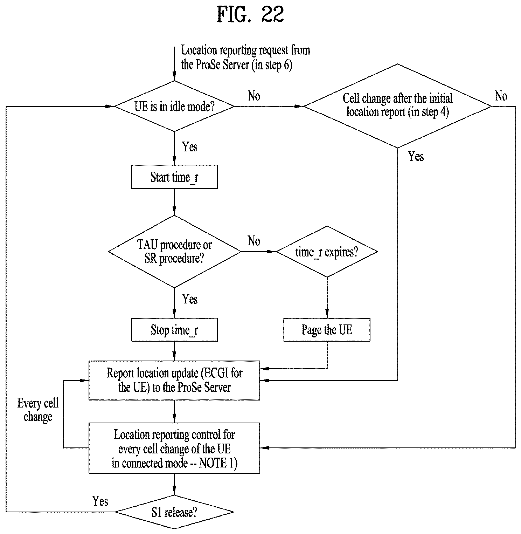

FIG. 22 is a reference view illustrating operation when the MME receives the location reporting request from the ProSe server through the HSS.

When UE-A in the idle mode performs the TAU procedure as in operation i) described in step 6a of FIG. 21, if an "Active" flag (refer to Table 9.9.3.14.1: EPS update type information element (IE) of 3GPP TS 24.301 for details) is not set in TAU Request Message, the MME may not request that the eNodeB report the location information of UE-A to the MME for every cell change (operation indicated by NOTE 1 in FIG. 22). This is because a user plane setup procedure according to the TAU procedure need not be performed for UE-A and thus the MME performs the S1 release procedure (refer to section 5.3.5 of 3GPP TS 23.401) upon completion of the TAU procedure. When the MME operates as shown in FIG. 22, paging operation performed to detect the location of the UE can be skipped. Accordingly, it is possible to reduce power consumption of the UE and signaling between the UE and the network and in the network, caused by operation of enabling the UE to switch to a connected mode.

The aforementioned location reporting period may be determined by the MME or provided by the HSS, instead of being provided by the ProSe server. To this end, the ProSe server may provide Time_X when performing the location reporting request. Then, the HSS or the MME can calculate/set the location reporting period on the basis of Time_X. Alternatively, the location reporting period may be configured in the HSS or the MME. When the MME calculates/sets the location reporting period, information related to a periodic TAU timer of the UE, the time until the next TAU procedure, timing information related to MM operation of the UE and the like can be additionally considered.

In step 6b of FIG. 22, the ProSe server makes a location reporting request for UE-B to the MME through the HSS. Operation related to the location reporting request in step 6b is identical to the operation described in step 6a of FIG. 21 and thus detailed description thereof is omitted.

In step 7 of FIG. 22, the ProSe server performs proximity check whenever new location update of UE-A or UE-B is received from the MME through the HSS. When the ProSe server determines that UE-A and UE-B are in proximity to each other or the timer started in step 3 of FIG. 22 expires, step 8 of FIG. 22 is performed.

In step 8 of FIG. 22, the ProSe server transmits, to UE-A, a ProSe Discovery Response message along with information indicating whether UE-A and UE-B are in proximity to each other. If UE-A/user-A is not permitted to discover UE-B/user-B, the ProSe Discovery Response message indicates that the ProSe discovery request form UE-A is rejected.

In step 9 of FIG. 22, when UE-A and UE-B are in proximity to each other, the ProSe server can notify UE-B that UE-A wants to discover UE-B by transmitting a ProSe Discovery Alert message to UE-B.

UE-A and UE-B may attempt to discover each other.

In step 10a of FIG. 22, the ProSe server can enable the MME to cancel location reporting with respect to UE-A through the HSS. Location reporting cancellation is applicable to the MME and, as necessary, to the eNodeB.

In step 10b of FIG. 22, the ProSe server can enable the MME to cancel location reporting with respect to UE-B through the HSS. Location reporting cancellation is applicable to the MME and, as necessary, to the eNodeB.

In the present embodiment, the one round location reporting request in steps 4a and 5a serves to request that the MME respond to the location reporting request only once.

The step (i.e., step 4a) for obtaining the initial location information of UE-A and the step (i.e., step 4b) for obtaining the initial location information of UE-B may be performed in parallel. In addition, the step (i.e., step 6a) for obtaining the location information of UE-A and the step (i.e., step 6b) for obtaining the location information of UE-B may be performed in parallel.

In addition, the ProSe server may start a single timer with Time X for UE-A and UE-B, instead of starting respective timers for UE-A and UE-B.

While the procedure described with reference to FIGS. 21 and 22 is applied to a case in which UE-B and UE-A are served by the same eNodeB and the same MME, the procedure may also be applied to a case in which UE-A and UE-B are served by different eNodeBs and the same MME and a case in which UE-A and UE-B are served by different eNodeBs and different MMEs.

Furthermore, the present embodiment can be extended and applied to a case in which UE-A and/or UE-B are roaming UEs. In addition, the embodiment can be extended and applied to inter-PLMN discovery (i.g., a case in which UE-A and UE-B have been registered with different PLMNs).

### 4. Embodiment of the present invention based on ProSe function - Eighteenth embodiment

A description will be given of an embodiment applied to a ProSe function according to the present invention.

### 4-1. Proximity Request

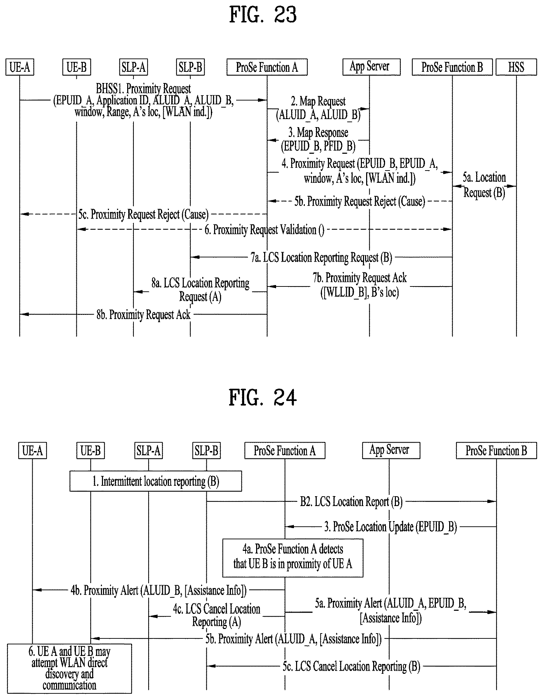

Proximity request according to the present invention will now be described with reference to FIG. 23. For convenience of description, a discoverer is called UE-A and a discoveree is called UE-B.

In step 1 of FIG. 23, UE-A transmits a Proximity Request message to a ProSe function-A in order to request ProSe discovery. Here, the Proximity Request message can include parameters such as an EPUID, an application ID, ALUID of the discoverer, ALUID of the discoveree, a window, a range, UE location, and WLAN indication. Accordingly, UE-A can transmit a Proximity Request message (EPUID_A, Application ID, ALUID_A, ALUID_B, window, Range, A's location, [WLAN indication]), for example. ("[A]" in the specific form of a specific message indicates that parameter "A" can be added as an option in the following.)

Here, EPUID indicates user's EPC ProSe User ID (that is, EPUID_A represents EPC ProSe user ID of user A). The EPUID is an identifier for EPC supporting EPC-level ProSe discovery and WLAN direct communication and identifies a UE registered for ProSe. Such identifier may be optionally reallocated according to the ProSe function. The application ID is used to identify a third party application server platform. ALUID indicates an application layer user ID. In the following, ALUID_A and ALUID_B respectively indicate application layer user IDs of user A and user B. The window parameter indicates a time period in which the request is valid. The range indicates a request range class selected for the application, from among range classes. Here, the range class information may be short, medium and maximum. UE location refers to most accurate current location known by the corresponding UE. For example, A's location refers to the most accurate current location of UE-A. Here, UE-A can optionally request EPC support for WLAN direct discovery and WLAN direct communication with UE-B by adding WLAN indication.

In step 2 of FIG. 23, the ProSe function-A transmits, to an application server, a Map Request message (e.g., Map Request (ALUID_A, ALUID_B)) including the application layer user IDs of UE-A and UE-B in order to request the application server to provide EPC ProSe user ID of target user B. Here, the ProSe function-A stores the application layer user IDs (i.e., ALUID_A and ALUID _B) until a proximity alert procedure, which will be described with reference to FIG. 24, is performed, until a proximity request cancellation procedure, which will be described with reference to FIG. 25, is performed, or until the window in which the request is valid expires.

In step 3 of FIG. 23, the application server checks application-specific ProSe permission of user B so as to check whether user A is permitted to discover user B. In addition, the application server transmits, to ProSe Function-A, a Map Response message (e.g., Map Response (EPUID_B, PFID B)) indicating the EPC ProSe user ID (EPUID_B) of user B and the ProSe Function ID of a ProSe function-B. Here, the ProSe function-A stores EPUID_B and PFID_B until a proximity alert procedure, which will be described with reference to FIG. 24, is performed, until a proximity request cancellation procedure, which will be described with reference to FIG. 25, is performed, or until the window in which the request is valid expires.

In step 4 of FIG. 23, the ProSe function-A transmits, to the ProSe function-B, a Proximity Request message (e.g., Proximity Request (EPUID_B, EPUID_A, window, A's location, [WLLID_A]) including the EPC ProSe user ID, (time) window, the location of the discoverer, and the WLAN link layer ID (WLLID) of the discoverer. Here, the Proximity Request message can indicate a location update period, location update triggering or both thereof. Location information of A is current location information of UE-A, provided in step 1 of FIG. 23, and can be represented in GAD (Geographical Area Description). Refer to 3GPP TS 23.032 for detailed description and definition of GAD. However, the location information of A is not limited to the aforementioned definition and can be various types of location information described with reference to the aforementioned "1. ProSe discovery method in a mobile communication system such as 3GPP EPS (Evolved Packet System)" according to the present invention. Furthermore, the location information may include WLAN indication when UE-A requests WLAN direct discovery and communication in step 1 of FIG. 23.

In step 5 of FIG. 23, the ProSe function-B retrieves the record of user B on the basis of EPUID_B received in the previous step. In this case, the ProSe function-B may request the last known location of UE-B through an HSS (step 5a of FIG. 23).

The location information of UE-B may be various types of location information described with reference to the aforementioned "1. ProSe discovery method in a mobile communication system such as 3GPP EPS (Evolved Packet System)" according to the present invention. In addition, the location information of UE-B may be i) information on an MME which serves UE-B (MME identifier, MME name, MME node FQDN (Fully Qualified Domain Name) and/or MME number), ii) information on the country in which UE-B is located, iii) information on a PLMN in which UE-B is located/registered and/or iv) information on the continent in which UE-B is located.

Here, the information on the country, PLMN and continent in which UE-B is located may be directly acquired by the ProSe function-B from the HSS. Alternatively, the information may be directly or indirectly inferred using location information obtained from HSS. For example, when the location information of UE-B, obtained from the HSS, is the information on the PLMN in which UE-B is located/registered, the PLMN identifier is composed of MCC (Mobile Country Code) and MNC (Mobile Network Code) and thus the country information can be inferred. Alternatively, when the location information of UE-B, obtained from the HSS, is ECGI information of UE-B, the PLMN information or the country information can be inferred since the ECGI is composed of the PLMN identifier and ECI (E-UTRAN Cell Identity). Alternatively, when the location information of UE-B, obtained from the HSS, is coordinate information of UE-B, the country information or the continent information can be inferred using the coordinate information. Description of the location information of UE-B can be equally applied to location information obtained from UE-A. In addition, even if the type of location information about UE-A and the type of location information about UE-B are different from each other, the ProSe function can determine the distance/proximity between the two UEs using information included in the location information and/or a location information conversion database (DB)/table (e.g., DB/table for converting coordinate information into country information).

Upon determining that the users (i.e., user A and user B or UE-A and UE-B) are not in proximity (or will not be in proximity) within the requested time window on the basis of the last known location of UE-B, received through the HSS, the location of UE-A, provided by the ProSe function-A in step 4 of FIG. 23, and the time window, the ProSe function-B may reject the request by transmitting a Proximity Request Reject message along with an appropriate cause value for UE-A (steps 5b and 5c of FIG. 23). In this case, the remaining steps shown in Fig. 23 are skipped.

Various scenarios in which the ProSe function-B decides to stop the proximity request procedure and send a Proximity Request Reject message to UE-A can be considered as follows. However, the present invention is not limited thereto and the ProSe function can perform the decision on the basis of various determination criteria (e.g., discovery range class information received form UE-A in step 1 and the like)
- Scenario A) Case in which the window parameter received in step 1 of FIG. 23 is large or relatively large
   A-1) Case in which the distance between UE-A and UE-B is long or relatively long
   A-2) Case in which UE-A and UE-B are located on different continents
   A-3) Case in which UE-A and UE-B are located in different countries
   A-4) Case in which UE-A and UE-B are located in countries spaced apart from each other (or countries which do not share a border)
In one of the cases A-1) to A-4), the ProSe function-B decides to stop the proximity request procedure and send a Proximity Request Reject message to UE-A upon determining that the possibility that the two UEs are in proximity within the time window is low. Accordingly, it is possible to reduce signaling and UE power consumption caused by unnecessary detection of the locations of UE-A and UE-B for a long time.
- Scenario B) Case in which the window parameter received in step 1 of FIG. 23 is small or relatively small
   B-1) Case in which the distance between UE-A and UE-B is long or relatively long
   B-2) Case in which UE-A and UE-B are located on different continents
   B-3) Case in which UE-A and UE-B are located in different countries
   B-4) Case in which UE-A and UE-B are located in countries spaced apart from each other (or countries which do not share a border)
   B-5) Case in which UE-A and UE-B are served by different MMEs
   B-6) Case in which UE-A and UE-B are spaced apart from each other based on the window parameter although the two UEs are not spaced apart by a long distance
In one of cases B-1) to B-6), the ProSe function-B decides to stop the proximity request procedure and send the Proximity Request Reject message to UE-A upon determining that the possibility that the two UEs are in proximity within the time window is low. Accordingly, it is possible to reduce operation overhead (i.e., transmission of signals/messages to a plurality of network nodes and UEs in order to detect location information only several times) caused by unnecessary detection of the locations of UE-A and UE-B for providing a service of determining/notifying proximity for a short time.

In step 6 of FIG. 23, UE-B can receive a permission check request for proximity request (e.g., user-B may temporarily deactivate the ProSe function of UE-B) according to the ProSe profile of UE-B.

In step 7 of FIG. 23, the ProSe function-B requests SLP (SUPL Location Platform)-B to report location of UE-B, sends proximity request acknowledgement to the ProSe function-A (if the ProSe function-B acknowledges reception of the proximity request) and provides the current location of UE-B. Here, if UE-A requests EPC support for WLAN direct discovery and communication in step 1 of FIG. 23 and UE-B uses a permanent WLAN link layer ID, the WLAN link layer ID (i.e., WLLID_B) of UE-B may be included in the proximity request acknowledgement.

In step 8 of FIG. 23, the ProSe function-A requests SLP-A to report the location of UE-A. When the current location of UE-A is available and the location of UE-B is included in step 7 of FIG. 23, if it is determined that the users (i.e., user A and user B or UE-A and UE-B) are not in proximity (or will not be in proximity) within the requested time window, the ProSe function-A can decide to cancel the proximity request procedure. Otherwise, the ProSe function-A sends proximity request acknowledgement to UE-A.

Above description of step 5 is equally applicable to location information about UE-A and UE-B, operation of the ProSe function to determine the distance/proximity between the two UEs, and operation of the ProSe function to cancel the proximity request procedure on the basis of the time window parameter in step 8 of FIG. 23.

### 4-2. Proximity Alert

A description will be given of Proximity Alert according to the present invention.

In steps 1 to 3 of FIG. 24, the location of UE-B is reported to the ProSe function-B, and the ProSe function-B forwards the location of UE-B to the ProSe function-A.

In step 4 of FIG. 24, the ProSe function-A detects proximity of the two UEs on the basis of a requested discovery range class and notifies UE-A of the proximity by sending a Proximity Alert message to UE-A. For example, the Proximity Alert message can include ALUID and assistance information such as "Proximity Alert (ALUID_B, Assistance Information)". Here, ALUID is a user's application layer user ID, and ALUID_B indicates the application layer user ID of user B. The Proximity Alert message may additionally include assistance information for WLAN direct discovery and communication with UE-B. Furthermore, ProSe Function-A may cancel UE-A location reporting from SLA-P.

In step 5 of FIG. 24, the ProSe function-A can request the ProSe function-B to transmit a Proximity Alert message (in the form of Proximity Alert(ALUID_A, Assistance Information), for example) to UE-B. Here, ALUID_A indicates the application layer user ID of user A. The Proximity Alert message may additionally include assistance information for WLAN direct discovery and communication with UE-B. Furthermore, the ProSe function-B may cancel UE-B location reporting from SLA-B.

WLAN interfaces of the UEs need not be turned on before step 6 of FIG. 24.

In the aforementioned embodiment, the assistance information is set in order to rapidly process WLAN direct discovery and communication. Contents of assistance information conform to technology used for WLAN direct link. In addition, when UE-B supports only permanent WLAN link layer IDs (WLLIDs), contents of the assistance information other than WLLID_B can be dynamically generated by ProSe Function-A.

### 4-3. Proximity Request Cancellation

A description will be given of Proximity Request Cancellation according to the present invention.

In step 1 of FIG. 25, UE-A transmits a Cancel Proximity Request to the ProSe function-A. The Cancel Proximity Request may include EPUID, application ID and ALUID (in the form of Cancel Proximity Request (EPUID A, Application ID, ALUID_B), for example).

In step 2 of FIG. 25, the ProSe function-A transmits a Cancel Proximity Request message to the ProSe function-B on the basis of stored PFID B information. Here, the Cancel Proximity Request message may include EPUID and take the form of a Cancel Proximity Request (EPUID_B, EPUID A), for example.

In step 3 of FIG. 25, the ProSe function-A cancels UE-A location reporting from SLP-A.

In steps 4 and 5 of FIG. 25, the ProSe function-B cancels UE-B location reporting from SLP-B and sends proximity request cancellation acknowledgement to the ProSe function-A.

In step 6 of FIG. 25, the ProSe function-A sends proximity request cancellation acknowledgement to UE-A.

The aforementioned embodiments can be independently used or all or some of the embodiments can be combined and used.

In the aforementioned embodiments, when a UE or a network node requests location information of another UE, the request may include the ID of the UE and/or ID information about an application related to ProSe discovery/ProSe communication/ProSe operation. This can correspond to one or both of a UE which requests proximity check with respect to another UE and the other UE.

In addition, the ProSe server may be interpreted as a ProSe function in the present invention.

FIG. 26 illustrates configurations of a UE and a network node according to a preferred embodiment of the present invention.

Referring to FIG. 26, the UE 100 according to the present invention may include a transceiver module 110, a processor 120 and a memory 130. The transceiver module 110 may be configured to transmit signals, data and information to an external device and to receive signals, data and information from the external device. The UE 100 may be connected to the external device in a wired and/or wireless manner. The processor 120 may control operations of the UE 100 and may be configured to execute a function of processing information and the like to be transmitted/received between the UE 100 and the external device. The memory 130 may store processed information for a predetermined time and may be replaced by a component such as a buffer (not shown).

The UE 100 according to an embodiment of the present invention may be configured to participate in ProSe according to a result of ProSe enablement detection or ProSe UE discovery initiated by a network. The processor 120 of the UE 100 may be configured to transmit ProSe basic information to the network node 200 using the transceiver module 110. The processor 120 may be configured to receive information indicating whether ProSe is permitted from the network node 200 using the transceiver module 110. The processor 120 may be configured to process signaling for setting up a direct data path between the UE 100 and another UE. The processor 120 may be configured to perform direct communication with the other UE using the transceiver module 110. The processor 120 may be configured to transmit ProSe result information using the transceiver module 110.

Referring to FIG. 26, the network node 200 according to the present invention may include a transceiver module 210, a processor 220 and a memory 230. The transceiver module 210 may be configured to transmit signals, data and information to an external device and to receive signals, data and information from the external device. The network node 200 may be connected to the external device in a wired and/or wireless manner. The processor 220 may control operations of the network node 200 and may be configured to execute a function of processing information and the like to be transmitted/received between the network node 200 and the external device. The memory 230 may store processed information for a predetermined time and may be replaced by a component such as a buffer (not shown).

The network node 200 according to an embodiment of the present invention may be configured to assist ProSe between UEs. The processor 220 of the network node 200 may be configured to receive ProSe basic information from the UE 100 or another network node using the transceiver module 210. The processor 220 may be configured to transmit information indicating whether ProSe is permitted to the UE 100 using the transceiver module 210. The processor 220 may be configured to process signaling for supporting setup of a direct data path between the UE 100 and another UE, which is processed information for a predetermined time and may be replaced by a component such as a buffer (not shown).

The network node 200 according to an embodiment of the present invention may be configured to assist ProSe between UEs. The processor 220 of the network node 200 may be configured to receive ProSe basic information from the UE 100 or another network node using the transceiver module 210. The processor 220 may be configured to transmit information indicating whether ProSe is permitted to the UE 100 using the transceiver module 210. The processor 220 may be configured to process signaling for supporting setup of a direct data path between the UE 100 and another UE, which is performed by the UE 100. The processor 220 may be configured to receive ProSe result information from the UE 100 using the transceiver module 210.

The configuration of the UE 100 and the network node 200 may be implemented such that the aforementioned embodiments of the present invention are independently applied thereto or two or more embodiments are simultaneously applied thereto. Redundant description is omitted for clarity.

The embodiments of the present invention may be achieved by various means, for example, hardware, firmware, software, or a combination thereof.

In a hardware configuration, the methods according to the embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present invention may be implemented in the form of a module, a procedure, a function, etc. For example, software code may be stored in a memory unit and executed by a processor. The memory unit may be located at the interior or exterior of the processor and may transmit data to and receive data from the processor via various known means.

The detailed description of the preferred embodiments of the present invention is given to enable those skilled in the art to realize and implement the present invention. While the present invention has been described referring to the preferred embodiments of the present invention, those skilled in the art will appreciate that many modifications and changes can be made to the present invention without departing from the essential characteristics of the present invention. For example, the structures of the above-described embodiments of the present invention can be used in combination. The above embodiments are therefore to be construed in all aspects as illustrative and not restrictive. Therefore, the present invention is not intended to limit the embodiments disclosed herein but to give a broadest range matching the principles and new features disclosed herein.

Those skilled in the art will appreciate that the present invention may be carried out in other specific ways than those set forth herein without departing from the essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein.

### [Industrial Applicability]

The aforementioned embodiments of the present invention are applicable to various mobile communication systems.

## Claims

1. A method for a first terminal to perform a proximity service, ProSe, in a wireless communication system, comprising:
transmitting, by the first terminal, a ProSe discovery request to a ProSe function; and
receiving, by the first terminal, a ProSe discovery response from the ProSe function,
wherein the ProSe discovery response is a proximity request reject message, when the ProSe function determines to stop a ProSe request procedure upon determining that the first terminal and a second terminal are unlikely to enter proximity within a time window for ProSe discovery.

2. The method according to claim 1, wherein the ProSe request procedure is determined on the basis of location information received through a home subscriber server (HSS).

3. The method according to claim 2, wherein the location information is location information prestored in the HSS or location information transmitted by a mobility management entity (MME).

4. The method according to claim 2, wherein the location information is location information of at least one of the first terminal and the second terminal.

5. The method according to claim 1, wherein the ProSe function determines to stop the ProSe request procedure when the first terminal and the second terminal are spaced apart from each other by a predetermined distance or more.

6. The method according to claim 1, wherein the ProSe discovery response further includes at least one of information about whether the first terminal and the second terminal are in proximity, information about whether the first terminal and the second terminal will be in proximity and information on the distance between the first terminal and the second terminal.

7. The method according to claim 1, wherein the time window for ProSe discovery is included in the ProSe discovery request and transmitted.

8. A method for a proximity service, ProSe, function to support a ProSe in a wireless communication system, comprising:
receiving, by the ProSe function, a ProSe discovery request from a first terminal;
determining, by the ProSe function, whether the first terminal and a second terminal enter ProSe or not, within a time window for ProSe discovery; and
transmitting, by the ProSe function, a ProSe discovery response to the ProSe function,
wherein the ProSe discovery response is a proximity request reject message, when the ProSe function determines to stop a ProSe request procedure upon determining that the first terminal and a second terminal are unlikely to enter proximity within the time window for ProSe discovery.

9. A first terminal performing a proximity service, ProSe, in a wireless communication system, comprising:
a radio frequency unit; and
a processor,
wherein the processor is configured to control the first terminal to transmit a ProSe discovery request to a ProSe function and to receive a ProSe discovery response from the ProSe function,
wherein the ProSe discovery response is a proximity request reject message, when the ProSe function determines to stop a ProSe request procedure upon determining that the first terminal and a second terminal are unlikely to enter proximity within a time window for ProSe discovery.

10. A proximity service, ProSe, function supporting a ProSe in a wireless communication system, comprising:
a radio frequency unit; and
a processor,
wherein the processor is configured:
to receive a ProSe discovery request from a first terminal,
to determine whether the first terminal and a second terminal enter ProSe or not, within a time window for ProSe discovery, and
to transmit a ProSe discovery response to the ProSe function,
wherein the ProSe discovery response is a proximity request reject message, when the ProSe function determines to stop a ProSe request procedure upon determining that the first terminal and a second terminal are unlikely to enter proximity within the time window for ProSe discovery.

## Patentansprüche

1. Verfahren für ein erstes Endgerät zum Ausführen eines Proximity-Dienstes, ProSe, in einem drahtlosen Kommunikationssystem, umfassend:
Senden, durch das erste Endgerät, einer ProSe-Entdeckungsanforderung an eine ProSe-Funktion; und
Empfangen, durch das erste Endgerät, einer ProSe-Entdeckungsantwort von der ProSe-Funktion,
wobei die ProSe-Entdeckungsantwort eine Proximity-Anforderungs-Ablehnungsnachricht ist, wenn die ProSe-Funktion das Beenden eines ProSe-Anforderungsprozesses bestimmt, nachdem festgestellt wurde, dass es unwahrscheinlich ist, dass sich das erste Endgerät und ein zweites Endgerät innerhalb eines Zeitfensters für die ProSe-Entdeckung annähern.

2. Verfahren nach Anspruch 1, wobei der ProSe-Anforderungsprozess auf der Grundlage von Standortinformationen bestimmt wird, die über einen Heimabonnentenserver (HSS) empfangen werden.

3. Verfahren nach Anspruch 2, wobei die Standortinformationen entweder in dem HSS vorgespeicherte Standortinformationen oder von einer Mobilitätsmanagement-Entität (MME) gesendete Standortinformationen sind.

4. Verfahren nach Anspruch 2, wobei die Standortinformationen mindestens Standortinformationen des ersten Endgeräts oder Standortinformationen des zweiten Endgeräts sind.

5. Verfahren nach Anspruch 1, wobei die ProSe-Funktion das Beenden des ProSe-Anforderungsprozesses bestimmt, wenn das erste Endgerät und das zweite Endgerät voneinander um einen vorgegebenen Abstand oder mehr beabstandet sind.

6. Verfahren nach Anspruch 1, wobei die ProSe-Entdeckungsantwort ferner mindestens eine Information darüber, ob sich das erste Endgerät in der Nähe des zweiten Endgeräts befindet, oder eine Information darüber, ob sich das erste Endgerät in der Nähe des zweiten Endgeräts befinden wird, oder eine Information über den Abstand zwischen dem ersten Endgerät und dem zweiten Endgerät enthält.

7. Verfahren nach Anspruch 1, wobei das Zeitfenster für die ProSe-Entdeckung in der ProSe-Entdeckungsanforderung enthalten ist und gesendet wird.

8. Verfahren für eine Proximity-Dienst-Funktion, ProSe-Funktion, zur Unterstützung eines ProSe in einem drahtlosen Kommunikationssystem, umfassend:
Empfangen, durch die ProSe-Funktion, einer ProSe-Entdeckungsanforderung von einem ersten Endgerät;
Feststellen, durch die ProSe-Funktion, ob das erste Endgerät und ein zweites Endgerät innerhalb eines Zeitfensters für die ProSe-Entdeckung in ProSe eintreten oder nicht; und
Senden, durch die ProSe-Funktion, einer ProSe-Entdeckungsantwort an die ProSe-Funktion,
wobei die ProSe-Entdeckungsantwort eine Proximity-Anforderungs-Ablehnungsnachricht ist, wenn die ProSe-Funktion das Beenden eines ProSe-Anforderungsprozesses bestimmt, nachdem sie festgestellt hat, dass sich das erste Endgerät und ein zweites Endgerät innerhalb des Zeitfensters für die ProSe-Entdeckung wohl nicht annähern werden.

9. Erstes Endgerät, das einen Proximity-Dienst, ProSe, in einem drahtlosen Kommunikationssystem ausführt, umfassend:
eine Funkfrequenz-Einheit; und
einen Prozessor,
wobei der Prozessor dazu konfiguriert ist, das erste Endgerät zum Senden einer ProSe-Entdeckungsanforderung an eine ProSe-Funktion und zum Empfangen einer ProSe-Entdeckungsantwort von der ProSe-Funktion zu steuern,
wobei die ProSe-Entdeckungsantwort eine Proximity-Anforderungs-Ablehnungsnachricht ist, wenn die ProSe-Funktion das Beenden eines ProSe-Anforderungsprozesses bestimmt, nachdem festgestellt wurde, dass es unwahrscheinlich ist, dass sich das erste Endgerät und ein zweites Endgerät innerhalb eines Zeitfensters für die ProSe-Entdeckung annähern.

10. Proximity-Dienst-Funktion, ProSe-Funktion, die einen ProSe in einem drahtlosen Kommunikationssystem unterstützt, umfassend:
eine Funkfrequenz-Einheit; und
einen Prozessor,
wobei der Prozessor dazu konfiguriert ist:
eine ProSe-Entdeckungsanforderung von einem ersten Endgerät zu empfangen, festzustellen, ob das erste Endgerät und ein zweites Endgerät innerhalb eines Zeitfensters für die ProSe-Entdeckung in ProSe eintreten oder nicht, und
eine ProSe-Entdeckungsantwort an die ProSe-Funktion zu senden,
wobei die ProSe-Entdeckungsantwort eine Proximity-Anforderungs-Ablehnungsnachricht ist, wenn die ProSe-Funktion das Beenden eines ProSe-Anforderungsprozesses bestimmt, nachdem sie festgestellt hat, dass sich das erste Endgerät und ein zweites Endgerät innerhalb des Zeitfensters für die ProSe-Entdeckung wohl nicht annähern werden.

## Revendications

1. Procédé pour un premier terminal pour effectuer un service de proximité, ProSe, dans un système de communication sans fil, comprenant :
la transmission, par le premier terminal, d'une demande de découverte de ProSe à une fonction de ProSe ; et
la réception, par le premier terminal, d'une réponse de découverte de ProSe à partir de la fonction de ProSe,
dans lequel la réponse de découverte de ProSe est un message de rejet de demande de proximité, quand la fonction de ProSe détermine l'arrêt d'une procédure de demande de ProSe lors de la détermination du fait qu'il est peu probable que le premier terminal et un deuxième terminal entrent en proximité dans une fenêtre de temps pour une découverte de ProSe.

2. Procédé selon la revendication 1, dans lequel la procédure de demande de ProSe est déterminée sur la base d'informations de localisation reçues par le biais d'un serveur d'abonné résidentiel (HSS).

3. Procédé selon la revendication 2, dans lequel les informations de localisation sont des informations de localisation pré-stockées dans le HSS ou des informations de localisation transmises par une entité de gestion de mobilité (MME).

4. Procédé selon la revendication 2, dans lequel les informations de localisation sont des informations de localisation d'au moins un parmi le premier terminal et le deuxième terminal.

5. Procédé selon la revendication 1, dans lequel la fonction de ProSe détermine l'arrêt d'une procédure de demande de ProSe quand le premier terminal et le deuxième terminal sont espacés l'un de l'autre d'au moins une distance prédéterminée.

6. Procédé selon la revendication 1, dans lequel la réponse de découverte de ProSe comprend au moins une parmi des informations indiquant si le premier terminal et le deuxième terminal sont à proximité, des informations indiquant si le premier terminal et le deuxième terminal seront à proximité et des informations sur la distance entre le premier terminal et le deuxième terminal.

7. Procédé selon la revendication 1, dans lequel la fenêtre de temps pour une découverte de ProSe est incluse dans la demande de découverte de ProSe et transmise.

8. Procédé pour une fonction de service de proximité, ProSe, pour supporter un ProSe dans un système de communication sans fil, comprenant :
la réception, par la fonction de ProSe, d'une demande de découverte de ProSe à partir d'un premier terminal ;
le fait de déterminer, par la fonction de ProSe, si le premier terminal et un deuxième terminal passent ou non en ProSe, dans une fenêtre de temps pour une découverte de ProSe ; et
la transmission, par la fonction de ProSe, d'une réponse de découverte de ProSe à la fonction de ProSe,
dans lequel la réponse de découverte de ProSe est un message de rejet de demande de proximité, quand la fonction de ProSe détermine l'arrêt d'une procédure de demande de ProSe lors de la détermination qu'il est peu probable que le premier terminal et un deuxième terminal entrent en proximité dans la fenêtre de temps pour une découverte de ProSe.

9. Premier terminal effectuant un service de proximité, ProSe, dans un système de communication sans fil, comprenant :
une unité à radiofréquence ; et
un processeur,
dans lequel le processeur est configuré pour commander le premier terminal pour transmettre une demande de découverte de ProSe à une fonction de ProSe et pour recevoir une réponse de découverte de ProSe à partir de la fonction de ProSe,
dans lequel la réponse de découverte de ProSe est un message de rejet de demande de proximité, quand la fonction de ProSe détermine l'arrêt d'une procédure de demande de ProSe lors de la détermination du fait qu'il est peu probable que le premier terminal et un deuxième terminal entrent en proximité dans une fenêtre de temps pour une découverte de ProSe.

10. Fonction de service de proximité, ProSe, supportant un ProSe dans un système de communication sans fil, comprenant :
une unité à radiofréquence ; et
un processeur,
dans lequel le processeur est configuré pour :
recevoir une demande de découverte de ProSe à partir d'un premier terminal ;
déterminer si le premier terminal et un deuxième terminal passent ou non en ProSe,
dans une fenêtre de temps pour une découverte de ProSe, et
transmettre une réponse de découverte de ProSe à la fonction de ProSe,
dans lequel la réponse de découverte de ProSe est un message de rejet de demande de proximité, quand la fonction de ProSe détermine l'arrêt d'une procédure de demande de ProSe lors de la détermination du fait qu'il est peu probable que le premier terminal et un deuxième terminal entrent en proximité dans la fenêtre de temps pour une découverte de ProSe.
